(19) Europäisches Patentamt

European Patent Office

Office européen des brevets

(11) **EP 0 526 504 B1**

(12) **EUROPEAN PATENT SPECIFICATION**

(45) Date of publication and mention
of the grant of the patent:
**15.01.1997 Bulletin 1997/03**

(21) Application number: **91908022.6**

(22) Date of filing: **26.04.1991**

(51) Int Cl.$^6$: **G06F 15/80**

(86) International application number:
**PCT/CA91/00139**

(87) International publication number:
**WO 91/16686 (31.10.1991 Gazette 1991/25)**

(54) **ARTIFICIAL NEURAL DEVICE**

KÜNSTLICHE NEURONALE ANLAGE

DISPOSITIF NEURAL ARTIFICIEL

(84) Designated Contracting States:
**AT BE CH DE DK ES FR GB GR IT LI LU NL SE**

(30) Priority: **26.04.1990 CA 257548**

(43) Date of publication of application:
**10.02.1993 Bulletin 1993/06**

(73) Proprietor: **SUTHERLAND, John**
**Oakville, Ontario L6H 5V4 (CA)**

(72) Inventor: **SUTHERLAND, John**
**Oakville, Ontario L6H 5V4 (CA)**

(74) Representative: **Butler, Michael John**
**Frank B. Dehn & Co.,**
**European Patent Attorneys,**
**179 Queen Victoria Street**
**London EC4V 4EL (GB)**

(56) References cited:
**EP-A- 0 357 212**

* **Electronics Letters, vol. 25, no. 10, 11 May 1989,**
**(Stevenage, Herts, GB), R.AL.Alawi et al.:**
**"Functionality of multilayer boolean neural**
**networks" pages657-659**

Printed by Jouve, 75001 PARIS (FR)

Description

FIELD OF THE INVENTION

The present invention relates to adaptive information processing systems, and in particular to associative memories utilizing confidence-mediated associations, and especially neural network systems comprising an auto-organizational apparatus and processes for dynamically mapping any input onto a semantically congruous and contemporaneously-valid, learned response.

BACKGROUND OF THE INVENTION

Broadly speaking, an associative memory system is one in which stimulus/response pairs of information are stored in such a way that the introduction of a stimulus pattern results in the recall of a memory associated response. Memory systems of this type have a very broad range of potential applications including, for example, logical operations management, pattern recognition, and image interpolation.

Traditional associative processes, such as those that are often used in artificial intelligence applications, are dependent on explicitly predefined rule sets that are externally impressed on an associative memory. Expert systems are examples of such traditional architectures. Such expert systems are rules-based paradigms that are managed by an inferential engine. These follow an orthodox von Neumann approach by providing a deterministic software/hardware relationship that follows a series of pre-declared relationships and sequential instructions formatted as predetermined sets of IF - THEN statements. They are inherently limited to those associations that dynamic responsiveness to changing environments or, more generally, any ability to develop a set of input-appropriate responses in the absence of an impressed set of applicable rules specifically intended to deal with a changed or changing or otherwise unknown environment. Moreover, as with any purely heuristic programming, the more complex the application, the greater number of rules that are required, and the proportionately longer the processing time required to deal with those rules. There is general acceptance that these short comings limit the practical usefulness of pre-defined-rules-based approaches to associative memory systems.

Neural networks, on the other hand, generate their own rules of association through a learning process that draws on the networks exposure to either supervised or unsupervised input data samples drawn from a statistical universe. These systems have, to various degrees, some ability to make generalizations about that universe as a whole, based on the input sampling.

Neural networks are associative memory systems comprising strategic organizations, (architectures), of processing elements. Individually, these elements are each analogous to an individual neuron in a biological system. Individual processing elements have a plurality of inputs, which are functionally analogous to the dendritic processes of a neuron cell. As such, these elements are "weight, based on the current state of the systems knowledge, to the respective inputs. The associative "weights" form the data that is stored in the associative memory of the system. Digital computer implementations of neural networks typically employ numerical methodologies to realize the desired associative recall of stimulus-appropriate responses through weighted summation of the inputs in a digital computing environment. These virtual networks take advantage of the current commercial availability of von Neumann machines, which while inherently deterministic, are nevertheless capable of being used to condition input signals in a manner which simulates the advantages attached to stochastic architectures in neural network hardware implementations.

An early forerunner to modern neural networks, howsoever they may now be implemented, was an actual hardware device that came to be known as the Perceptron. This was a pattern classification system that could identify both abstract and geometric patterns. A grid of photocells were arranged to receive a primary optical stimulus. These photocells were in turn randomly connected to a plurality of associator elements which perform the functions associated with the front end of what is now recognized as the inputs (or notional dendritic processes) of a neural network processing element. When the cumulative electrical inputs from the cells to the associators units exceeded a certain threshold, the associator units triggered response implementation, proved to have serious inherent limitations. These are concerned with the systems practical inability to learn certain known functions, in particular the logical "XOR" function of Boolean algebra. In order to be able to learn this type of parity function, the Perceptron paradigm would require either an architecture of multiple interconnected layers of weighted processing elements, or alternatively a system having 2 to the N hidden processing elements. The Perceptron could not properly adjust more than one layer of modifiable weights, thus precluding the first alternative. The alternative of using 2 to the N hidden processing units presents three fundamental problems: There must be 2 to the N processing units in the systems for all possible functions which the system might ever have to learn, (which amounts to system design by crystal ball gazing); The number of processing elements required in any such system increases exponentially with the number of required inputs to solve the functions which can ben prescribed, and quickly runs into the billions; There is empirical evidence that with large numbers of hidden processing elements, the system loses the ability to formulate reliable generalizations. With these inherent limitations, it was clear that such networks could not emulate or even approximate the functions or efficiencies of the human brain.

The advent of back propagation paradigms for establishing a weighted associative memory for evaluating new stimuli as it is presented to the inputs of the processing elements, represented a major step towards overcoming some of the problems associated with the Perceptron paradigm. For example, back propagation incorporates an error handling mechanism that overcomes at least some of the "linear separability classification" limitations associated with the Perceptron. Back propagation establishes a processing assumption that all processing elements in any given layer of a net work architecture introduce errors in the assignment of a response that issued from that layer, to any stimulus received from the preceding layer. The responsibility for that error is then quantified and distributed throughout the weightings of each of the processing element inputs in the previous layer, down to and including the inputs to the network. This learning process is inherently slow, in that several iterations of the back propagation are required before the desired convergence of error terms (ie "dilution" of information error) is achiever.

Current state-of-the-art neural networks can, in general, all be classified as gradient descent models, in which the network data is stored as "weights" in the manner described above.

In operation these networks work by having weighted, scalar input values summed by the processing elements, then normalized in order to maintain some degree of stability in the distribution of generated output response values. Typically, normalization involves a thresholding or scaling of the summation product. Variations on the sigmoid function are usually used for this purpose.

A number of examples of these subsequent developments in neural network technology have pursued models predicated on natural biological systems. One of the better known was the development of so-called "Hopfield Nets" in the early 1980's Hopfields model was amongst the first to clearly represent neuron operation as a specific thresholding operation and illustrated memory as information stored in the interconnections between processing elements, which where cast as a minimum energy function.

One example of a gradient descent network is the matrix algebra based associative memory model that is described in "neural Networks and Physical Systems with Emergent Collective Computational Abilities", J.J. Hopfield, Proc. Narl. Academy of Science, U.S.A. 1982, Vol. 79, pp 2554 - 2558. This model utilizes feedback and non-linear thresholding to force the output pattern to be the stored pattern which most closely matches the input pattern. A major drawback of this model is the large storage and computational effort that is inherently required for the manipulation of an association matrix memory that is used in the model. In essence this represented a special case of the more general features of the Cohen-Grossberg networks, in which the processing elements took on any real activation value resulting from a sigmoid output threshold function alternating between the minimum and maximum values to define that activation value of the processing element. The response to any external stimulus to one of these networks was shown to converge to an equilibrium based on an energy of Lyapunov function.

With the ongoing advancement of neural network technology, networks have been further enhanced by various multi-layer architectures. Weighting of processing element inputs through normalization and competition have continued to improve some of the drawbacks that nevertheless continue to be associated with neural networks.

By way of example, and in addition to all the other short-comings set out above, all of these networks continue to suffer from an inherent form of input information truncation, that is in part a legacy of von Neumann architectures. A with any system, information loss results in an increase in error rates, and error remediation in turn requires that compensatory processing strategies be adopted. That approach in its own turn results in increased processing (both learning and response) time by depending on large numbers of computational and sampling iterations (in the hope of "diluting" out the errors by increasing the sample size), with correspondingly increased memory storage space requirements. Moreover such remediation can at best only diminish the error that is intrinsically introduced by a gradient response regimen. It cannot eradicate it. Accordingly, while normalization in gradient descent networks is essential, it also results in collateral degradation of the informational value of input data. Note too that the making of generalizations based on the erroneous precepts that can follow from information loss, limits the reliable application of such networks to linearly non-separable stimuli.

A good example of this kind of remediation problem is associated with a connectionist neural network architecture sometimes referred to as a Boltzman machine, that utilizes a back propagation paradigm. This type of machine is intended to deal with what one author has labelled "computational gangrene". This problem is implicit in any deterministic approach that is taken to problem solving, in that a mistaken decision in a deterministic path may foreclose on any possibility of downstream remediation, thereby forever cutting-off the correct interpretative pathway that leads to the problems correct, or at least optimal solution. While neural networks in general, go some distance to ameliorating this problem, it continues to exist.

Boltzman machines are equilibrium-seeking connectionist machines in which processing elements exhibit binary (on-off) behaviour in response to input stimuli. The response of such a processing element in any given circumstance is determined by both the weighted signals passed along by neighbouring processing elements, and also by a probabilistic signal, thus rendering the response stochastic. The behaviour of such a machine can be described in terms of Boltzman's thermodynamic equations, which allow that even though the response states of individual processing units cannot be predicted, the overall equilibrium response of the network is resolvable. In the meantime, the internal "randomness" of individual processing elements response states that contributes to the Boltzman machines overall "directed of non-random" response can help the network to avoid getting stuck in "locally attractive" but "globally suboptimal" solutions, and thereby side steps some of the risk of computational gangrene that arises in strictly deterministic von Neumann machines. It has been observed, however, that while Boltzman machines have a greater probability of reaching better solutions than are possible with von Neumann architectures, the existence of "noise" in real life problems poses a problem. Theoretically, a Boltzman machine will of necessity arrive at the optimal solution to any of a limited number of specific classification problems, provided that it is given an unlimited amount of time for that purpose. The exigency of real time problems rarely permits protracted problem solving exercises of any significant duration, however, and the inability of Boltzman machines to dependably resolve problems within a reasonable time, inherently limits their usefulness.

Accordingly, there remains a need in the art of alternatives to current neural network systems.

EP-A-0 357 212 discloses a method of storing stimulus-response patterns by coding them as phase angles corresponding to vector orientations on a two-dimensional complex plane.

Advantages and operational characteristics realized minimally by at least the preferred embodiments of the invention described herein are outlined below:

i) The method forms a non-connectivist model in which the ability to superimpose multiple sets of independent stimulus-response patters and highly complex associations exist within the individual neuron cell. In other words, multiple stimulus-response patterns may be superimposed upon the same storage medium thus creating information storage densities far greater than current and conventional data storage devices or methods permit.

ii) The holographic neural process facilities decoding a response associated with a given stimulus when the neural device is stimulated by said stimulus. The advantage is realized in that both the encoding (learning) and decoding (expression) functions are performed in one non-iterative transformation. Secondly, resulting from the method by which information is superimposed upon the same storage medium within the neural device, a decoding transformation as performed upon any one neural element, transforms stimulus input simultaneously through all stimulus-response associations stored in an abstract form within said neural element. The encoding/decoding transformation properties operate in a completely deterministic manner as opposed to prior art gradient descent methods which are inherently non-deterministic.

iii) The holographic neural device is general in form and may be applied in a generic fashion to accommodate encoding and decoding of substantially any form of stimulus-response pattern or association. For example the stimulus-response patterns may represent any form of sensory modality, physical parameter, abstract representation, or differential/integral function of the above. The holographic neural device performs encoding in a generic fashion by exposing said neural device to multiple sets of stimulus-response patterns. Similarly decoding is facilitated in a generic fashion by exposing the holographic neural device to an input pattern similar to a stimulus associated with a prior encoded stimulus-response pattern, whereby said neural device responds in generating the associated response.

iv) The holographic neural process may be described to operate in a state space mapping mode (conceptually similar to state space representations as defined within conventional control theory). In specific, a multivalued input set or stimulus input is mapped to a single valued response output state, however within a Riemann or phase domain. As stated earlier, this state space mapping for each stimulus-response association is learned in one transformation. Characteristics of the Riemann manifold within which this mapping occurs intrinsically display a high degree of generalization within the mapping process. In other words, learned stimulus patterns which have been highly distorted or of which are only partially exposed to the neural eluent will intrinsically associate to the learned response with low error.

v) As resulting from the properties cited in points i) and iv) above, the holographic neural eluent has an extensive and powerful capability for association. Again these associations are derived from stimulus-response patterns potentially representing various forms of external field intensities which may in turn be derived from any form of sensory modality or differential/integral function thereof. One may draw the comparison that the neural element operates as a content addressable memory. Said content addressable system operates in a manner that the memory of a learned response is expressed by addressing the neuron with an associated stimulus input. Within a multilevel multineuronal system this capability will permit associations to propagate along the network or iterate within a feedback loop. Associations may propagate along a neural pathway bifurcating and recombining in any primitive or highly complex synaptic arrangement dependent upon the associations encoded and the neuronal interconnection configuration.

vi) The holographic neural process directly follows the non-disturbance rule. That is, prior learned stimulus-response associations are minimally influenced by subsequent learning or encoding. This property is distinct from the majority of gradient descent models which require the entire training set to be present during a learning or encoding operation. The non-disturbance property of the holographic process permits learning and expression of stimulus-response associations to be alternately interspersed, or to operate in any sequential order or priority.

vii) On expression, said holographic neural process generates a response vector possessing both phase angle relating the learned information value within an analog range, and magnitude. The magnitude is statistically proportional to the degree of recognition for the stimulus pattern. This magnitude feature provides a very important component in the generated response providing a measure of confidence in recognition. A non-linear operation may be performed on the generated response magnitude, permitting the neural element to function as a recognition discriminator about a defined threshold. This operational feature significantly enhances the capability of the neural system in that the neural element functions as a sophisticated analog switch, turning the output response on (generating unity or large magnitude) when the associated stimulus expresses a high degree of recognition. Similarly, the generated response for the neural element switches off (generates 0 output magnitude) when exposed to an unlearned or unrecognized stimulus. Within a multilayer or feedback network, this discrimination capability will permit only learned stimulus mappings to generate responses which in turn propagate through subsequent layers within the neural system. The ability to inherently perform switching logic on recognized stimulus patterns permits the neuron to operate concurrently within both an analog (phase information) and logical (high/low magnitude) framework.

viii) Said stimulus-response patterns are not limited to binary values and are not limited to any number base system representation on conversion scale (i.e. logarithmic). Said holographic neural device permits encoding and decoding of said stimulus-response patterns whose elements are continuously variable within any defined range of analog values.

ix) The holographic neural device may be modified to accommodate encoding and decoding of a large number of sets of said stimulus-response patterns as associated with any given size of stimulus field. The size of said stimulus field is defined as the number of distinct elements (elements of information) within said the stimulus field. The increase in storage capacity for stimulus-response associations within the holographic neural device may be performed by generation of higher order statistics using defined preprocessing means on stimulus input data.

x) Said response output referred to in subparagraph vii) above contains a deterministic "error" of variable magnitude. This deterministic "error" characterizes a fuzziness factor or contribution within the generated response output. The probabilistic variance of said deterministic "error" within the response output is proportional to the number of stimulus-response patterns encoded into the holographic neural device. Said deterministic "error" within the response output is sufficiently small in magnitude to permit very large sets of the stimulus-response associations to be encoded or superimposed onto said holographic neural device.

xi) Efficiency of the holographic neural process is represented by the ratio of number of data storage eluants within said holographic neural device to the amount of information in the form of stimulus-response associations that may be encoded in abstract mathematical form. The characteristics of said device are such that the efficiency of stimulus-response pattern storage is proportional to the number of discrete information elements within the stimulus field. That is, the number of independent stimulus-response associations which may be encoded is directly proportioned to the number of discrete elements within the stimulus field.

xii) The process has the capability to directly establish a dominance profile in time for learned stimulus-response associations, thus exhibiting a memory profile extending over any range from immediate short term to permanent memory.

characteristics of said holographic neural process or device are highly isomorphic to both the structural and operational characteristics of the neurobiological system. Information is represented in abstract form by a two dimensional or complex vector and may be translated directly to a pulse modulated waveform possessing frequency and magnitude. This waveform is generally characteristic of the electrochemical impulses believed to transmit information between neuron cells. Said holographic neural device stores information in a fashion analogous to the established Hebb hypothesis. The Hebb hypothesis defines the generally accepted information storage mechanism of the biological neuron. The processing elements within the holographic neural device translate the input stimulus in a sigmoidal relationship as do certain classes of biological neurons (retinal neurons). Said device processes information in the form of stimulus-response relationships and encodes or learns the stimulus-response relationships by exposure to these associations as does the neurobiological system. Said neural device issues immediate output response (single transformation non-iterative mechanism) upon stimulation by input stimulus as does the neurobiological system.

Said neural device inherently exhibits the characteristics of fuzzy memory or fuzzy logic. Said device has the capacity to store, recognize, and issue an encoded or learned response to vast sets of stimulus- response associations as does the neurobiological system. Said device incorporates the capability for a memory profile as does the neurological system.

From a first aspect the invention provides an associative memory apparatus comprising data signal storage and signal processing means:

for operably receiving and transforming signals representing scalar stimulus-response pattern data values comprising respective, mutually-associated sets of stimulus and response input elements, and storing a transformed signal representing same as a corresponding correlation set of Riemann manifold values of an at least one experienced stimulus-response pattern; and,

for operably producing and outputting experientially-associated response data signals generated responsive to transformation of subsequently input stimulus data signals comprising stimulus representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field to include at least some stimulus input elements having an order greater than 1, of a set consisting of unique combinatorial complex products of said input stimulus elements, said order corresponding to the number of stimulus input elements in said products. From a second aspect the invention provides an apparatus including interconnecting communication means in combination with a plurality of thereby interconnected artificial neural devices, and comprising data storage and processing means:

for operably receiving and transforming signals representing scalar stimulus-response pattern' data values in at least one of said devices, said data values comprising respective, mutually-associated sets of stimulus and response input elements, and storing a transformed signal representing same as a corresponding correlation set of Riemann manifold values of an at least one experienced stimulus-response pattern; and,

for operably producing and outputting experientially-associated response data signals, generated responsive to transformation of subsequently input stimulus data signals comprising stimulus representative complex values, through said stored Riemann manifold values signals;

characterised in that means is provided for increasing the numer of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order of greater than 1, of a set consisting of unique combinatorial complex products of said input stimulus elements said order corresponding to the number of stimulus input elements in said products;

and wherein said data processing and storage means is operable to sum output response data, element by element, from said plurality of devices, as a vector sum, to produce a correlation set having elements corresponding to uniquely representative values of all of the stimulus and associated response elements of each of said plurality of devices.

From a third aspect the invention provides a neural network comprising interconnecting communication means in combination with a plurality of thereby interconnected artificial neural devices and comprising data storage and processing means:

for operably receiving and transforming signals representing scalar stimulus-response pattern data values in at least one of said devices, said data comprising respective, mutually-associated sets of stimulus and response input elements, and storing a transformed signal representing same as a corresponding correlation set of Riemann manifold values of an at least one experienced stimulus-response pattern; and,

for operably producing and outputting experientially-associated response data signals, generated responsive to transformation of subsequently input stimulus data signals comprising stimulus representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order greater than 1, of a set consisting of unique combinatorial complex products of said input stimulus elements, said order corresponding to the number of stimulus input elements in said products;

and wherein said network is arranged as a layered network of said plurality of devices.

From a fourth aspect the invention provides a pattern recognition apparatus for generating a response signal in response to a stimulus signal, said apparatus comprising:

(a) transducer means for producing a scalar stimulus signal;

(b) data storage and processing means:

for operably receiving and processing said stimulus signal and combining therewith a scalar response signal and transforming said signals as stimulus-response pattern data values comprising respective, mutually-associated sets of stimulus and response input elements,;

for operably storing a transformed signal representing said stimulus-response pattern data values as a corresponding correlation set of Riemann manifold values of an at least one experienced stimulus-response pattern; and,

for operably producing and outputting experientially-associated response data signals, generated responsive to transformation of subsequently input stimulus data signals comprising representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order greater than one, of a set consisting of unique combinatorial complex products of said input stimulus elements, said order corresponding to the number of stimulus input elements in said products.

From a fifth aspect the invention provides a method for responsively identifying a stimulus pattern, comprising the steps of:

(a) producing a scalar stimulus signal;

(b) directing said stimulus signal to data storage and processing means, and therein:

receiving and processing said stimulus signal and combining therewith a response signal and transforming said signals as stimulus-response pattern data values comprising respective, mutually-associated sets of stimulus and response input elements,;

and storing a transformed signal representing said stimulus-response pattern data values as a corresponding correlation set of Riemann manifold values of an at least one experienced stimulus-response pattern; and,

producing and outputting experientially-associated response data signals generated responsive to transformation of subsequently input stimulus data signals comprising stimulus representative complex values, through said stored Riemann manifold values signals;

characterised in that the number of sets of stimulus-response pattern data for said at least one experienced pattern is increased to correspondingly increase information content of said correlation set in a resulting stored Riemann manifold values signal, through expansion of said stimulus-response pattern data to thereby increase the number of input elements within the stimulus field, to include at least some stimulus input element having an order of greater than 1, of a set consisting of unique combinatorial complex products of said input stimulus elements, said order corresponding to the number of stimulus input elements in said products.

In certain embodiments,this invention relates to an artificial neural device comprising; a unit for storing and processing data in an abstract form representative of stimulus-response patterns; a device for encoding data onto said data storage and processing unit by translating the elements of associated stimulus and response patterns into complex numbers or vectors with the associated information represented by a vector phase angle or vector orientation and a magnitude component, and generating a matrix whose elements are complex numbers or vectors encoding said multiple stimulus-response patterns, whereby each of said stimulus-response pattern is superimposed onto said storage unit; said unit decoding a response associated with an encoded stimulus-response pattern when said matrix encoded in said data storage unit is stimulated by said stimulus signal.

Certain embodiments of the invention many also provide a method of enhancing the storage and computing capacity of artificial neural devices comprising the steps of: encoding data by translating sets of associated stimulus and response signals into complex numbers represented by a vector phase angle and magnitude; generating a matrix representing stimulus response patterns for each set of associated stimulus response signals whereby each said stimulus response is superimposed onto data storage and processing unit; decoding a response signal associated with a stimulus signal by applying said stimulus signal to said stimulus response patterns encoded in said data storage unit so as to generate said response signal associated with said stimulus signal.

Further embodiments of this invention relate to a pattern recognition device for generating a response signal in response to a stimulus signal comprising: a device for reading or inputting a stimulus signal; a device for translating elements of said stimulus signal into complex numbers or vectors with the associated information represented by vector phase angle or vector orientation and a magnitude component; a unit for storing said translated stimulus signals; a device for translating elements of said response signal into complex numbers or vectors with the associated information represented by vector phase angles or vector orientations and a magnitude component; a unit for storing said translated response signals; a device for generating and storing a matrix representing stimulus-response patterns for each set of translated, associated stimulus and response signals thereby superimposing each stimulus-response pattern onto the said storage unit; a device for generating a response signal when said unit for storing said matrix and performing decoding transformations is stimulated by said stimulus signal associated with said response signal.

Another embodiment of this invention extends to a method of enhancing pattern recognition in an artificial neural device comprising the steps of: producing a stimulus signal; translating said stimulus signal by a processing unit into complex numbers represented by vector phase angle and magnitude; storing said translated stimulus signal into a storage units generating a response signal associated with a stimulus signal by said processing unit into complex numbers represented by vector phase angle and magnitude; translating said response signals by said processing unit and storing said translated response signals onto said storage unit; generating a matrix representing stimulus response patterns for each set of associated stimulus and response signals and storing each said stimulus response patterns onto said storage unit; generating a response-signal when said matrix of stimulus response patterns is stimulated by said stimulus signal associated with said response signal.

Another embodiment of this invention relates to a vision recognition device for generating an auditory response signal in response to a visual stimulus signal comprising: a visual field input device or camera for generating a stimulus signal when operably activated; a storage unit for storing data; a unit for translating elements of said visual stimulus signal into complex numbers with the associated information represented by vector phase angles and magnitude components and storing said translated visual stimulus signals onto said storage unit; a device for reading or inputting an auditory response signal associated with a visual stimulus signal; a unit for translating said auditory response signals into complex numbers or vectors with the associated information represented by vector phase angles and magnitude components and storing said translated character word response signals onto said storage unit; a processing device capable of performing transformations to generate a matrix representing a stimulus-response patterns for each set of associated visual stimulus and auditory response signals and superimposing each said stimulus-response patterns onto said storage unit; a processing device capable of performing transformations to generate a response signal when said processing device accessing matrix of encoded stimulus-response patterns is stimulated by said visual stimulus signal associated with said auditory response signal; a device for transforming said response signal represented by complex numbers or vectors into auditory output.

Yet another embodiment of this invention is a method of generating an auditory response by an artificial neural device in response to a visual stimulus signal comprising the steps of: producing a visual stimulus signal through a video camera unit then; translating said visual stimulus signal into complex numbers represented by vector phase angle and magnitude and storing said translated visual stimulus signal onto a storage unit; a device for generating an auditory response signal associated with said visual stimulus signal; a unit for translating said auditory response signal into complex numbers represented by vector phase angle and magnitude and storing said translated auditory response signal onto said storage unit; a device for generating and storing a matrix representing stimulus response patterns for each set of associated visual stimulus signals and auditory response signals and storing said stimulus response patterns onto said storage unit; generating an auditory response when said matrix of stimulus response patterns is stimulated by said visual stimulus signal associated with said auditory response signal.

Another emodiment of this invention relates to a speech recognition device for generating an output signal encoding character words or Roman numerals in response to a spoken auditory stimulus signal comprising: an auditory input or microphone device for generating an auditory stimulus signal when operably activated; a storage unit for storing data; a unit for translating elements of said auditory stimulus signal into complex numbers with the associated information represented by vector phase angles and magnitude components and storing said translated visual stimulus signals onto said storage unit; a device for reading or inputting a character word response signal associated with an auditory stimulus signal; a unit for translating said character word response signals into complex numbers or vectors with the associated information represented by vector phase angles and magnitude components and storing said translated character word response signals onto said storage unit; a processing device capable of performing transformations to generate a matrix storing stimulus-response patterns for each set of associated auditory stimulus and character word response signals and superimposing each said stimulus-response patterns onto said storage unit; a processing device capable of performing transformations to generate a response signal when said processing device accessing matrix of encoded stimulus-response patterns is stimulated by said visual stimulus signal associated with said auditory response signal; a device for transforming said response signal represented by complex numbers or vectors into the character word representation.

Yet another embodiment of this invention relates to a robotic device for generating an output signal encoding axial position or axial rates of movement in response to stimulus signals encoding axial positions, axial rates of movements, visual input data, tactile information, etc., the system comprising: a position sensing device for generating position and rate of movement stimulus signals; a visual field input device for generating a visual stimulus signal; a pressure sensor device or devices for generating tactile stimulus signals; a storage unit for storing data; a unit for translating elements of said axial position, axial rate of movement, visual, and tactile stimulus signals into complex numbers with the associated information represented by vector phase angles and magnitude components and storing said translated stimulus signals onto said storage unit; a device for reading or inputting a robotic axial position or axial rate of movement response signal associated with said (robotic) axial position, axial rate of movement, visual and tactile stimulus signals; a unit for translating said robotic response signals into complex numbers or vectors with the associated information represented by vector phase angles and magnitude components and storing said translated robotic response signals onto said storage unit; a processing device capable of performing transformations to generate one or several matrices representing stimulus-response patterns for each set of associated robotic stimulus-response signals and superimposing each said robotic stimulus-response patterns onto said storage unit; a processing device capable of performing transformations to generate a robotic response signal when said processing device accessing one or several matrices of encoded robotic stimulus-response patterns is stimulated by said robotic stimulus signal associated with said robotic response signals a device for transforming said robotic response signal represented by complex numbers or vectors into actual robotic axial movements or rates of movements.

Yet another embodiment of their invention relates to an expert system or automated reasoning device for generating a decision or seemingly intelligent or otherwise intelligent output in response to a stimulus signals which may represent several diverse and distinct forms of sensory modalities, measured parameters, concrete or abstract concepts etc. The said output response may be embodied in any form of sensory modality (i.e. visual, auditory) however the output mode of speech shall be used for this example. The said expert system or automated reasoning device would comprise: a set of devices for reading or inputting said diverse and distinct forms of sensory modalities, measured parameters, concrete or abstract concepts for generation of the stimulus signal; a storage unit for storing data; a unit for translating elements of said multiple origin stimulus signals into complex numbers with the associated information represented by vector phase angles and magnitude components and storing said translated visual stimulus signals onto said storage unit; a device for reading or inputting an auditory response signal associated with a multiple origin stimulus signal; a unit for translating said auditory response signals into complex numbers or vectors with the associated information represented by vector phase angles and magnitude components and storing said translated character word response signals onto said storage unit; a processing device capable of performing transformations to generate one or several matrices representing stimulus-response patterns for each set of associated multiple origin stimulus and auditory response signals and superimposing each said stimulus-response patterns onto said storage unit; a processing device capable of performing transformations to generate a response signal when said processing device accessing matrices encoded stimulus- response patterns is stimulated by said multiple origin stimulus signal associated with said auditory response signal; a device for transforming said response signal represented by complex numbers or vectors into the auditory output. Said device would optimally consist of several layers of transformation groups and signal feedback mechanisms. Said transformation group consists of a subset of stimulus-response patterns encoded into a subset of matrices whereby the stimulus input to subset of matrices originate from transformation groups in higher layers; output response from subset of matrices is fed back directly or indirectly into transformation groups in lower layers. Said feedback mechanism may consist of auditory response fed into the environment; said auditory response inducing a reaction within the environment; said reaction within the environment may be embodied in any form (i.e. sound wave propagation, reaction of external device or organism, etc.); said reaction within the environment fed back into said expert system or automated reasoning device as a stimulus signal. Said feedback mechanism may consist of a second form whereby response outputs from said transformation groups in higher layers are fed back directly as stimulus inputs to said transformation groups in the same or lower layers.

Certain embodiments of this invention are capable of enhancing the storage and capacity of the artificial neural device based on the process described herein employing any of the following methods:

(a) Employing Hermitian or other preprocessing operations upon the input stimulus field to increased the stimulus field size of the principle neural element. Such preprocessing is performed with the intent to increase the size of the stimulus field and thus the number of stimulus-response patterns one may superimpose upon the neural element. Such preprocessing means permit stimulus-response patterns which are statistically close, or of low separation in state space, or of high degree of non-linear separability to be encoded for discreet or distinct responses.

**Supplementary Disclosure:**

(b) Employing Hermitian or Sigmoid or similar processes upon the stimulus or response fields to achieve the property of symmetry. symmetry being an important requirement for the process in that input fields must possess quality of symmetry to approach optimal information storage densities. Symmetry in this context refers to a symmetrical distribution of vectors oriented about a two dimensional, or complex, or Riemann, or phase plane. The sigmoid operation achieves symmetry by redistributing Gaussian distributions, as occurring within most natural processes, to the desired symmetrical form. In addition, an input distribution expanded to higher order statistics, for instance by processing through multiple layers of Hermitian matrices, asymptotically approaches the optimal symmetrical form for execution of learning (encoding) and expression (decoding).

(c) Applying a non-linear operation on the response output magnitude to permit the neural element to operate as a recognition discriminator about a defined threshold limit. This operation intrinsically causes the neural element to switch on (large magnitude) for recognized stimulus and switch off (small magnitude) for unrecognized stimulus.

(d) Combining groups of neural elements to form a system comprised of transformation groups wherein said transformation group encodes and decodes a plurality of information values or elements within the response field associated with each stimulus pattern. The transformation group may be configured as a single modular neural device, electro-mechanically based, micro-electronic based, software based, optically based, biologically based or otherwise.

(e) Combining groups of said neural devices comprising transformation groups in a parallel arrangement such that input stimulus patterns may be fed into several transformation groups and separate distinct response fields are thus issued from each transformation group in accordance with that input stimulus pattern.

(f) Combining groups of said devices comprising transformation groups into a layered arrangement such that the output response fields of transformation groups of lower layers are fed into input the input stimulus fields of higher layers of said transformation groups.

(g) Combining groups of said transformation groups into both layered and parallel networks in any definable interconnection configuration.

(h) Employing signal feedback mechanisms such that output response fields generated from transformation groups in higher layers is fed back, either directly or indirectly via the external environment, to input stimulus fields of transformation groups in the same or lower layers.

(i) Employing dynamic time variable decay of the encoded information representative of the synaptic connections and presented in an abstract form by said correlation matrix [X]. The purpose of this technique is to establish a memory profile that determines the predominance of encoded information over any range extending from permanent or long term memory to very short term memory.

**Supplementary Disclosure:**

(j) Establishing an inhibitory/excitory classification or grouping for the synaptic connections to enhance symmetry properties. Said inhibitory/excitory grouping is performed by the translation of a subset of vector elements within the stimulus field.

(k) Where calculational simplicity is required the operational system may be reduced or simplified to a one dimensional or scalar system whereby the information or phase component is limited to a binary representation. That is, the phase components are defined at 0 and $\pi$ representing a binary information system. The majority of other aspects concerning the process (i.e. higher order statistics) remain similar considering now that information representation within the phase domain is limited to only the $0/\pi$ phase orientations.

Embodiments of this invention may be applied for innumerable applications including:

(a) Incorporation of the artificial neural device into any system or subsystem whose function is to recognize or respond to visual input stimulus.

(b) Incorporation of the artificial neural device into any system or subsystem whose function is to recognize or respond to auditory input stimulus.

(c) Incorporation of the artificial neural device into any system or subsystem whose function is to recognize or respond to input stimulus that represents any form of sensory modality or abstract representation thereof.

(d) Incorporation of the artificial neural device into any system or subsystem whose function is to recognize or respond to input stimulus that represents any physical parameter or abstract representation thereof.

(e) Incorporation of the artificial neural device into any control system or control subsystem. This application encompasses but is not limited to any form of process control, mechanical control, electrical control, biological control, vehicular control, robotic control.

(f) Incorporation of the artificial neural device into any communication system or communication subsystem to enhance the data transmission signal/noise ratio or provide ancillary functions such as translation of independent input stimulus signals to an associated response output or representation (i.e. voice to text translation).

(g) Incorporation of the artificial neural device into any system that performs artificial intelligence-related functions. This application encompasses but it not limited to expert systems and automated reasoning systems whereby input stimulus associations to an intelligent response action or decision.

(h) Incorporation of the artificial neural process or device into any computational device to increase or enhance computational efficiency. Such an application may be realized, for instance, within finite element analysis whereby external and internal parameters of the mesh node within one or a plurality of past time increments are associated to parameter states in a subsequent time step.

(i) Incorporation of the artificial neural system into any neurobiological or biological prosthesis device. This application encompasses but is not limited to artificial limbs, hearing aids, pacemakers.

## SUMMARY OF THE INVENTION

A radically new approach to artificial neural system theory is described herein. In order to effectively describe the invention a general conceptual description is provided followed by a mathematical description. A principle goal in the field of ANS research is the development of a mechanism or process to encode and superimpose a large amount of information onto a given data storage medium. The neural system must facilitate a means to decode subsequent stimulus input via the encoded information, to produce an associated response output. The optical hologram provides a system roughly analogous to the above encoding process. An information enfolding process within the optical hologram permits a visual three-dimensional object to be stored onto, and reconstructed from a two-dimensional photographic plane effectively enfolding or collapsing an apparent spacial dimension. As a result of the holographic encoding and decoding mechanisms, information storage densities within the two-dimensional plane are considerably enhanced.

A similar concept is presented for the holographic neural process described herein. This neural process however deals with information in the form of stimulus-response patterns and stores the information within an abstract mathematical domain (Riemann or phase space). These stimulus-response patterns may represent any form of sensory modality and may be read-in either via external environmental receptors or (in the case for multineuronal systems) propagated through the system via interneuronal synaptic connections. The holographic neural process superimposes those stimulus-response patterns onto the same memory element or storage medium. The theoretical basis is roughly analogous to the optical hologram, with a principal exception that time is the apparent dimension enfolded or collapsed.

On activation of the system by a stimulus pattern (decoding operation) the stimulus is processed via the accumulated information (all stimulus-response associations enfolded within the correlation set) to issue a near instantaneous response. The characteristics of the response output are described in the section pertaining to Decoding.

To provide a physical analogy, one may consider the seemingly effortless human task of recognizing a face. If complicated by various translations and rotations in space, this task is largely beyond the computational abilities of current methodologies employing present day computing systems. A holographic neural system of the type described herein, however, can superimpose and store a very large set of images at various permutations of rotation and translation and, independent of the number of pattern associations stored, issue the desired response in a near instantaneous fashion. The principles outlined herein potentially present a basis for an explanation of our ability to store vast amounts of sensory information, and respond to familiar forms of sensory modalities at a near instantaneous fashion, and at a rate independent of the amount of information accumulated (i.e. respond at age 4 and age 40 with roughly the same rapidity).

The context of "patterns" as used within this application refers either to sets of data or sets of stimulus-response associations and the term will be used to indicate same.

The data values contained within both the stimulus and the response patterns may represent any form or type of information. For example, the sets of data within the stimulus or response patterns may represent pixel values within a visual field, axis position or rates of movement within a robotic device, or Fourier transform elements for auditory input. Accordingly, both the stimulus and the response field may contain data representing any form of sensory modality, measurable parameter, or abstract representation of the above.

For purposes of illustration the stimulus signal or field will be represented by the following set of scalar data $S' = \{s_1, s_2, s_3,...s_N\}$. For example, set $S'$ may represent numerical data produced by video digitizing equipment when viewing an object such as an apple, whereby $s_1$ to $s_N$ is the set of numeric or scalar values representative of pixel intensities. Similarly the response field $R'$ associated with the stimulus input field may be represented by:

$$R' = \{r_1, r_2, r_3, ...r_M\}$$

where $r_1$, to $r_M$ is again a set of real numbers. For example such numerical values can represent a character or ASCII representation of the word APPLE.

The process involves translating the above information contained within both of the above scalar sets, namely the stimulus signal or field $S'$ and response signal or field $R'$, to equivalent sets of complex vectors whose elements of the set possessing both phase angle and magnitude components. Information is thus represented by vector orientations on a two dimensional, or complex, or Riemann (phase) plane. The transformation occurs by the following non-linear mapping whereby of the above sets of stimulus-response patterns denoted by $s_k$ and $r_j$ respectively are normalized to, or scaled within, a circular range corresponding to $2\pi$ or 360°. This transformation produces a proportional phase angle representation for information as donated below by $\Theta^k$ and $\Phi^j$ respectively, where:

$$s_k \Rightarrow e^{i\Theta^k}, \ \Theta^k = Fs(s_k) \text{ for stimulus field elements} \qquad \text{eq. 1}$$

and

$$r_j \Rightarrow e^{i\Phi^j} \text{ for the response elements} \qquad \text{eq. 2}$$

**Supplementary Disclosure:**

In order to maintain global symmetry, a variation of the sigmoid function Fs() is used principally within the stimulus field transformation. The concept of symmetry is essential to the operation of the holographic process and its definition and implications are discussed later. The above translated sets of data defined within the Riemann or phase domain is then represented as:

$$S = \{s(\lambda^1,\Theta^1), s(\lambda^2,\Theta^2), s(\lambda^3,\Theta^3), ...\} \text{ for stimulus} \qquad \text{eq. 4}$$

$$R = \{r(\gamma^1,\Theta^1),r(\gamma^2,\Theta^2),r(\gamma^3,\Theta^3), ...\} \text{ for response} \qquad \text{eq. 5}$$

where

$\lambda^k$ - defines a vector magnitude indicating a weighting or influence factor for element k

$\gamma^j$ - defines a vector element magnitude expressing a weighting or influence factor for each element j within the response field

Multiple sets of stimulus-response patterns may be generated and encoded over a given time axis. In providing a rough analogy, one may visualize the above transformation of scalar sets (stimulus patterns) to a series of vectors oriented about the origin of a complex plane. Several stimulus pattern sets are generated over a given time frame whereby these planes may be distributed along a axis either forming a cylindrical geometrical space or represented by overlapping phase regions within a Riemann domain. Again, each vector within the Riemann domain represents an element of information. This concept is most conveniently expressed mathematically in complex exponential notation. The general form of $s(\lambda^k, \Theta^k)$ for the stimulus and $r(\gamma^j,\Phi^j)$ for the response are therefore expressed in most general terms as follows:

$$s(\lambda^k,\Theta^k) = \lambda^k e^{i\Theta^k} , r(\gamma^j, \Phi^j) = \gamma^j e^{i\Phi^j} \qquad \text{eq. 6}$$

## <u>ENCODING</u>

The encoding operation involves the formation of a mapping from an input stimulus state to a response state within phase space. In the most elementary form, the encoding operation is performed by determining the difference in phase orientation between the set of elements (or any subset) within the stimulus input field S and the set of elements (or any subset) within the output response field R. This encoding transformation involves the production of the following set of correlation values:

$$X = \{\{x(\lambda^1,\Theta^1,\gamma^1,\Phi^1), \; x(\lambda^2,\Theta^2,\gamma^2,\Phi^2)...\}$$

$$\vdots$$

$$... \text{eq. 7}$$

$$\{x(\lambda^N,\Theta^N,\gamma^1,\Phi^1), \; x(\lambda^M,\Theta^M,\gamma^2,\Phi^2)...x(\lambda^M,\Theta^M,\gamma^M,\Phi^M)\}\}$$

Elements within the above correlation set are again of complex form and are determined by the following non-linear relation:

$$x(\lambda^k,\Theta^k,\gamma^j,\Theta^j) = h(\lambda^k,\gamma^j)e^{i(\Phi^j-\Theta^k)} \qquad \text{eq. 8}$$

The magnitude function $h(\lambda^k,\gamma^j)$ determines an association profile between the stimulus and response fields for the above encoding transformation. This association profile is defined in terms of the characteristics governing the relative magnitude assigned to the correlation set elements. One possible characteristic for the association profile may be given simply by the following:

$$h(\lambda^k,\gamma^j)=\lambda^k \cdot \gamma^j \qquad \text{eq. 9}$$

Equation (1) above expresses a transformation for one stimulus-response pattern encoded at a discrete instant in time. This encoding transformation may be applied over a series of stimulus-response patterns whereby a plurality of patterns over a given time frame are enfolded onto the same group of vectors within the correlation set. Assuming a time frame extending over tl to t2:

$$x_{k,j} = \int_{t^1}^{t^2} h(\lambda^k, \gamma^j, t) \ e^{i(\phi^j_t - \theta^k_t)} \ dt \qquad \ldots eq. \ 10$$

The above encoding transformation may be expressed in a more canonical form using matrix notation. For any given stimulus pattern at time t the complex vector matrix is represented in a form similar to equation 4:

$$[S]_t = [\ \lambda^1_t e^{i\Theta^1_t}, \ \lambda^2_t e^{i\Theta^2_t}, \ \lambda^3_t e^{i\Theta^3_t}, \ \ldots ] \qquad eq. \ 11$$

The process is generalized as a translation from a multivalued stimulus input field to an associated response field. The response matrix has again the following representation:

$$[R]_t = [\ \gamma^1_t e^{i\Phi^1_t}, \ \gamma^2_t e^{i\Phi^2_t}, \ \gamma^3_t e^{i\Phi^3_t}, \ \ldots ] \qquad eq. \ 12$$

Again, the generated mappings between the stimulus-response fields are enfolded within the correlation matrix [X]. The encoding transformation for this stimulus-response pattern is executed by the following inner product on the vector matrices:

$$[X] = \overline{[S]}^T \cdot [R] \qquad eq. \ 13$$

where $\overline{[S]}^T$ is the transpose conjugate of [S].

The correlation matrix presents a mathematical analog of the neural synaptic connections and forms the basis for memory, containing all information encoded within the system. In general, this information is encoded as a phase angle differences between the input stimulus field vector elements ($\Theta^k$) and the response vector elements ($\Phi^j$). Again, the efficiency and power of the holographic system is derived from the ability to enfold these associations or mappings for multiple stimulus-response patterns onto the same storage medium (correlation matrix element or synapse). To illustrate this concept, the encoded matrices for stimulus-response patterns 1 through to T may be denoted by:

$$[X]_1, \ [X]_2, \ [X]_3, \ \ldots [X]_T \qquad eq. \ 14$$

$[X]_2$ would denote the encoded matrix for a second stimulus response pattern where for example $[S]_2$ may represent data obtained from video digitizing equipment when viewing an object such as a pear, while $[R]_2$ would numerically present an ASCII representing of the word PEAR.

All of the above stimulus-response associations or mappings may be encoded onto the same correlation matrix [X] by summing the individual correlation matrix elements for each pattern set, as illustrated below for example by pattern sets 1 to T:

$$[X] = [X]_1 + [X]_2 + [X]_3 + \ldots + [X]_T \qquad eq. \ 15$$

This technique facilitates conservation of information and creates information densities of extremely high order. As discussed in the following section pertaining to Decoding, a deterministic residual "error" occurs in the generated response on storage of multiple stimulus-response associations, generating a measurable degree of fuzz in the response. This error contribution, however, is sufficiently low that a very large number of patterns or associations may be encoded prior to accumulation of excessive fuzz within the generated response.

One may represent the stimulus field as a two dimensional matrix [S] indexing the vector elements representing discrete stimulus inputs along the row and the time index along the vertical.

i.e.

$$\underset{\longrightarrow}{\text{stimulus element}}$$

$$[S] = \overset{\text{time}}{\Bigg\Downarrow} \begin{bmatrix} \lambda^1_{t1}e^{i\theta^1_{t1}} \ , \ \lambda^2_{t2}e^{i\theta^2_{t1}} \ , \ .. \\[2ex] \lambda^1_{t2}e^{i\theta^1_{t2}} \ , \ \lambda^2_{t2}e^{i\theta^2_{t2}} \ , \ .. \\[2ex] \lambda^1_{t3}e^{i\theta^1_{t3}} \ , \ \lambda^2_{t3}e^{i\theta^2_{t3}} \ , \ .. \\[1ex] \bullet \qquad\qquad \bullet \\ \bullet \qquad\qquad \bullet \\ \bullet \qquad\qquad \bullet \end{bmatrix} \qquad \text{... eq. 16}$$

In modelling a single neuron, one vector element representing information in the response field is assumed. This response distributed over time is represented by an N by 1 matrix of vector elements [R], again with the time index incremental along the vertical axis. Performing the inner product encoding transformation eq. 13 produces a correlation matrix of the following form:

$$[X] = \begin{bmatrix} \sum\limits_t h\ (\lambda^1,\gamma,t)e^{i(\Phi_t - \theta^1_t)} \\[2ex] \sum\limits_t h\ (\lambda^2,\gamma,t)e^{i(\Phi_t - \theta^2_t)} \\[1ex] \bullet \\ \bullet \\ \bullet \end{bmatrix} \qquad \text{... eq. 17}$$

where

t -                time index over the encoding time frame
$\Phi_t$ -         vector phase angle indicating encoded response value for pattern t
$\Theta^k_t$ -    vector phase angle representing information within stimulus field element k for pattern t
$h(\lambda^k,\gamma,t)$ -  magnitude component of stimulus-response association for stimulus element k and pattern t (see association profile eq. 9)

The above encoding transformation defines a process whereby the dimensional parameter related to time within the correlation set is enfolded or collapsed.

Each element within the above correlation matrix (i.e, $x^k$) sums the vector differences between element k in the stimulus field and the associated response vector over all encoded stimulus-response patterns. For example, matrix element $x_2$ sums the vector differences between element 2 of the stimulus field and the associated response value over all patterns 1 to T. The above procedure achieves a state in which information pertaining to the encoded patterns are holographically superimposed and stored onto the same numerical value, memory location or storage space.

## DECODING

The decoding operation is related to the associative recall of the appropriate encoded on "learned" response. This operation consists of reading data corresponding to any input stimulus and translating this stimulus through the correlation set. Using a practical example one may focus the video digitizing equipment upon the image of an apple to generate the associated numerical pixel data representative of the visual image.

Performing a decoding transform through the correlation set X, for any stimulus bearing similarity to a pattern encoded over the established time frame, will result in the invocation of the learned output response. This decoding operation is similar to the encoding transformation in many respects. As previously defined, the stimulus field may be represented as a set of scalar values. $S^* = \{s_1^*, s_2^*, s_3^*, ...\}$ The stimulus field is again mapped onto a complex vector set in which the scalar quantities are represented by phase angle orientations:

$$S^* = \{\beta^1 e^{i\zeta^1}, \beta^2 e^{i\zeta^2}, \beta^3 e^{i\zeta^3}, ...\} \qquad \text{eq. 18}$$

where

$\beta^k$ -   defines a complex vector magnitude indicating a weighting or influence of element k within the stimulus field.
$\zeta^k$ -   complex vector phase angle indicating information component of stimulus field element k

Illustrating the operation of a single neural element, the decoding or expression of a response (r) is performed by evaluating the inner product of the stimulus field $S^*$ and correlation set X:

$$r = \frac{1}{c} \sum_{k}^{N} s^*(\beta^k, \zeta^k) \cdot x(\lambda^k, \theta^k, \gamma, \phi) \qquad ... \text{ eq. 19}$$

where

$$S^*(\beta^k, \zeta^k) = \beta^k e^{i\zeta^k}$$

c -   renormalization constant adjusts the output magnitude to proportional values within the desired range (0-1). This constant may be defined by any functional relationship over the stimulus and response field elements
N -   number of discrete vector elements within the stimulus field

Rewriting equation 19 in an expanded exponential form and integrating for patterns the encoded over time t1 to t2:

$$r = \frac{1}{c} \sum_{k}^{N} \beta^k e^{i\zeta^k} \int_{t1}^{t2} h(\lambda^k, \gamma, t) e^{i(\phi_t - \theta_t^k)} dt \qquad ... \text{ eq. 20}$$

### Supplementary Disclosure:

To illustrate the property relating to expression of a learned pattern, the following limit theorem is applied. For simplicity of illustration, all magnitude weighting values are assumed equivalent to unity (i.e. equal weighting of all vector elements). For any stimulus field $S^*$ approaching the pattern state S encoded at time T, one may establish the following equivalence:

$$\xi^k = \Theta^k + \varepsilon_r^k \text{ over stimulus elements } k = 1 \text{ to } N$$

where $\varepsilon_r^k$ is a random pattern dissociation term, substituting the above into equation 20:

$$r = \frac{1}{c} \sum_{k}^{N} e^{i(\Phi_T + \epsilon_r^k)}$$

$$+\frac{1}{c} \sum_{k}^{N} e^{i(\theta_T^k + \epsilon_r^k)} \left[ \int_{t1}^{T-dt} e^{i(\Phi_t - \theta_t^k)} dt \right. \qquad \ldots \text{ eq. } 21$$

$$\left. - \int_{T+dt}^{t2} e^{i(\Phi_t - \theta_t^k)} dt \right]$$

Applying the following limit as the stimulus field $S_*^*$ approaches the pattern state encoded at time T:

$$\epsilon_r^k \Rightarrow 0 \qquad \text{over } t = 1 \text{ to } N$$

An approximation may be performed in descretizing the time integral within equation 21. The following result if then obtained in the above limit:

$$r = \frac{1}{c} \qquad N^{ei\Phi}T + Er(\Theta, \Phi, T) \qquad \qquad \text{eq. } 22$$

The first term in the above solution represents the dominant vector generated within the recognition response. This term displays a magnitude proportional to N with the phase angle $\Theta_T$ corresponding to the dominant response phase information. The decoding transformation operates in the following manner for any stimulus input field $s_*^*$ equivalent or similar to a prior encoded stimulus pattern (i.e. set S over learning time frame t = 1 to T). On expression, the phase angle within the generated response will approach the encoded response phase angle for that associated stimulus pattern including, however, a deterministic "error" contribution as given by the above term Er(). This error term is analogous to a convolution of the remaining encoded pattern sets expressed as complex vectors within transform space and may be expanded to the following form:

$$Er(\Theta, \Phi, T) = \sum_{k}^{N} e^{i\theta_T^k} \sum_{\substack{t=t1 \\ t\neq T}}^{t2} e^{i(\Phi_t - \theta_t^k)} \qquad \ldots \text{ eq. } 23$$

This term presents a summation of the set of uncorrelated unit vectors comprising all the remaining encoded stimulus-response patterns. For an ideal case these vectors display a property of symmetry categorized by an even probabilistic distribution about the complex plane. The resultant error contribution increases with the number of patterns stored and the vector summation properties, as illustrated by equation 23, approximate a random walk path for the ideal symmetrical case. Reiterating, the response pattern stored at time T emerges as the dominant vector with a magnitude proportional to N and the random term Er() produces a fuzziness contribution within the generated response. The statistical variance on the magnitude for this Er() term is proportional to the total number of patterns encoded and establishes a practical limit on the number of stimulus-response associations that may be enfolded. This limit has been analyzed applying the theory of random walks (such as describing the characteristics of Brownian movement). Empirical analysis indicates that for a multidimensional orthogonal co-ordinate system, assuming unit steps, the average magnitude resulting from a summation of n random walks is:

$$\sqrt{n} \qquad \text{eq. 24}$$

The above residual "error" contribution within the generated output response is deterministic and increases proportionally to the number of patterns stored. This residual contribution is in fact a function of both the number of elements in the stimulus field (N) and the number of discrete patterns stored (P). The resultant mean error expressed as "fuzz" within the generated response may be approximated in percent full scale ($2\pi$ phase region) by the following relationship for P/N ratios less than 0.5:

$$\overline{\Phi} \text{ error} = \frac{1}{\pi\sqrt{8}} \arctan\left( \sqrt{\frac{P}{N}} \right) \qquad \text{eq. 25}$$

**Supplementary Disclosure:**

The above approximates the mean "error" with the generated phase component of the response assuming an ideal symmetrical system. Again, symmetry refers to a uniform probabilistic distribution of vector elements orientated about an origin on the Riemann or phase plane as occurring for instance within a set of randomly generated phase angles having a uniform probabilistic distribution between 0 and $2\pi$. Naturally occurring distributions displaying a more Gaussian shape may be transformed into this ideal symmetrical form by the use of a sigmoidal preprocessing function as elaborated in the section pertaining to Enhancements of Invention. It is important to note that the encoded stimulus-response patterns may be distinct and comprise complete non-linear or independent sets.

Expressing the decoding transformation in a more canonical form, one may again define a matrix form to represent stimulus information:

$$[S]^* = [\beta^1 e^{i\zeta^1}, \ \beta^2 e^{i\zeta^2}, \beta^3 e^{i\zeta^3}, ...] \qquad \text{eq. 26}$$

As stated earlier, $\beta^k$ is a magnitude term representing a dominance factor for each input element and vector phase angle indicating stimulus field information. The decoding operation is performed by the following inner product:

$$[R] = \frac{1}{c} [S]^* \cdot [X] \qquad \text{eq. 27}$$

where

c    is the variable for renormalization of the magnitude within the generated response.

**Supplementary Disclosure:**

Characteristics of the decoding transformation are illustrated in the following more expansive fashion in which the output vector may be represented as a summation of distinct response vector components. Each of these convolved vector components is a product of the stimulus transformation through one of the stimulus-response patterns enfolded within correlation matrix [X]. An expansion for one generated response (one neuron) may be formulated as follows:

$$[R] = \frac{1}{c} \left( \Lambda_1 e^{i\phi_1^{\bullet}} + \Lambda_2 e^{i\phi_2^{\bullet}} + \Lambda_3 e^{i\phi_3^{\bullet}} + ... + \Lambda_T e^{i\phi_T^{\bullet}} \right) \qquad ... \ \textit{eq. 28}$$

$$= \frac{1}{c} \sum_t \Lambda_t e^{i\phi_t^{\bullet}}$$

where

$\Lambda_t$    is the magnitude component for the deconvolved response vector corresponding to a stimulus transform through one stimulus-response pattern association encoded at time t

$\Phi^*_t$    is the generated phase angle for stimulus transform through one stimulus-response pattern association encoded at time t

For illustrative purposes a stimulus pattern variance term will be defined as the degree of correspondence between a reference stimulus pattern and any subsequent input stimulus pattern. Representing the elements of these stimulus patterns conventionally within a real number domain, the pattern variance may be defined as follows:

$$\sigma_t^2 = \sum_{k=1}^{N} \frac{(s_{k,t} - s^*_k)^2}{N} \qquad \ldots eq.\ 29$$

where

$s_k$ -    elment k of reference stimulus

where $s^*_k$ -element k of input stimulus pattern

Returning to the holoraphic process the response generated on translating an input stimulus $[S]^*_t$ through the correlation set produces a vector summation of generated responses, each response associated with a unique stimulus-response pattern enfolded within correlation set [X] as indicated by equation 28. The above deconvolved response vectors (i.e. $\Lambda_t e^{i\Phi^*_t}$) resulting from the input stimulus transformation through one of the encoded stimulus-response patterns expresses a magnitude inversely proportional to the stimulus pattern variance as defined above in equation 29.

In other words, each of the deconvolved response vectors possess a magnitude statistically proportional to the degree of closeness to the input stimulus pattern $(S)^*_t$. As a result, encoded stimulus patterns displaying the greatest similarity to an input stimulus $[S]^*_t$ produce a proportionately dominant contribution within the generated response. Descretizing the time integral within equation 20 the following summation form for the generated response is obtained.

$$r = \frac{1}{c} \sum_k \beta^k e^{i\zeta^k} \sum_t h(\lambda_k, \gamma, t) e^{i(\Phi_t - \theta_t^k)} \qquad \ldots eq.\ 30$$

Equating the above with the expanded summation form in equation 28, each vector term within the deconvolved response may be determined:

$$\Lambda_t e^{i\Phi^*_t} = \frac{1}{c} e^{i\Phi_t} \sum_k \beta^k \cdot h(\lambda^k, \gamma, t) e^{i(\zeta^k - \theta_t^k)} \qquad \ldots eq.\ 31$$

Following the above, the magnitude and phase components may be evaluated directly where:

$$\Lambda_t = \left\{ \left[ \frac{1}{c} \sum_k \beta^k \cdot h(\lambda^k, \gamma, t) \cos(\zeta^k - \theta_t^k) \right]^2 \right. \qquad \ldots eq.\ 32$$

$$\left. + \left[ \sum_k \beta^k \cdot h(\lambda^k, \gamma, t) \sin(\zeta^k - \theta_t^k) \right]^2 \right\}^{\frac{1}{2}}$$

$$\phi_t^* = \arctan \left[ \frac{\sum_k B^k \cdot h(\lambda^k, \gamma, t) \sin(\zeta^k - \theta_t^k + \phi_t)}{\sum_k B^k \cdot h(\lambda^k, \gamma, t) \cos(\zeta^k - \theta_t^k + \phi_t)} \right] \qquad \ldots \textbf{eq. 33}$$

adjusting $\Phi_t^*$ for the principle angle.

Again applying the limit argument, as the elements ($\zeta k$) within the stimulus input field approach stimulus pattern [S] encoded at time T, then:

$$e^{i\zeta^k} = e^{i(\Theta_t^k - \varepsilon_r^k)} \quad \text{over elements } k = 1 \text{ to } N \text{ elements} \qquad \text{eq. 34}$$

where $\varepsilon_r^k$ is an error quantity. Resubstituting the above equivalence for equation 32 and 33:

$$\Lambda^T = \frac{1}{c} \left\{ \left[ \sum_k B^k \cdot h(\lambda^k, \gamma, T) \cos(\varepsilon_r^k) \right]^2 + \right. \qquad \ldots \textbf{eq. 35}$$

$$\left. \left[ \sum_k B^k \cdot h(\lambda^k, \gamma, T) \sin(\varepsilon_r^k) \right]^2 \right\}^{\frac{1}{2}}$$

$$\phi_T^* = \arctan \left[ \frac{\sum_k B^k \cdot h(\lambda^k, \gamma, T) \sin(\phi_T + \varepsilon_r^k)}{\sum_k B^k \cdot h(\lambda^k, \gamma, T) \cos(\phi_T + \varepsilon_r^k)} \right] \qquad \ldots \textbf{eq. 36}$$

As the elements of the stimulus field tend toward the encoded stimulus pattern, then,

$$\varepsilon_r^k \Rightarrow 0 \qquad \text{over all k.}$$

And from this follows:

$$\Lambda_T \Rightarrow \frac{1}{c} \sum_k Bk \cdot h(\lambda^k, \gamma, T) \qquad \ldots \textbf{eq. 37}$$

$$\Phi_T^* \Rightarrow \Phi_T$$

The value $\Lambda_T$ represents the magnitude component for the input stimulus field transformation through stimulus-response pattern encoded at time T and presents the most dominant response phase vector component for a closely correlated stimulus pattern match. The generated phase angle $\Phi_T^*$ corresponds to the encoded response phase value for this pattern. Using a similar illustration, as the elements of the input stimulus field ($\zeta^k$) randomly diverge from pattern [S] encoded at time T, a limit may be assumed whereby a flat probabilistic distribution for $\varepsilon_r^k$ is presented about the phase plane. At the limit of total non-correlation or random association between the input stimulus field [S]* and encoded pattern [S]$_T$, the vector summation term as defined by equation 31 follows a random walk path indicating that the generated response magnitude approaches a normal probabilistic distribution centred about the origin. The uncorrelated response will generate effectively a random, however, calculable or deterministic phase angle orientation. This response vector will statistically display a distribution centred about the origin with an average magnitude approximated by:

$$\Lambda \mu \cong \frac{1}{c} \left( \bar{h}(\lambda^k, \gamma, t) \sum_k \beta^k \right)^{\frac{1}{2}} \qquad \ldots eq. \ 38$$

where $\bar{h}()$ - average magnitude over stimulus elements

In essence, the method by which the process operates is that a response value corresponding to any of the stored stimulus-response assumptions can be regenerated at any time by inputting a previously encoded stimulus pattern to the neural device (again recalling that the stimulus pattern could be a picture, a spoken word, or other parameter, and the generated response being the associated word, control action, respectively).

The above represents the mathematical basis for an information processing system whose canonical form for learning is presented by equation 13 and expression by equation 27. It is important to note that encoding and decoding operations may be interspersed such that both processes operate in effective simultaneity.

## ENHANCEMENTS OF INVENTION

The holographic neural device described herein may be modified in several areas to provide enhanced and improved operational characteristics. These enhancements may be realized in the application of encoding higher order statistics, non-linear filtering of the generated response, sigmoidal preprocessing, layered networks, commutative properties of neural elements, methods for establishment of a memory profile, and excitory and inhibitory synaptic connections. These are of course only a limited subset of possible enhancements whose general concepts are described in the following:

**Supplementary Disclosure:**

## NON-LINEAR FILTERING

A non-linear scalar transform may be applied to the generated response, enhancing capabilities of the neural system with respect to recognition discrimination. As described previously, the response magnitude on decoding is statistically proportional to the degree of recognition. The generated response again may be expressed in exponential form:

$$r = \frac{1}{c} \sum_k \beta^k e^{i\zeta^k} \sum_t h(\lambda^k, \gamma, t) e^{i(\phi_t - \theta_t^k)} \qquad \ldots eq. \ 39$$

$$= \lambda^* e^{i\phi^*}$$

The mathematical basis of operation being well defined, a threshold level on the magnitude component of the response ($\lambda^*$) may be established, above which the neuron is known to have a high probability of responding to a recognized (prior learned) stimulus pattern. This threshold may be applied by any class of non-linear functions but could generally employ a variation of the sigmoid function. The non-linear decoding operation may then be expressed by the following relation:

$$r = \left(1 + e^{\left(\frac{Tr - \lambda^*}{\sigma}\right)}\right)^{-1} \cdot e^{i\Phi^*} \qquad eq. \ 40$$

where

Tr - establishes the threshold limit

σ - specifies the variance for the sigmoid function

For a low variance within the above non-linear function, the neural element operates as a discriminator about the defined threshold limit (Tr). This enhancement significantly extends the capability of the neural system in that the neural element functions as a highly sophisticated switch with analog capabilities, turning the output on (generating large magnitude) and propagating the response phase information only when the stimulus has a high degree of recognition. Similarly, the neural element switches off (generates 0 output magnitude) when exposed to an unlearned or unrecognized stimulus.

## SIGMOIDAL REDISTRIBUTION

Many classes of receptor neurons are known to process input stimulus in a sigmoidal relationship. The sigmoid function forms a basis for many current neural models in its use as a threshold or scaling transformation. For the theoretical basis presented herein the sigmoid function also plays a significant role however it is employed for entirely different conceptual reasons. Sigmoidal preprocessing or variations thereof may be utilized to transform naturally occurring distributions (i.e. distributions displaying Gaussian form) into the ideal symmetrical form. Again, the ideal symmetrical form refers to uniform probabilistic distribution of vectors oriented about the origin on the phase plane. This sigmoidal redistribution is required to achieve optimal encoding capacity for the neural system assuming Gaussian input distributions. For example, one may assume that the stimulus signals, in relation to a pattern recognition application, represent pixel intensities. Typically this sort of input, as well as a large class of scalar fields representing quantities in physical systems, display an approximate Gaussian distribution as represented by the following probabilistic distribution function (p.d.f.):

$$\text{p.d.f.} = \frac{1}{2\pi} \, e^{-\frac{1}{2}(x-\mu)^2 / \sigma^2} \qquad\qquad \text{eq. 41}$$

where

σ - standard deviation for distribution

μ - mean of distribution

x - scalar field intensity

The sigmoid function or variation thereof may be employed to translate scalar quantities within the stimulus field into a near uniform probabilistic distribution ranging between 0 and $2\pi$, i.e.

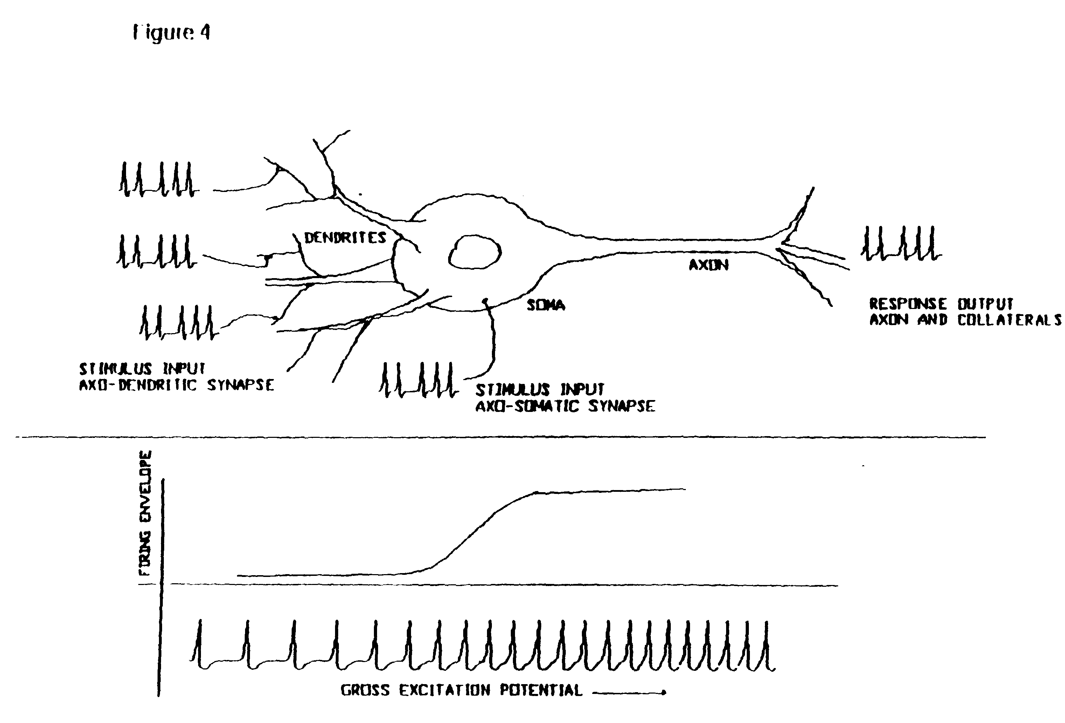

The sigmoid function is commonly used within control theory applications but, more significantly, has been shown empirically as the approximate relationship by which certian classes of neuron cells, including retinal neurons, respond to input stimulus, as illustrated by Figure 4.

The inherent properties of sigmoidal preprocessing also resolves some conceptual problems encountered in the use of phase orientations to represent sensory information or scalar field intensities. Information as represented within the phase domain typically extends over a closed range corresponding to $2\pi$. In general, external field intensities extend over an undefined and possibly unbounded real number domain. The sigmoid function provides a direct means of transforming an unbounded real number domain defining any external stimulus field into a closed range extending about the phase plane. This sigmoidal mapping may be represented in the following form:

$$\Theta^k = 2\pi \left[1 + e^{-F(s_k,\sigma,\mu)}\right]^{-1} \qquad \text{eq. 42}$$

where in general

$$(F(s_k,\sigma,\mu) = A[(s_k-\mu)/\sigma]^{\beta}$$

$$A,\beta \in \underline{R}$$

$s_k$ -    input stimulus element
$\sigma$ -    standard deviation of stimulus field distribution
$\mu$ -    mean of stimulus field distribution
$\underline{R}$ -    set of real numbers

In the above transformation to a phase domain, a point discontinuity exists at the $0/2\pi$ orientation representing a limit at both -/+ infinity within the external real number domain. This vector orientation establishes a fixed point of reference at the phase boundary defining the +/- infinity discontinuity. In other words, limits at + and - infinity within the real number domain form a locus at a single immutable boundary in the translated phase domain (i.e. $0/2\pi$).

A measure of initial symmetry for the stimulus field may be determined by performing a summation over the vector set defining the stimulus field $[S]$. The resultant vector provides two important measures of input field distribution characteristics. The magnitude component is inversely proportional to the degree of symmetry in the stimulus field and the phase angle defines the principle angle analogous to the mean of the stimulus input distribution. The sigmoid function redistributes this stimulus field about the principle angle to obtain the desired symmetry. The initial symmetry measure permits an interpolation between a sigmoidal and linear transform facilitating a means whereby information displaying any form or type of distribution may be mapped to a near ideal symmetric form. A preprocessing function employing the above concepts in an optimal form facilitates a system in which a majority form of stimulus-response data, covering a range of statistical distributions varying between Gaussian and symmetric, may be efficiently absorbed into the neural element.

## HIGHER ORDER SYSTEMS

A characteristic limitation for this system relates to the number of patterns that may be encoded for a particular size of stimulus field. This limit is imposed by the statistical error relationship defined in equation 25. The pattern storage limitation may be overcome however by a preprocessing operation involving, in one form, the formation of Hermitian matrices. The process requires the formation of a set of complex vector elements relating to any subset of vectors in [S] to any other subset in [S] by their difference in phase angle orientations. The exact Hermitian form may be obtained by representing a set in S as a 1 by N matrix, whereby the following outer product is evaluated:

$$[H] = [\bar{S}]^T \cdot [S] \qquad \text{eq. 43}$$

The process however may be generalized such that a matrix [A] composed of any subset of the input stimulus field forms the outer product with the conjugate transpose of any other defined subset $[B] \in [S]$, i.e.

$$[H] = [\bar{A}]^T \cdot [B] \quad \text{where vector elements } a,b \in [S] \qquad \text{eq. 44}$$

To illustrate, consider the following subsets:

$$[A] = [\lambda^{k1}e^{i\Theta^{k1}}, \lambda^{k2}e^{i\Theta^{k2}}, \dots \lambda^{kN}e^{i\Theta^{kN}}] \qquad \text{eq. 45}$$

$$[B] = [\lambda^{j1}e^{i\Theta^{j1}}, \lambda^{j2}e^{i\Theta^{j2}}, \dots \lambda^{jN}e^{i\Theta^{jN}}]$$

Performing the operation defined by (44) produces an expanded input field of stimulus elements as represented below in matrix form:

$$[H] = \begin{bmatrix} g(\lambda^{k1},\lambda^{j1}) \ e^{i(\Theta^{k1}-\Theta^{j1})}, & g(\lambda^{k1},\lambda^{j2}) \ e^{i(\Theta^{k1}-\Theta^{j2})}, \dots \\ g(\lambda^{k2},\lambda^{j1}) \ e^{i(\Theta^{k2}-\Theta^{j1})}, & g(\lambda^{k2},\lambda^{j2}) \ e^{i(\Theta^{k2}-\Theta^{j2})}, \dots \\ \cdot & \cdot \\ \cdot & \cdot \\ \cdot & \cdot \end{bmatrix} \quad \dots \ eq. \ 46$$

where $g(\lambda^k,\lambda^j)$ is a magnitude scaling function, i.e. typically $g(\lambda^k,\lambda^j) = \lambda^k \cdot \lambda^j$

For stimulus fields expanded as above and providing that product groups are unique, simulation results indicate the deterministic error generated within the response output follows the relationship defined by equation 25 considering now that the stimulus field contains NxM elements.

## Supplementary Disclosure

The above defines at an elementary level, the process by which higher order statistics may be encoded into the neural element. Using this method, one may explicitly control mapping of Nth order statistics into the neural element. An input set expanded for 3rd and higher order statistics may be generated by the following sigma-pi relation, for example within the encoding transformation expanded from equation 17:

$$\sum_t \gamma_t e^{i\phi}t \prod_{n-1}^{4} \lambda_t^{k(n)} e^{(-1)^n i\Theta_{:}^{k(n)}} \quad \dots \ eq. \ 47$$

where

k(n) - defines the nth element in a product term for the 4th order statistic as illustrated.

The number of stimulus vector elements in the above product (i.e. 4 in this example) define the order of the statistic. The response error characteristic follows the relationship defined in equation 25 providing that the expanded set of product terms or "groups" generated for the neuron stimulus input field are unique. Unique in this context refers to the set of all combinatorial groups of n stimulus elements in which no two groups contain the exact same set of stimulus elements. Uniqueness establishes a theoretical limit on both the number of groups over all statistics for any size of stimulus field. Again, "group" refers to the product of individual stimulus elements as defined below:

$$\prod_{n=1}^{N} \lambda^{k(n)} e^{f(n) i\Theta^{k(n)}} \quad \dots \ eq. \ 48$$

where

N - order of statistic
k(n) - defines the nth product element for the N order statistic

f(n) - operation for forming conjugate of the complex vector as any function of n

The maximum number of expanded unique sets for a given statistic follows a distribution, in the order of the statistic, known as Pascals triangle. Table 3 illustrates this distributional relationship for stimulus fields from size 2 to 20. The total number of unique combinations summed over all higher order statistics is simply:

$$2^n$$

where n is the number of elements within the stimulus field.

The implications are important in that the generation of higher order statistics provides a mechanism by which an extremely large set of individual stimulus-response mappings may be enfolded onto one correlation set (i.e. neuron cell). For instance, considering a relatively small stimulus field comprised of 32 information elements, 4 Billion unique higher order products may be generated permitting a proportionate number of mappings to be enfolded onto the neuron cell.

The above product expansion process permits a mapping of second and higher order statistics into the neural element. Again, by expanding the stimulus input set to higher order terms it is characteristic of the holographic neural process that greatly increased numbers of stimulus-response patterns or mappings may be encoded onto one neural element. This product expansion process also permits stimulus patterns displaying a high degree of overlap or non-linear separability to be encoded for separate or distinct responses.

To illustrate the potential for increased pattern storage capacity applying the above Hermitian processing technique, consider an input stimulus field comprised of 4096 pixels (a visual field of 64 by 64 pixels). To achieve a relative value of 5% for the average deterministic "error" within the output response, assuming random and uncorrelated patterns, the number of patterns that may be encoded (each pattern consisting of 4096 elements) is limited to less than 1000. If the input stimulus field is expanded to second order statistics, the number of stimulus-response patterns that may potentially be encoded is increased to 2.4 Million.

**Supplementary Disclosure:**

A further important feature pertaining to the generation of higher order statistics is the property whereby any distribution of input vectors is inherently orthogonalized or made symmetric. The complex vector distribution obtained on expanding progressively higher order terms approaches an asymptote at the point of symmetry. This defines an important aspect of the holographic neural process in that any stimulus input distribution is thereby inherently transformed into the ideal symmetrical form.

Hermitian preprocessing performs a somewhat analogous function to hidden layers within gradient descent methods. For such models, hidden layers are believed to interpret the higher order statistics isometric between pattern templates categorized within a given class. Problems encountered are that one cannot analytically determine which higher order statics have been interpreted. In addition, gradient descent methods are considerably limited in the number of "higher order statistics" which they are able to decipher. Correspondingly, if the patterns vary by statistics other than those interpreted, pattern associations may not be correctly classified. One classic example of this is a claim made by one researcher, that he had devised a network which could discern between male and female faces. Upon deeper investigation of this achievement it was found that the gradient descent network had generalized a function which measured the distance between the top of the subject's head and the edge of the picture frame.

Deterministic or precise analytic control of the neuron mapping statistics as defined within the holographic neural method is not possible within gradient descent or back propagation techniques.

**MEMORY PROFILE**

An immediate observation in the application of a cumulative memory within the holographic system is at some point the storage capacity for stimulus-response associations is exceeded, resulting in the predominance of fuzz within generated responses. Several techniques may be applied to prevent saturation of memory, all of which ultimately require limiting the average magnitude of vector elements within the correlation matrix. The most obvious and direct method consists of applying a decay term to the magnitude components within the [X] matrix. The following example for a given memory profile is derived from equation 17 defining an exponential decay for the encoded elements $x_k$ where:

$$x_k = \frac{1}{c} \sum_t^T h(\lambda^k, \gamma, t)\, e^{\frac{(t-T)}{\tau}}\, e^{i(\Phi_t - \Theta_k^t)} \qquad \ldots \text{ eq. 49}$$

T - current time frame

$\tau$ - memory decay constant

Providing that the input stimulus patterns produce a symmetric distribution over the learning time frame, the average magnitude of the correlation matrix elements $x_k$ is again governed by a normal distribution following the random walk scenario. For input patterns sampled at a constant rate, an equilibrium point is approached whereby the increase in the mean of the magnitude distribution $|\bar{X}|$ for the characteristic random walk balances the exponential decay rate. As a general guide, saturation of memory can be avoided provided the above equilibrium point for a given rate of encoding and rate of memory decay $\tau$ satisfies the following relationship:

$$|\bar{X}|_{\nu,\tau} < (N \cdot \bar{h}(\lambda,\gamma,t))^{\frac{1}{2}} \qquad\qquad \text{eq. 50}$$

Dynamic memory may be expanded to several terms or decay coefficients in order to define a memory profile. Short term memory is characterized by coefficients defining a fast encoding rate and/or correspondingly fast decay rate, conversely long term memory is categorized by slow encode and decay rate. The memory concept permits a flexibility within the neural system to establish a dominance profile of stored information over a continuum range extending from immediate short term to long term and permanent memory.

**Supplementary Disclosure:**

**INHIBITORY/EXCITORY CONNECTIONS**

As mentioned previously, of principle concern are methods or processes by which any form of input distribution may be transformed into the ideal symmetrical distribution. Transformations involving mirror translations of subset of the stimulus input field may be applied to enhance symmetry properties. This process involves the mirror translation of a subset of vector elements within the stimulus field about a defined plane intersecting the origin. This process may be performed by the following operation:

$$\lambda^k e i\Theta^k \Rightarrow \lambda^k e^{\,i(2\Theta^\tau - \Theta^k)} \qquad\qquad \text{eq. 51}$$

where

$\Theta^\tau$ - defines axis of mirror rotation

the above translation substantially reduces variation in the distribution of vectors orientations within the complex or phase plane. The resultant smoothing of the distribution, by overlaying two similar distributions which are offset from each other, intrinsically enhances the symmetry of the input field. This mirror rotation process indicates an inhibitory/excitory grouping for subsets within the stimulus field, in the manner that increased stimulation of an input element within one class (i.e. inhibitory) will produce the complementary affect of increased stimulation for an input element within the alternate class (i.e. excitory). It is significant to note that neurological studies indicate the existence of an excitory/inhibitory grouping structure for the biological neuron and particular classes of neurons are known to possess both excitory and inhibitory connections within their synaptic arrays.

**Commutative Properties of Neurons**

The holographic neural process displays what shall be referred to as a "commutative" property whereby the generated response outputs from a plurality of neurons may be summed within the vector domain to produce a net response. Providing that the stimulus input fields to all neurons are comprised of unique or non-overlapping sets of higher order statistics, the error relationship of the vector summation again follows equation 25, where N now represents the total number of stimulus input elements over all neuron cells. This vector summation operation may be indicated in a general form by the following relation:

$$[X]_T \, [S]_T \; = \; \sum_{n}^{T} \, [X]_n \, [S]_n$$

where

$$[X]_T = \{[X]_1, [X]_2, [X]_3, \ldots\}$$

$$[S]_T = \{[S]_1, [S]_2, [S]_3, \ldots\}$$

and $[S]_1$ to $[S]_T$ form unique sets of higher order product terms.

Presented is a particular example of the commutative property in which the vector responses are summed over a set of 10,000 neuron cells each possessing an input stimulus field of 10,000 elements. Providing the higher order statistics representing all of the input elements are unique over all sets of neurons, the summed response characteristics are identical to one neuron possessing 100 Million elements within the stimulus field, said commutative property thereby permitting several million stimulus-response associations to be superimposed or enfolded onto the same correlation matrices within this body of cells. This configuration emulates particular well-defined cellular structures, indicating a potential "superneuron" structure within the cortex and cerebellum such as pertaining to the pyramidal cell complex.

## Layered Networks

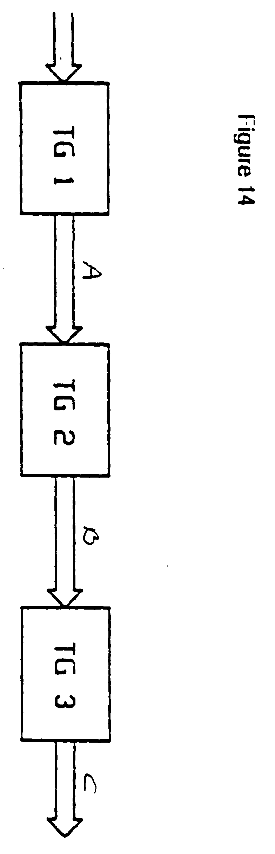

Figure 14 illustrates a layered network where TG represents a group of neurons and refers to a device or set of devices that perform a simple transform operation from on input stimulus field [S] to an associated output response field [R]. A layered network consists of a series of transformation TG1, TG2, TG3 in which the output response field from one group or layer (TG1) feeds into the input stimulus field of a higher layer (TG2). Any number of layers may be utilized to form more complex arrays of networks.

### Supplementary Disclosure:

Each group of cells within a layer enfolds a large number of stimulus-response associations, such that the neuron layer functions in a manner similar to a content addressable memory. on propagation of signals throughout multiple layers, responses generated by stimulation of lower neural layers propagate associations through to higher layers. For an example, in Figure 14 the stimulus fed in at A associates to response B in the first layer, which in turn associates to response C in the second layer, and so on. In this layered configuration, associations may bifurcate along separate neural pathways or recombine in any definable arrangement depending upon the interconnection structure and the encoded stimulus-response associations.

A second property of layered networks exists in the summation of response vectors. The "commutacive" property of neurons permits the response output of several neurons to be summed effectively producing a "superneuron" possessing greatly enhanced capabilities for stimulus-response pattern storage. Multiple layers may be employed whereby each layer performs a summation over the axonal processes (or generated responses) of previous layers, permitting greatly expanded numbers of stimulus-response associations to be encoded or enfolded on the same correlation set. The increase in information storage density by cascading neurons along a layer is proportional to the number of response vectors summed. For instance, performing a vector summation within the complex or Riemann (phase) plane for 1000 neuron cells of equivalent size will increase the number of patterns one can enfold by a factor of one thousand. This property is contingent upon the stimulus fields across all neuron cells following the property of uniqueness as described in the section pertaining to Commutative Properties of Neurons.

## Parallel Networks

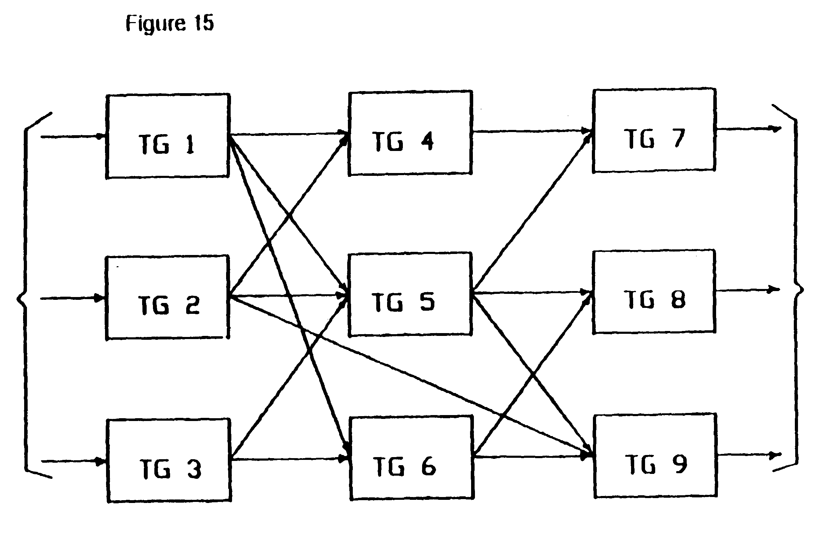

A parallel network as illustrated in Figure 15 may be formed in which layers within the network consist of multiple neurons or transformation groups operating in a parallel configuration. In this case the output response field may feed into any of the input stimulus fields of a subsequent layer in any interconnection or arrangement. Any combination of both layered and parallel transformation groups may be configured to form a highly complex array of interconnected neural elements.

**Supplementary Disclosure**:

The advantages of parallelism in neuron layers is evidenced again by the "commutative" property of neurons whereby the vector outputs from several cells positioned in a parallel array within a given layer are summed within a vector space. This vector summation effectively creates a "superneuron" whose characteristics as previously defined are identical to one cell possessing a stimulus field size equivalent to the size of stimulus fields summed over all neurons within the input array, facilitating information densities of extremely high order.

**Feedback Networks**

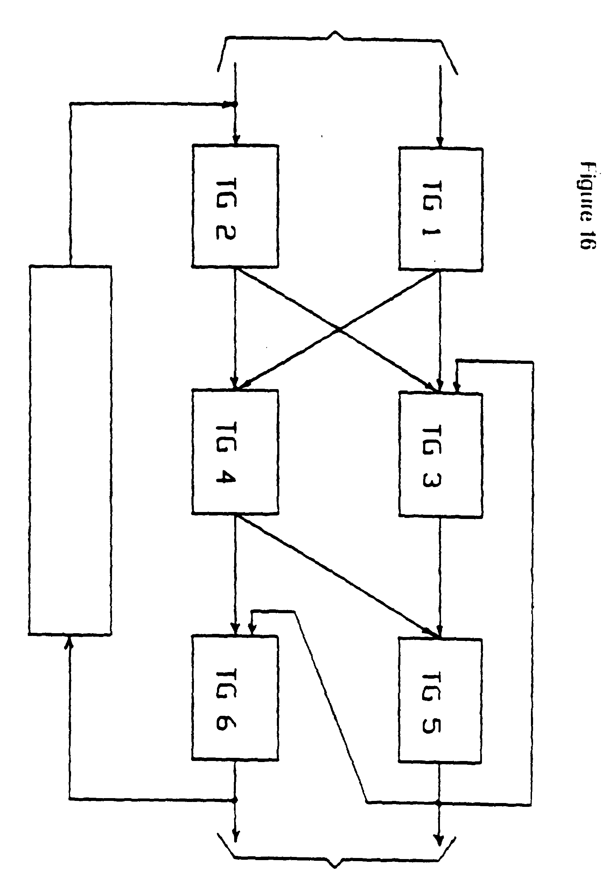

Figure 16 illustrates a system where the output response fields of neural elements within higher layers feed the effects back into input stimulus fields of neural elements within lower or earlier layers. Any configuration or arrangements of feedback systems may be employed. The neural device inherently provides feedback control for any situation in which the output response manipulates or modifies the local environment providing the input stimulus, (ie. feedback via environment). This concept may be visualized within a robotic control systems in which the input stimulus is axial position and rate sensors and the output response effects motor control. Any change in the response output (axis movement) modifies the input stimulus pattern thus effecting the subsequent generated response, and so on. It is expected that the above feedback mechanisms will significantly enhance the control capabilities within most applications of the holographic neural device.

**Supplementary Disclosure:**

Internal feeback or recurrent loops generated via the synaptic interconnections may also facilitate signal loops reverberating through enfolded stimulus-response associations. These recurrent loops will tend to stabilize to particular association pattern until an external stimulus effects the recurrent loop to assume a new state.

**Modifying or Applying Magnitude Component**

The form of the equations referred to earlier deal primarily with phase angle, having the magnitude component for the elements within the stimulus field set equivalent to unity. A magnitude component however may be assigned to each of these stimulus elements. This effectively assigns a "weighting factor" and determines the effective dominance of that element within the stimulus field in generating the output response.

**Sparse Matrix Techniques**

In some applications it may be desirable to eliminate some of the transformation elements within the correlation matrix [X] (equation 17). This effectively produces a matrix, some of whose elements will be null or 0, and will be referred to herein as a sparse matrix. This technique has the effect of reducing the resolution thereby increasing the deterministic error or fuzziness components within the generated response field. An advantage may be realized in that the number of transformation operations are correspondingly reduced (ie. reduces execution time).

**Supplementary Disclosure:**

**BINARY MODEL**

In the event that calculational simplicity is desired for reasons of either speed or hardware restrictions, this holographic process may be reduced or simplified to a binary system. Operational capabilities are significantly reduced, however simplifications are realized in that the encoding/decoding transformations may be performed entirely within a simpler scalar number domain. This simplification involves elimination of one axis within the phase plane thereby allowing information representation only at the 0 and $\pi$ phase orientations.

The above simplification to a binary system hence permits only sets of stimulus-response patterns consisting of binary (-1/+1,0/1, or 0/$\pi$) states to be encoded/decoded. All associated enhancements stated herein operate in the same manner for this binary system as for the previously defined complex system, considering know that only two phase positions are permitted in the representation of information.

## COMPARISONS TO THE BIOLOGICAL SYSTEM

In order to fully understand the operational characteristic and implications of this device, indicated are some significant similarities between the holographic neural process described herein and characteristics of the neurobiological system.

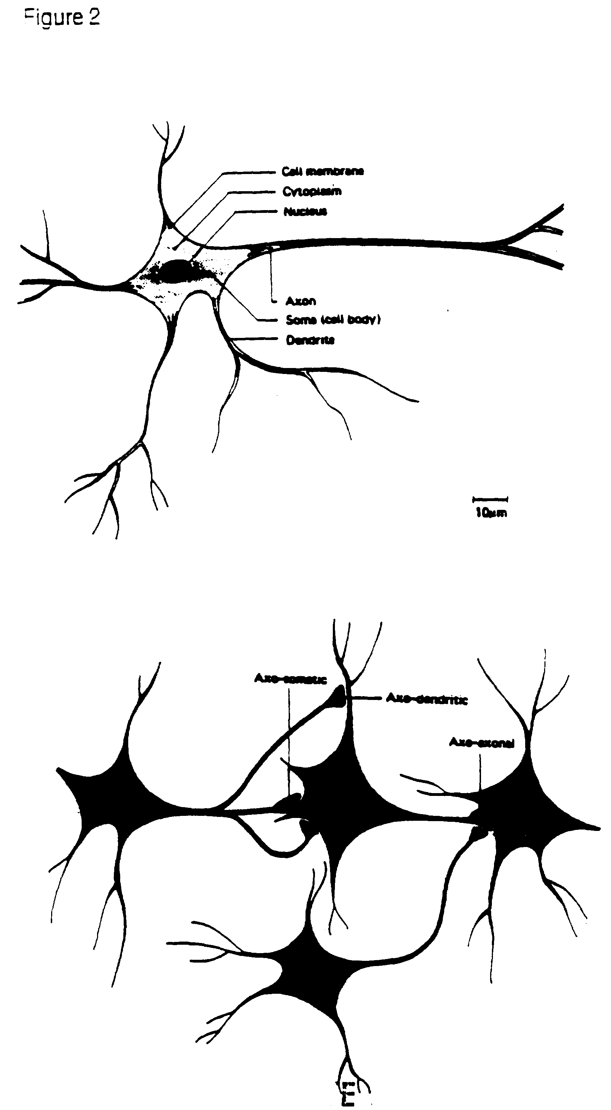

It is estimated that the human brain possesses in the area of 25 Billion neurons. Like all animal cells, each neuron is bounded by a cell membrane enclosing the contents of the cell - that is the cytoplasm (cell fluid) and the nucleus. The size and shape of these neurons vary widely, but the structural plan always contains certain elements (Figure 2): a cell body or soma, and the processes from this cell body, namely an axon (neurite) and usually several dendrites. The classification of these neuronal processes in terms of axon and dendrites is made on the basis of function.

The axon links the nerve cell with other cells. The axon of other cells terminate on the cell dendrites and also on the soma. Axons and dendrites normally divide into a varying number of branches after emerging from the soma. The junction of an axonal ending with another neuron cell is called a synapse.

The majority of neurons are connected to other neurons to form neuronal circuits or networks. the axons of a small number of neurons connect with the striated skeletal muscles, the smooth muscles of the viscera and glands and are termed afferent nerves. conversely, specialized nerve cells that response to certain changes in the organism or its environment transmit these responses to the central nervous system and are called receptors. Each receptor cell is specialized to respond to a particular form of stimulus, thus arises the important concept of sensory modality. Vision represents one form of modality, audition another and taste yet another. Stimulus perceived by these various sensory modalities form the basis of information which is processed and stored within the neuronal system.

Propagation of information within the biological neuron occurs in the following general manner; signals relayed in the form of pulse modulated waveforms received by the cell dendrites and soma and mediated via synaptic connections. conversely, in response to these signals received, the neuron generates an output pulse modulated waveform travelling via the axon and collaterals to subsequent layers of neuron cells. The general structure of the neuron with respect to the signal pathways is illustrated in Figure 4.

The theoretical basis described herein will be reiterated within the context of the following description, as a possible mechanism for information processing within the biological neuron. It is proposed that the individual neuron cell has the ability to enfold a massive amount of information in the form of stimulus-response associations onto its synaptic connections and emulates a similar encoding/decoding mechanism as defined herein.

As mentioned above, each synaptic connection within the dendritic structure of the neuron receives a plus modulated waveform characteristic of Figure 4. These waveforms may be illustrated in an abstract form with pulse frequency representing information and abstractly defining a vector orientation on a Riemann or phase plane. The stimulus waveforms received by the synaptic connections may be represented, as previously defined, by the following notation:

$$[S]=[\lambda^1 e^{i\Theta^1},\lambda^2 e^{i\Theta^2},...\lambda^N e^{i\Theta^N}] \qquad\qquad \text{eq. 52}$$

Similarly the output or response waveform learned by the cell in association to the above stimulus may be represented by the complex element $\gamma e^{i\Phi}$. It is proposed that the encoded response associations are read via a pathway separate from dendritic processes, possibly via the axo-somatic connections. Following the Hebb hypothesis, biological structures within the area of the synaptic connections are modified in response to stimulation implying a mechanism for information storage. No claims or explanation is presented with respect to the biological mechanism involved, however, it is proposed that the stimulus-response associations are learned in a general sense by the vector matrix encoding transform as defined previously and presented below

$$[X]=[\bar{S}]^T \cdot R \qquad\qquad \text{eq. 53}$$

The generated set of correlation values are presented in expanded form whereby information is encoded over a descretized time axis. For simplicity, only first order statistics are indicated in the following equations:

$$[X] = \begin{bmatrix} \sum_t h(\lambda^1,\gamma,t),e^{i(\phi_t-\theta_t^1)} \\ \sum_t h(\lambda^2,\gamma,t),e^{i(\phi_t-\theta_t^2)} \\ \cdot \\ \cdot \\ \cdot \end{bmatrix} \qquad \ldots \text{ eq. } 54$$

The correlation matrix forms a mathematical analogy of the synaptic connections defining a highly abstract representation for information storage. The theory proposes a mechanism whereby all learned stimulus-response associations are superimposed or enfolded upon the same storage medium within a phase domain, in this case biological structures in the area of the synaptic connection.

As mentioned previously, decoding or expression of a learned response may occur concurrently with encoding transformations. On stimulation of the dendritic synaptic connections by a series of externally pulse modulated waveforms, the assumption is made that the biological equivalence of the following complex vector inner product transformation occurs within the body of the cell:

$$R = \frac{1}{c} [S]^* \cdot [X] \qquad \text{eq. } 55$$

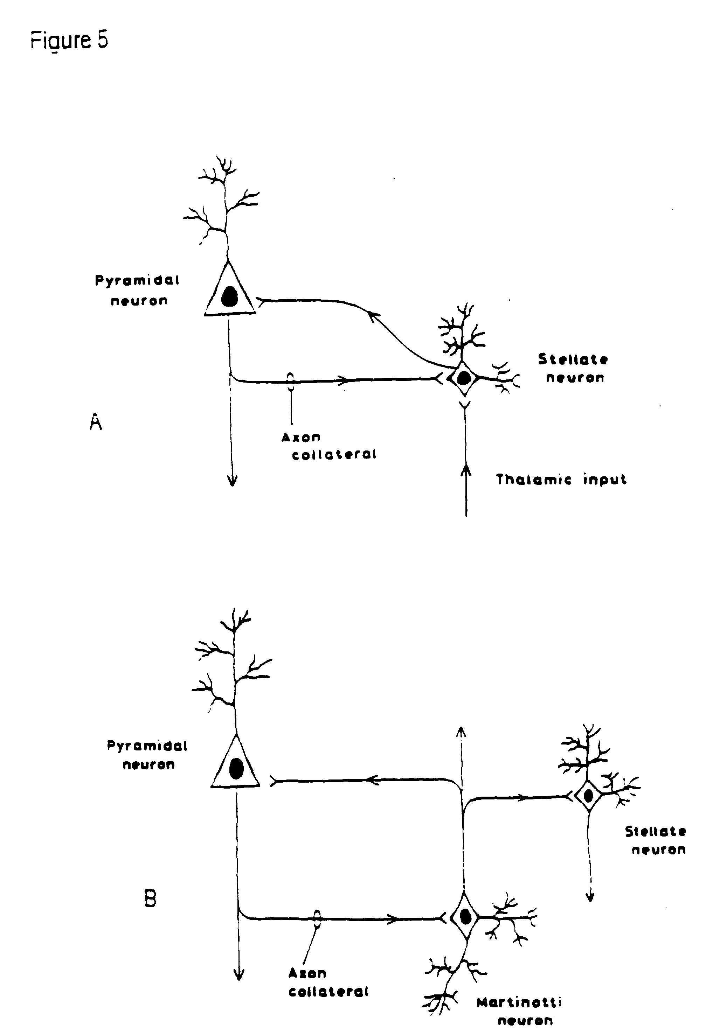

Again, the complex quantity R represents the generated response waveform travelling via the neural axon and collaterals to subsequent layers of neurons. The process indicates that relatively few cortical layers are required to perform highly intelligent associations and control actions. Supplementary Disclosure: It is surmised that in a very general sense the lover cortical layers within the neurological structure implement functions similar to sigmoidal preprocessing and generation of higher order statistics. The theoretical basis would indicate that the bulk of association and learning processes are performed within the highly bifurcated dendritic structure of the stellate and associated cells located in the cerebral cortex and cerebellum (Figure 5). The above forms the basis for a non-connectionist approach in which the mechanism of learning (enfolding of information) and expression is performed within the individual neuron cell.

This process suggests that the neuron cell despite its extreme complexity and structural variation may process information in a highly generic fashion. Specificity of function could be determined by the synaptic interconnection map, formed as the biological system undergoes maturity. The governing equations are ideally suited in this manner to generality, in that the algorithm permits a synaptic connection matrix of infinitely flexible form. the neural elements may be structured to facilitate any permutation of cross association between various form of sensory modalities and motor effector responses. It may also be illustrated that a very close isomorphism exist between the mathematical basis and the general structure/external signal processes of the biological neuron (Figure 4). Another operational feature of the process is that neural elements operate optimally in a completely asynchronous fashion. In other words, generality of operation is maintained in that no coordination or timing considerations are required between distinct neuron cells. Extensive simulation of the holographic theory illustrates that highly complex learned associations may be extracted from the neural system upon traversing a single layer.

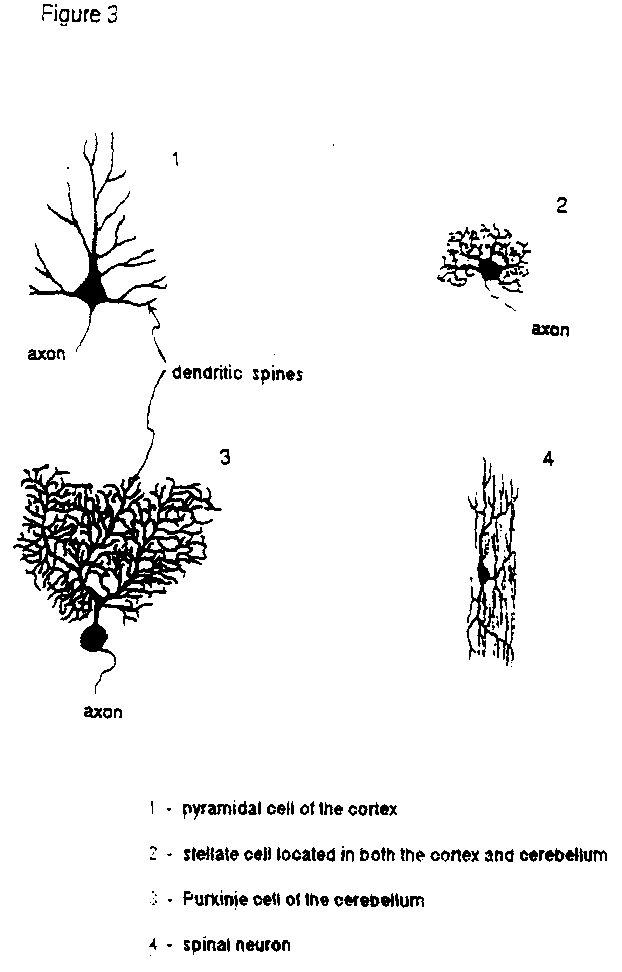

As mentioned previously, there exists a wide structural variation between different classes of neuron cells within the central nervous system (Figure 3). For an example, stellate and Martinotti cells within the cerebral cortex possess a widely bifurcated dendritic structure and an internal microtubular arrangement indicating a possible mechanism for encoding/decoding as defined within the fundamental holographic process. The principal cell of the cortex, the Pyramidal cell, displays few dendritic arborizations however a very large number of synaptic spines over the surface of these dendritic processes. This sort of structure is also characteristic of the principal neuron of the cerebellum, namely the Purkinje cell. Another third group of neuron cells possess quite a different structure, these being characteristic of spinal neurons whereby no defined axonal process exist, however, a plurality of dendritic-like arborizations extending from the cell receiving a plurality of inputs and generating a plurality of outputs.

The holographic neural process as defined involves several important precursors and novel implications that reflect a possible role in each of the above variant types of neuron cells. One of the principal requirements again involves the fundamental concept of symmetry. As noted in the section pertaining to higher order statistics, the ideal symmetrical state may be achieved through expanding input stimulus fields to higher order statistics. The bulk of visceral and external sensory inputs are transmitted via pathways within the corticospinal and spinocerebeller tracts. These raw signals unmodified would most generally display highly non-symmetrical distribution characteristics. Spinal neurons possess the structure illustrated Figure 3, indicting extensive arborizations for both input/output of signals having no defined axonal process. This neuronal structure could facilitate a modification of global input stimulus patterns whereby all forms of sensory modalities may be expanded to higher order product (i.e. higher order statistics as efferent information propagates along the spinal column). A process of this type would inherently transform stimulus distribution characteristics into the ideal symmetrical form prior to transmission into cortex and cerebellum neural structures.

The cortex contains principally three types of neurons: stellate cells, Martinotti cells and pyramidal cells. The intercortical circuits defining the interconnections of processes from these cell types are reasonably well known, however little is known regarding specificity of function. Referring to Figure 5, stellate cells receive signals originating from corticospinal tracts primarily via the thalamic system. The axonal process from the stellate cells synapse largely upon the synaptic spines of proximal pyramidal cells. These pyramidal cells, being the principal cell type of the cortex, have axonal processes terminating at all levels of the cortex, and extending down the corticospinal tract terminating upon motor neurons along the spinal cord. Martinotti cells operate primarily in a feedback mode receiving inputs from axons of pyramidal cells generating an output signal terminating upon dendritic processes of stellate and pyramidal neurons along more superficial layers of the cortex. Given the characteristics of the holographic process and the general structure of cell types, one may define a role or distinct separation between functionality for each of these cell types.

Again, referring to the section pertaining to the "commutative" properties of holographic neurons, this defines a property whereby the vector summation of resonse outputs expressed over a plurality of encode/decode neurons may be executed, effectively producing a "superneuron" possessing greatly enhanced capabilities for information storage. On investigation of the above structure and intercortical pathways associated with the stellate and Martinotti cells it is evident that these cell types are ideally suited for execution of the encoding/decoding operations as defined within the principal holographic method. Pyramidal cells have a structure and intercortical connections suited for execution of the vector summation over proximal stellate and Martinotti cells thus performing an operation analogous to the "superneuron" process. This holographic model of operation indicates that one pyramidal cell, in association with the supporting proximal stellate/Martinotti neurons, is capable of enfolding significantly greater tahn $10^8$ in the area of one billion stimulus-response associations onto its correlation set (i.e. synapses of proximal stellate/Martinotti cells). Given that the above entails 20-40,000 stellate/Martinotti cells and one pyramidal cell forming a very small percentage of the total cell population, the holographic process defines a mecnanism by which a structural embodiment resembling features of the central nervous system could function at a very high level of complexity.

## MEMORY CAPACITY AND RATE OF PROCESSING

The operational characteristics of a single pyramidal cell complex is determined below applying the holographic theory, having similar characteristics for smaller scale systems verified by Monte Carlo simulation. This example of cortical structure and related storage/processing capabilities is based on the pyramidal cells of Betz located in the motor cortex. These pyramidal cells execute direct control in the innervation of specific motor neurons. Current study indicates that this type of pyramidal neuron contains up to 100,000 synaptic spines receiving inputs from axonal processes of both proximal and distal stellate/Martinotti cells. The number of stimulus-response patterns that may be enfolded onto a single pyramidal cell complex is determined below applying the following assumptions:

(i) the proximal stellate/Martinotti cells receive on average 40,000 axo-dendritic synaptic inputs;

(ii) the stimulus field inputs of proximal neuron cells have been transformed into ideal symmetrical form in expansion to higher order statistics;

(iii) the set of higher order statistics or input signals are largely unique across all dendritic inputs to the group of stellate/Martinotti cells;

(iv) the number of stimulus-response associations enfolded are such that deterministic "fuzz" generated on expression to a learned stimulus association is on average ± 2% of full scale (absolute).

Applying the commutative property of neurons and a configuration which represents the pyramidal complex as executing a "superneuron" process, exhibiting properties substantially equivalent to one neural element containing the following number of synaptic inputs:

100,000 dendritic spline inputs to pyramidal cell x

40,000 synaptic inputs per stellate/Martinotti cell

= 4.0 Billion higher order statistics within the

pyramidal cell complex

Extensive computer simulation applying Monte Carlo techniques have shown that the error relation of equation 25 in invariant to the number of higher order statics fed into the neural element or neuron complex. Applying this error relation, the number of stimulus-response associations that may be stored within a single pyramidal neuron complex is:

$$P = N \left[ \tan(.02 \ \pi \ \vee \ \bar{8}) \right.$$

$$= 710 \text{ Million stimulus-response associations} \qquad \text{eq. 56}$$

Accounting for the entire set of higher order statistics, each stimulus-response association corresponds to 4 Billion elements of information (N), therefore the content of information encoded within the series of stimulus-response associations is:

$$= P \text{ x } N = 4 \text{ Billion higher order terms x } 710$$

Million stimulus-response patterns

$$= 3 \text{ x } 10^{19} \text{ elements of information} \qquad \text{eq. 57}$$

In a practical sense one may assume that an element of information represents one analog value descretized to a resolution of 256 levels. This information element may be represented by one byte within a conventional computer memory. Applying the holographic theory, approximately $3 \times 10^{\underline{19}}$ elements (bytes) of information in the form of stimulus-response associations may be encoded into one neuron complex of a structure resembling the pyramidal cell of the motor cortex. upon stimulation via the dendritic synapses, the characteristics of the above neuron are such that the input stimulus field is transformed through the above accumulated mass of information, issuing a response in a near instantaneous fashion.

To illustrate the effective processing speed, a comparison is performed with the standard linear search technique. Within all linear search methods images to be recognized must be individually stored and compared against pattern prototypes in a sequential manner. Matching algorithms classify the input on a best fit approach. In general, pattern elements may be represented within an N dimensional orthogonal space. The elemental operation within the representative linear search algorithm computes the difference along the dimensional axis between the input pattern and a single reference prototype. The summation of these distances along each axis in N space is proportional to pattern variance in which each of the elemental terms are computed as follows:

$$(a^k - b_t^k)^2 \qquad \text{eq. 58}$$

where

$a^k$ - element k of input stimulus field

$b_t^k$ - element k of prototype pattern t

The above operation may be performed to generate a set of variance terms for each pattern prototype. These variance terms are employed in some functional relationship $F_t()$ to generate a desired response or decision, i.e.:

$$(\sigma_1^2 \, , \, \sigma_2^2 \, , \, \sigma_3^2 \, , \ldots)$$

$$\text{where output} = \sum_t F_t \sigma_t^2 \qquad \ldots eq. \; 59$$

The holographic process performs a roughly similar function to the linear search above however the operation characteristics are significantly more computationally efficient. The elemental vector transformation providing a corresponding function to the scalar difference solution presented previously in equation 58 is as follows:

$$e^{i(\zeta^k - \Theta_t^k)} \, e^{i(\Phi_t)} \qquad eq. \; 60$$

By representing information as complex vector orientations, the following phase translation properties are realized, whereby; as any input stimulus element approaches the corresponding prototype element $(\zeta^k \Rightarrow \Theta_t^k)$ the generated phase in the response is translated into the desired or learned response $(\Phi_t)$. A second property resulting from this vector representation permits the above exponential terms for each element across all reference prototypes, to be convolved onto one correlation element $(x_k)$. A single transformation through the correlation element as performed by the holographic method is given as:

$$s_k^* \cdot x_k = e^{i\zeta^k} \sum_t^{7.1 \times 10^8} e^{i \, (\Phi_t - \Theta_t^k)} \qquad \ldots eq. \; 61$$

In consideration of the pyramidal cell example, the above transformation would perform a function mathematically analogical to $7.1 \times 10^8$ comparisons within the linear search method (i.e. equation 58). At the biological level, illustrating a comparison with conventional processing means, one may conservatively estimate that the response cycle time for the neuron cell is 100 milliseconds. The effective processing speed of a single pyramidal cell complex may be estimated assuming an information storage capacity of $3 \times 10^{19}$ bytes as determined above. In executing a response generation within 100 milliseconds using a linear search without reduction or elimination of data, the following number of comparisons per second are required:

$$3 \times 10^{19} \text{ data elements / 100 ms response period}$$

$$= 3 \times 10^{20} \text{ comparisons / second}$$

It is a fair assumption that one supercomputer could be capable of performing 100 Million comparisons per second. For a performance comparison, the above structure suggests that one would require approximately $3 \times 10^{12}$ supercomputers executing a linear search to approach the information processing capabilities of a single neuron complex, processing a structure similar to the human pyramidal cell of the cerebral cortex.

## A CONTROL PARADIGM

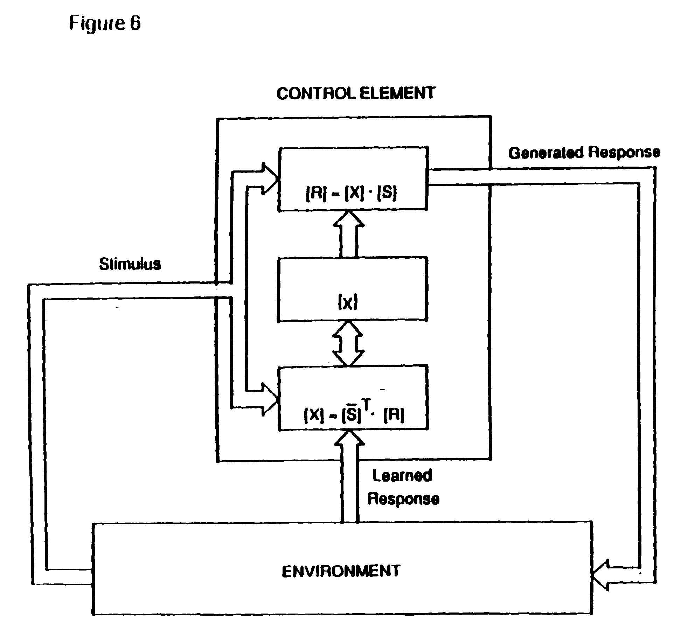

One may regard the neural process as a new control paradigm. The representation of this control system may be illustrated in a conventional manner (Figure 6) with multivariable input, control output, and response output processes. This black box approach would define the fundamental control element. As in any control system multiple elements may be configured in any definable manner to execute a particular function. The principle difference with conventional processes lies in the capability and the manner in which this control element performs its function.

To provide an analogy to state space control theory, the control element permits direct encoding or mapping of multivariable input states onto a control output. The mapping scheme would require no linear dependence between sets of input states and output. The mapping scheme would require no linear dependence between sets of input states and output control values. As confirmed through simulation, the system displays a large immunity to input distortion such that a wide region in state space adjacent to the mapped input state will result in only slight distortion of the generated output. This immunity to input noise is performed without employing any mechanism of feedback.

On a somewhat more abstract level such stimulus-response mapping defines an area of influence or "hyperellipsoid" within the N dimensional state space. One may manipulate both the geometry and size for these mapping zones by explicitly defining the Nth order statistics (Hermitian preprocess operations) and associated magnitude quantities. Employing these methods, generalizations formed during the learning process are intimately controllable.

Concurrently with this response mapping or learning, the system may issue a control action as a transformation of the input state through the accumulated state space mapping. The input state is transformed through all of the enfolded mappings in an inherently parallel manner as discussed earlier. Each of these mapping issues a response vector whose degree of dominance convolved within the generated output is proportional to the degree of closeness to the input state. This state space comparison however is not directly applicable to conventional control theory in that the dimensional axis are not defined in terms of real values within a Euclidian space, but vector orientations within a multidimensional phase space.

One could envisage a system in which the control elements dynamically learn or modify a state space mapping and employ variables such as rate of learning and memory profile. such a control element would execute environment feedback in the following manner. A Subset from the external field generating a stimulus is transformed through the control element issuing a response. This response action directly or indirectly effects the environment thus modifying the external stimulus fed back into the control element. This feedback process would continue in a closed loop fashion between the external environment and the control element. Concurrently while the above iterative feedback process is functioning the encoding or learning transformation modifies the stimulus-response state space mapping in response to the changing external environment.

The control element mapping embodies abstract representation of the external environment and its influence within this environment. The operation of the above system employing environmental feedback, even within a relatively simple framework, may preclude a reductionist analysis and appears to evolve a control system of near infinite complexity.

## BRIEF DESCRIPTION OF THE DRAWING

Embodiments of the invention will now be described by way of example only, with reference to the accompanying drawings and tables wherein:

Table 1     represents the probabilistic standard deviation error within the response as a function of the number of encoded patterns.

Table 2     list of phoneme codes.

**Supplementary Disclosure**

Table 3     lists the number of unique sets of higher order statistics as a relation of both the order of the statistic and the size of the input stimulus field.

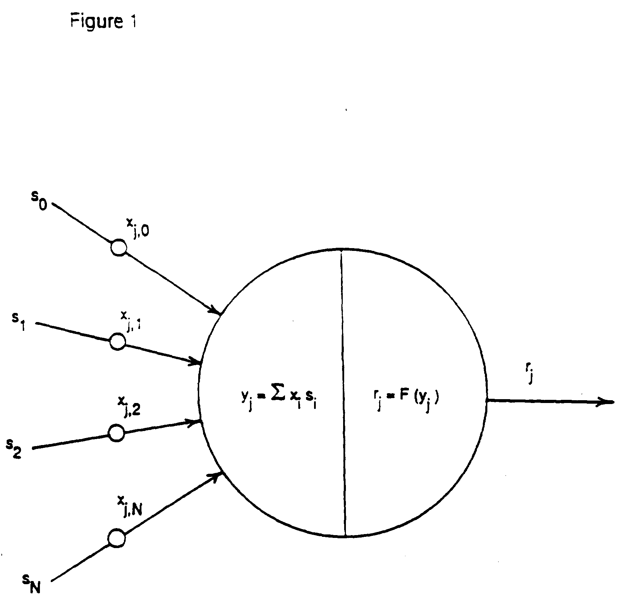

Figure 1     illustrates the general components of a neural element as standard within current gradient descent models.

Figure 2     illustrates in general the components of the biological neuron.

**Supplementary Disclosure**

Figure 3     illustrates the general structure of a variety of biological neuron cells.

Figure 4     illustrates in general the signal processing characteristics of the biological neuron and sigmoidal response characteristics.

**Supplementary Disclosure**

Figure 5     illustrates the various neuronal connections and internal neuronal loops within the cerebral cortex.

Figure 6     illustrates environmental feedback through a neural control element

Figure 7     illustrates a simple embodiment of a hardware configuration for the artificial neural device for one neural element.

Figure 8     illustrates in general an example of a hardware configuration for a visual to auditory artificial neural device.

Figure 9    illustrates a digitized visual image represented by pixels within the visual field.

Figure 10   illustrates a digitized sonogram for auditory input.

Figure 11   illustrates the application of an artificial neural system within an automatically controlled transportation vehicle.

Figure 12   illustrates patterns that correspond to incremental movements of a robotic system over a given time frame.

Figure 13   illustrates a decision tree.

Figure 14   illustrates a multilayered neural network.

Figure 15   illustrates a layered parallel neural network.

Figure 16   illustrates a feedback neural network.

## Supplementary Disclosure

Figure 17   illustrates an embodiment of hardware configuration for the artificial neural device within a single processing node.

Figure 18   illustrates an embodiment of a 16 node hypercube configuration for link communication between processing nodes.

Like parts will be given like number throughout the figures

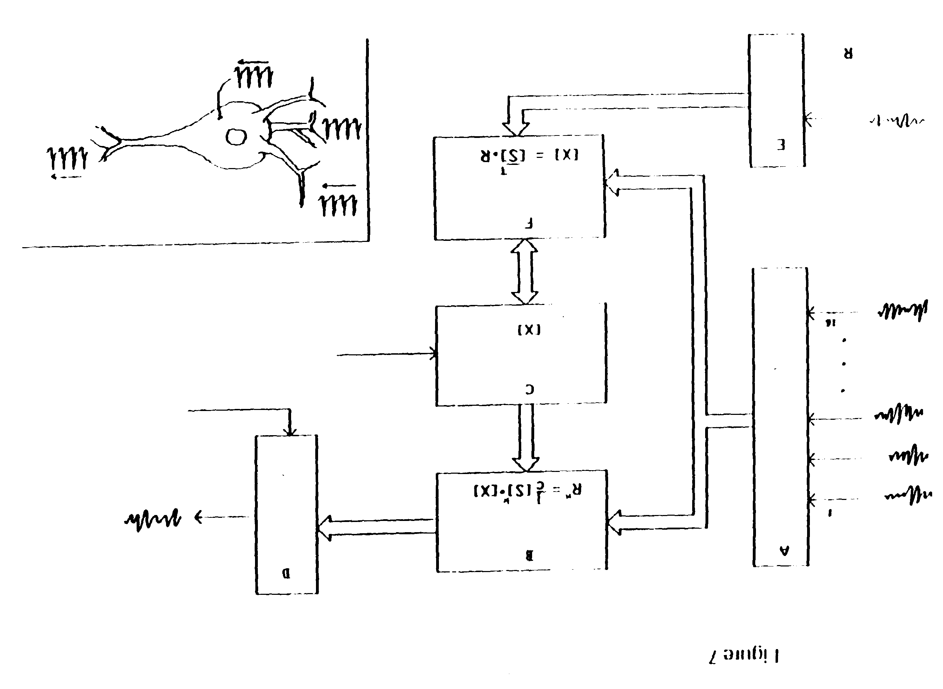

## DESCRIPTION OF THE PREFERRED EMBODIMENTS ELEMENTARY MODEL (FIGURE 7)

An innumerable variety of physical configurations or hardware embodiments of the neural process described herein may be conceived. The intent is to illustrate examples of a physical embodiment of an artificial neural device employing the described holographic neural process. The hardware embodiment of this device however is not limited to any particular type of device configuration or information storage or processing medium.

The hardware embodiment is illustrated in Figure 7. In this example, sixteen stimulus inputs are shown. It is expected that analogue signal multiplexing techniques would be employed to increase the number of elements within the stimulus field [S] to any desired number. The input signals are oscillating waveforms having vector phase information represented by frequency and vector amplitude represented by signal amplitude. This signal waveform is generally similar to the neurobiologically generated impulse believed to transmit information. Employing the above mechanism for information transmission (oscillating wave or pulse modulated signal) also realizes an advantage in that only one signal line is required to transmit both phase angle and magnitude components of informtion.

During an encoding operation the input stimulus field elements (1 to 16) are transformed into a digital representation of phase angle and magnitude via the demodulating circuit (A). A separate phase and magnitude component is determined for each of the input stimulus elements. The associated output response for encoding is read in via demodulating circuit (E) and similarly converted into a digital representation of the phase angle and magnitude components. The digital encoding unit (F) performs the complex vector transformation as defined within equation 13 to encode the stimulus-response pattern into storage unit (C). Unit (C) stores the encoded information and represents the axo-dendritic synaptic connections.

During a decoding operation the input stimulus signal elements are transformed into a digital representation of phase angle and magnitude via the demodulating circuit (A). As above, separate phase and magnitude components are determined for each of the input stimulus field elements. The decoding unit (B) reads the binary representation of the input stimulus signals and the corresponding encoded vector elements [X] from unit (C). The appropriate elements of [X] may be determined via an address enable IN bus controlled by external logic. Unit (B) performs the decoding operation defined by equation 27 using the input stimulus elements [S] from unit (A) and the encoded elements [X] from unit (C). The output response is transmitted to the frequency modulator unit (D) which converts the binary representation of the vector or complex number into a waveform with frequency representative of vector phase angle and signal amplitude representative of the vector magnitude.

Several of these neural elements may be connected together in any configuration to form an array of neural elements operating in a simultaneous or massively parallel fashion. The following illustrates six ANS devices that may be derived from the process referred to earlier. A virtually unlimited number of devices and applications may be conceived, however the purpose here is to illustrate the range of applications to which the ANS device as described herein may be employed.

**Pattern to Voice Transcription Device (Vision Recognition)**

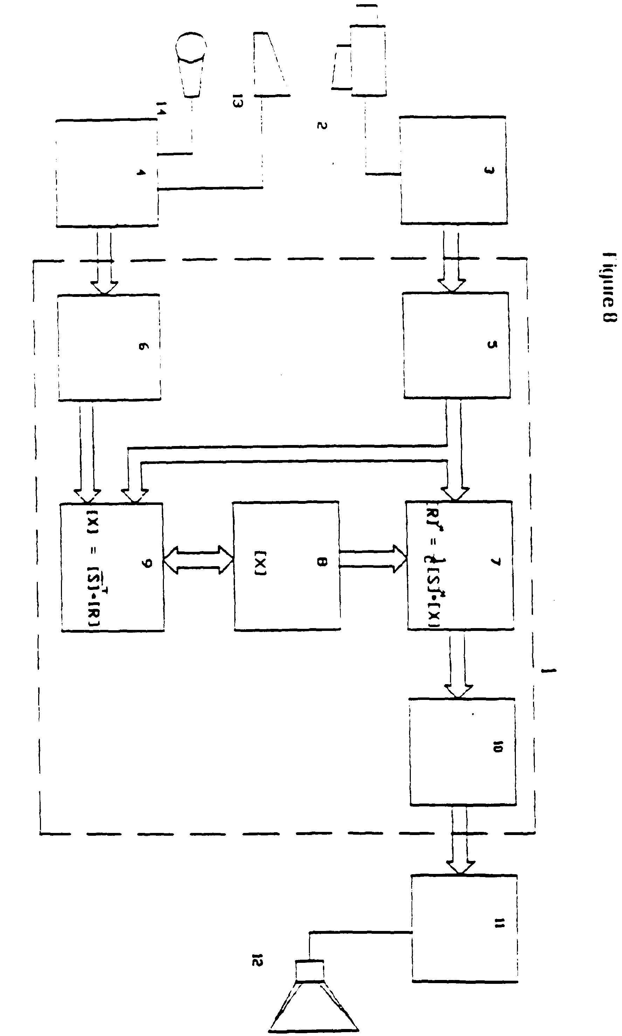

A vision recognition device embodying the invention as described above is schematically depicted in Figure 8. The visual recognition device comprises conventional hardware for capturing and input of the visual data to the encoding/decoding neural system. This device 1 employs the use of a single transformation group (TG) to perform the visual to auditory conversion.

The hardware requirements for the device 1 are as follows:

(a) video camera 2 capable of generating a standard analog video output;

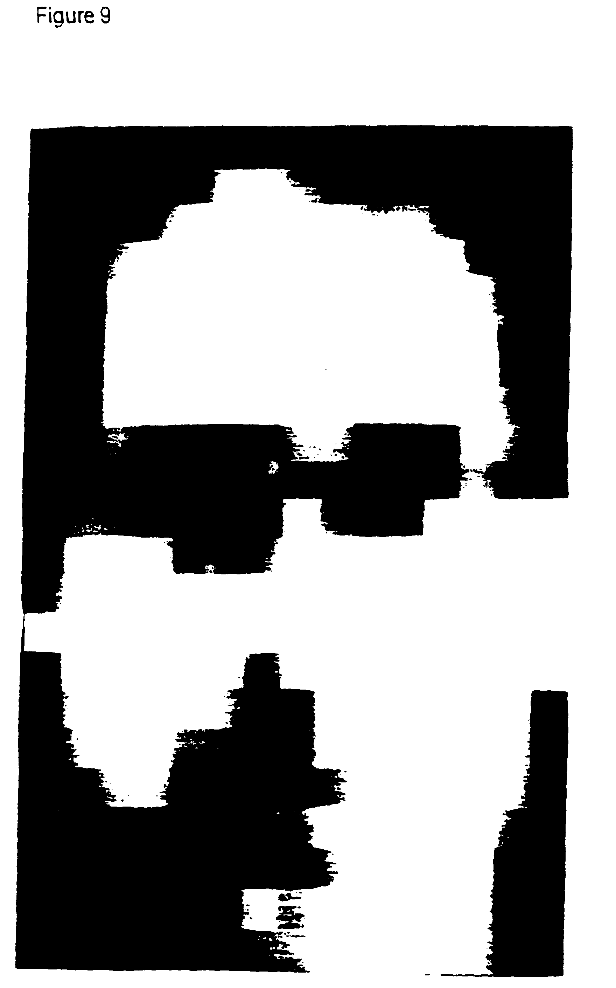

(b) a digitizing device such as a video signal digitizer 3 capable of receiving analog video signal input. This digitizing device 3 separates video scan lines into an array of "pixels". In one application consider a pixel field of 64 by 64. Each pixel is represented by a value which is proportional to the average intensity of the scan lines within that pixel field, as shown in Figure 9.

(c) a neural processor capable of storing and processing data or signal information. The artificial neural system may be embodied by any physical hardware (specialized or general purpose) configured to perform the required process as described earlier.

In order to simplify this example one may assume that a series of phonemes comprising the output response will be encoded and the hardware handles the translation from phoneme to spoken output. Each spoken word consists of a list of phonemes. Approximately 36 phonemes are required to verbalize the majority of phrases within the English language. Using the artificial neural system described herein the visual data stream generated by the video signal digitizer 3 (series of pixel values) is translated to a verbal output (list of phonemes) at speaker 12.

The encoding/decoding procedures performed within the process are illustrated as follows:

**Encoding**

The video digitizing equipment 2 generates for example a series of 4096 bytes which represents a field 64 by 64 pixels for visual input. The pixel stimulus input values are translated into vector phase angles 5 such that they fall within the range of 0 to $2\pi$. The visual input field shall be represented by [S].

The corresponding output response 10 for that visual stimulus is either a spectral harmonic representation for the spoken word, or an equivalent list of phonemes each defined by a numeric representation; the later shall be illustrated for simplicity. For example, assuming that the video camera 2 is focused on a picture of a house and the response is to be utterance of the word HOUSE. This word may be reconstructed with 4 phonemes: h , o , u , s. The representation for these four phonemes must be encoded into Memory and neural processor 1. A total of 36 phonemes (See Table 2) may be chosen to make up the sound therefore a selection mechanism must be determined. For convenience, two base 6 numbers have been chosen to represent the choice of phonemes (i.e. $6^2 = 36$ possibilities). Each base six number is represented by two elements in the output response field [R]. Allowing for a capacity for 4 phonemes to be encoded requires 8 elements within the output response field [R].

Again, in representing a base six digit, the complex plane must be divided into 6 regions, each section separated by 60 degrees, for example, with boundaries defined t:

0 - $\pi/3$
1 - $2\pi/3$
2 - $\pi$
3 - $4\pi/3$
4 - $5\pi/3$
5 - $2\pi$

Therefore, for the response h , o , u , s the encoded output would consist of the following:

$$[Y] = (\pi, \underbrace{\pi/3, \pi/3}_{h}, \underbrace{4\pi/3}_{o}, \underbrace{2\pi, \pi/3}_{u}, \underbrace{5\pi/3, \pi/3}_{s}) \qquad \ldots \text{eq. 62}$$

The actual phoneme response could be input via keyboard 13 and the conversion to a set of complex values (phase range 0 to $2\pi$) performed. The input stimulus [S] and encoded response [R], transformed into arrays of vectors by units 5 and 6, compromise the data fed into the neural system encoding processor 9. Sigmoidal preprocessing and expansion to higher terms is performed on input stimulus data. A correlation matrix [X] is generated and stored in volatile memory 8 accessible to the neural decoding and encoding processors 7 and 9. The stimulus-response patterns are encoded into the correlation matrix [X] via the neural processor 9 performing the following operations. These steps are performed for each element $(x_{j,k})$ within the correlation matrix [X]:

1. Read the phase [Ph] and magnitude (Mag) components for each element of $(x_{j,k})$ and convert into real (Re) and imaginary (Im) parts. Store the converted values in a data buffer within the neural encoding processor 9.

2. Read the phase angle (Ph) component for element $(s_j)$ from the input stimulus array [S], and element $(r_k)$ from the encoding response array [R]. Place these values in buffers within the neural encoding processor 9.

3. Perform sigmoidal preprocessing and expansion to higher under terms as defined in sections pertaining to Enhancements of Invention.

4. Perform the following logical operations within the neural processor 9:

$$Re(x_{j,k}) = COS\,[Ph(r_k)\text{-}Ph(s_j)] + Re(x_{j,k}) \qquad \text{eq. 63}$$

$$Im[x_{j,k}] = SIN[Ph(r_k)\text{-}Ph(s_j)] + Im(x_{j,k}). \qquad \text{eq. 64}$$

5. Determine the phase angle (Ph) and magnitude (Mag) for the j,k component of [X] by employing the following operations:

$$Ph(x_{j,k}) = \arctan\left[\frac{Im(x_{j,k})}{Re(x_{j,k})}\right] \qquad \ldots \text{eq. 65}$$

Note that $Ph(x_{j,k})$ must be adjusted to the correct quadrant within the complex plane.

$$Mag(x_{j,k}) = [Re(x_{j,k})^2 + Im(x_{j,k})^2]^{\frac{1}{2}} \qquad \text{eq. 66}$$

Store the phase and magnitude components of the above elements of [X] back into volatile memory 8.

The above illustrates the encoding portion of the process. This process may be repeated to encode a plurality of stimulus/response patterns into the correlation matrix [X]. Note that the neural processor 9 should optimally be configured to perform the conversions (step 3 to 5) in as parallel a fashion as possible. A matrix processing device or configuration within the neural processor is therefore desirable. The above operation may of course be performed sequentially as in conventional general purpose computing devices, however, processing time may become an inhibiting factor.

## Decoding

A similar operation of encoding is performed on decoding or associating subsequent stimulus input to a response. A video signal is generated by video camera 2 and feeds input to video signal digitizer 3 separating the image into a 64 by 64 pixel array. Again the pixel values are proportional to the gray scale or intensity level. These pixel values are converted into vectors 5 (i.e. information represented by phase angles oriented between 0 and $2\pi$). This stimulus field shall be represented as [S]* and elements of [S]* translated into phase angles are read into volatile memory accessible to the neural decoding processor 7. The following operations are performed on the complex elements within the correlation matrix [X] and the elements within the stimulus field [S]*.

1. Read the phase (Ph) and magnitude (Mag) component for complex elements $(x_{j,k})$ of the correlation matrix [X]. Store the above values in a data buffer within the neural decoding processor 7.

2. Read the phase angle component of elements $(s^*_j)$ from the stimulus input field [S]* and store the value in a data buffer within the neural decoding processor 7.

3. Perform same sigmoidal preprocessing and expansion to higher order terms as defined in step 3 of encoding process.

4. Each element $(r^*_k)$ within the output response field [R]* is then evaluated within the neural decoding processor by performing the following operations. Note that the following is a summation over all j=1 to N elements of $x_{j,k}$ and $s_j^*$.

$$\mathbf{Re(r^{\bullet}_k)} = \frac{1}{N} \sum_{j=1}^{N} \mathbf{Mag(x_{j,k})} \ X \ \mathbf{COS} \ [\mathbf{Ph(s^{\bullet}_j)} - \mathbf{Ph(x_{j,k})}] \ \mathbf{eq. \ 67}$$

$$\mathbf{Im(r^{\bullet}_k)} = \frac{1}{N} \sum_{j=1}^{N} \mathbf{Mag(x_{j,k})} \ X \ \mathbf{SIN} \ [\mathbf{Ph(s^{\bullet}_j)} - \mathbf{Ph(x_{j,k})}] \ \mathbf{eq. \ 68}$$

The above steps must be performed (i.e. step 1 to 3) for each of the output elements within the response field [R] (k = 1 to 8).

5. Following the above summation operation, each element of the output response field [R] is converted by the neural processor into the corresponding phase and magnitude values as follows:

$$\mathbf{Ph(r^{\bullet}_k)} = \mathbf{arctan} \left[ \frac{\mathbf{Im(r_k)}}{\mathbf{Re(r_k)}} \right] \qquad \qquad \mathbf{... \ eq. \ 69}$$

Noting that an adjustment must be made for the principle angle.

$$Mag(\ r^*_k\ ) = [Im(r_k)^2 + Re(r_k)^2]^{1/2} \qquad \qquad eq. \ 70$$

The phase component $Ph(r_k)$ contains the output information (phoneme identification) while the magnitude component provides a value statistically proportional to the degree of recognition.

The above output response elements for [R]*, are read by an output stage 10 which converts each of the phase values $Ph(r^*_k)$ into a base 6 number, employing the following conversion formula:

$$\mathbf{value} = \mathbf{INT} \left[ \frac{\mathbf{3Ph(r^{\bullet}_k)}}{\pi} \right] - \frac{1}{2} \qquad \qquad \mathbf{... \ eq. \ 71}$$

Note that this illustrations pertaining to scalar stimulus and response signal conversion to and translation from phase angles is a specific implementation or functional detail being entirely modifiable depending upon specific application. The above illustration represents one example out of an unlimited variation of conversion or translation procedures that could be conceived.

7. The base six number values identifying the output phoneme each consist of two digits (output elements). These response values are converted into the corresponding auditory response employing a conventional hardware device for generation of auditory speech output 11.

The above provides a very simple illustration of an application for the neural device employing only a single transformation group. This illustration transforms the input sensory modality of vision into an effector response of audition. These visual patterns may be of any form or degree of complexity (i.e. face, vehicle, any object).

As described in step 3 of both the encoding and decoding processes, a further embodiment related to the memory storage capacity may be performed by expanding both the input stimulus field on encoding and on decoding to higher order terms (i.e. Hermitian matrix form). The Hermitian matrix would be evaluated within the neural processor by the following expansion operation:

$$[H] = \overline{[S]}^T \cdot [S] \qquad\qquad eq.\ 72$$

where $\overline{[S]}^T$ is the complex conjugate of [S].

The resultant effect of the above operation is that the stimulus-response storage capacity could potentially exceed several Million associations prior to onset of excessive misclassification error. The above operations would again optimally be performed by dedicated matrix processing hardware within the neural processor.

## Voice to Test Transcription Device

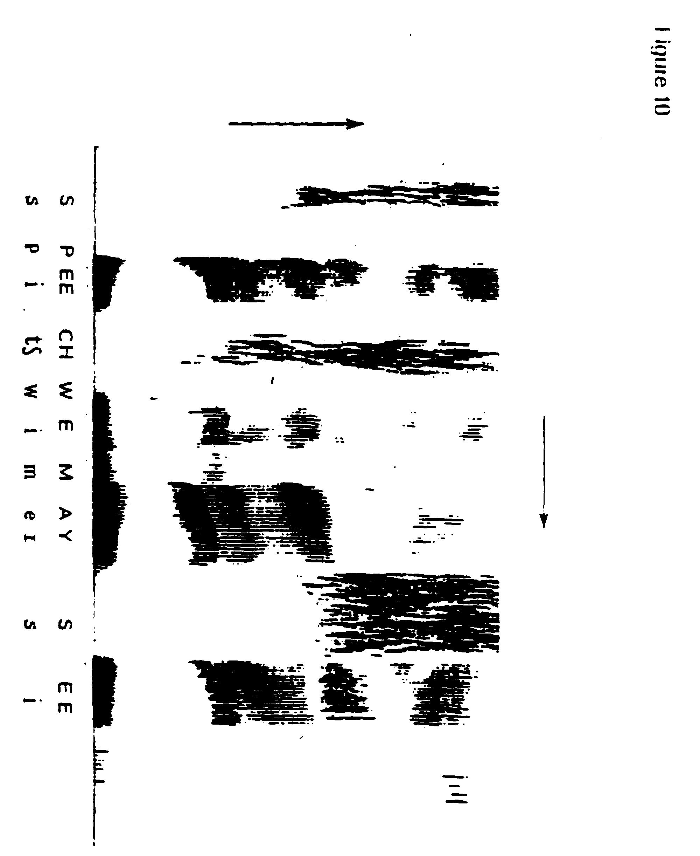

Voice to Text Transcription is another example of the transformation of one form of input sensory modality (i.e. hearing) into an effector response (i.e. transcription). This neural device application would embody encoding and decoding of a voice input stimulus to an associated type or ASCII output. In this application the input stimulus field would consist of a digitized sonogram. A sonogram is one means of expressing auditory data and indicates intensities of harmonic content over a given time axis. An example of a sonogram is presented in Figure 10. Much like a digitized visual input field, a sonogram may be divided into a pixel field, with frequency along the vertical axis and time along the horizontal.

For this example, assume a resolution for the auditory input along 32 frequencies and 32 time steps. The output field will consist of 12 elements. These response elements may represent ASCII characters in a similar fashion as presented in the previous example (two base 6 numbers per character).

The stimulus input is therefore the spoken word and the output a typed response. For an application as specified above and assuming a distribution which may be ideally symmetrized, the number of stimulus/response patterns which may be encoded prior to excessive misclassification error is given by:

$$P = N[\tan(Er\pi\sqrt{8}]^2$$

$$= 180 \qquad\qquad eq.\ 73$$

where

P =     number of stored patterns  
N =     number of elements in stimulus field  
Er =    response error (5% full scale assumed)

If expansion to second order statistics is employed (i.e. Hermitian preprocessing) the number of associations that may be encoded exceeds 200,000. This value is significantly greater than the number of common usage within the English language. An advantage could therefore be realized within multi-user voice recognition systems whereby several variations of each word could be encoded, each displaying varying tones and inflections.

Current voice recognition systems require extensive user training (ie. voice sampling) however it is expected that a system based on the principle described herein, once encoded with sufficient samples, would not require further programming or training for specific individuals. In addition, due to the nature in which information is holograpihcally encoded onto the same data medium, it is expected that the processing time would be sufficiently reduced to facilitate real time continuous speech voice recognition systems.

## Robotic Devices

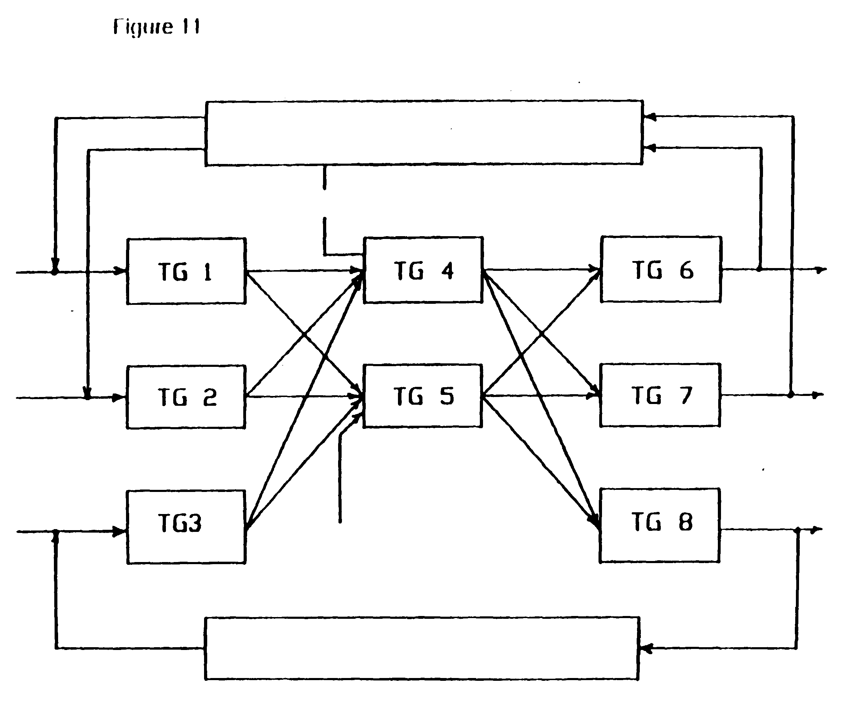

Robotic or cybernetic applications requiring a level of complexity somewhat beyond the devices described above. It is expected for applications within cybernetic control, arrays of transformation groups (TG) will be required, employing various feedback control modes. Figure 11 illustrates a one possible multi-TG configuration with feedback.

Implementation of neural devices based on the holographic process described herein could potentially yield control systems with capabilities beyond current technologies. Two applications of the neural device within the realm of robotic control are described in the following.

## Robotic Arm

The neural control system may be utilized within a robotic assembly device, possessing 10 rotational axis as well as visual input. The feedback mechanism is via visual stimulus and axial joint position/ rate of movement sensors. One possible conceptual design for a robotic application may consist of two neuron transformation groups, TG1 and TG2.

Transformation group (TG1) would receive stimulus inputs indicating axial position (10 elements) and rates of movement (10 elements). This transformation group could employ generation of higher order statistics (see section entitled Enhancements of Invention) on the stimulus field to increase the pattern storage capacity. By expanding to 6th, 7th and 8th order statistics, the stimulus input field could be increased to 250,000 elements. This expanded stimulus field could generate input to the second transformation group (TG2) receiving secondary stimulus from a visual field (i.e. 64 by 64 pixels). Expanding the visual field to 250,000 elements in second order statistics, the above model provides approximately 500,000 elements within the stimulus field of TG2 (i.e. 250,000 visual and 250,000 axial position/rate). One may assume the number of pattern associations encoded is given by N/8 where N is the number of elements within the stimulus field, this establishes a 3% absolute level of deterministic "error" in generated response for the ideal symmetric data. The number of separate stimulus-response patterns that may be learned by the robotic control system may potentially exceed 60,000. It should be noted that the above describes an elementary model of a cybernetic control system with very limited numbers of neuron cells. In addition, it is expected that signal feedbacks applied within a majority of control systems, as well as larger and more complex arrays of holographic elements will be required to facilitate a practicable robotic control system.

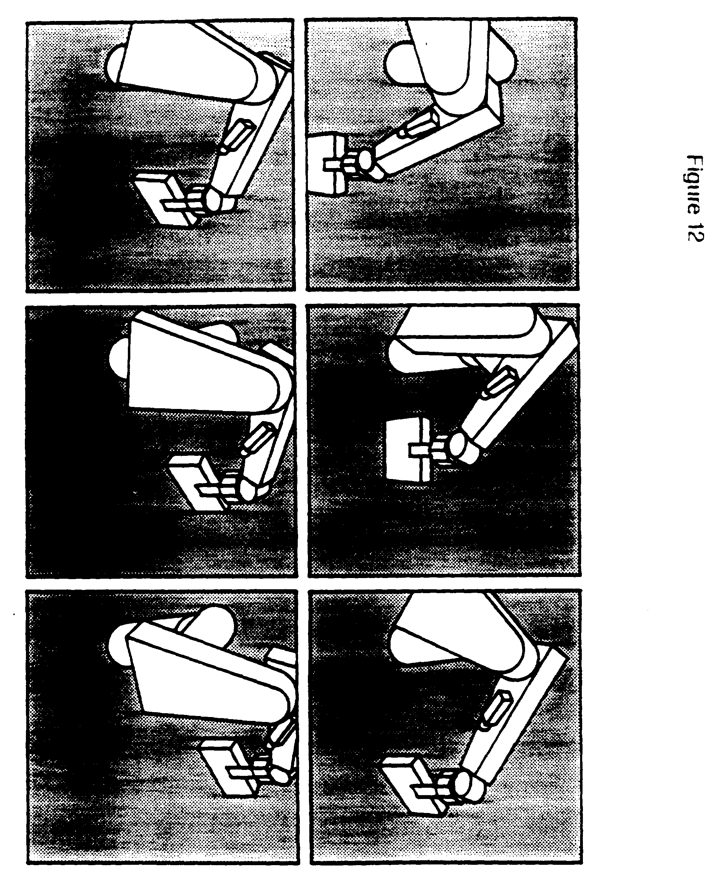

A method of encoding or learning time dynamic motions for the robotic arm is illustrated simply as follows. The complex movement would be determined as a series of patterns representing visual input, axial position and rates of movement. These patterns would correspond to each incremental movement of the process over a given time frame illustrated rather coarsely in Figure 12. These stimulus pattern frames could be encoded into the network with the output response pattern corresponding to the next (time) incremental axial position or movement for the robotic device.

It is expected that this relatively simplistic mechanism for encoding robotic movements or training the system would yield a robotic control paradigm with capabilities of a sophisication beyond those obtainable employing current control devices or technologies.

## Automatically Piloted Vehicular Transportation Device

In order to illustrate an example of a more complicated control system the application of a neural device for vehicular navigation is considered. A vehicle is not a robot in the strict sense of the word however may represent a readily visualized example.

The neural device would serve as inputs the following:

1. Human operator voice

2. Visual input

3. Radar tracking or navigation

4. Vehicle control parameters (ie. speed, acceleration, steering, transport drive indications, etc)

5. Longitude, latitude and altitude for navigational purposes.

The output response field may consist of the following:

1. Voice output
2. Acceleration
3. Steering

An application of this type is ideally suited to the holographic neural device because there are a very large number of input stimulus elements and relatively few output response elements. It would be expected that a task of this complexity would require several transformation groups. For example, one TG may be encoded to respond to voice input, a second for visual stimulus and a third for position sensors or radar. These transformation groups would feed into subsequent layers of TGs as illustrated in Figure 11 with the output neuron layer issuing the control action (i.e. acceleration or steering).

Due to the large volume of stimulus data (i.e. visual, radar, voice) the number of input elements could be expected to exceed 200,000. Again assuming an N/8 rule for a low deterministic error, the number of stimulus/response patterns that could be encoded would be approximately 25,000. If second order statistics were generated over the entire stimulus field, the pattern storage capacity could exceed several billion. It is expected that this storage capacity could encode sufficient control response actions to substantially respond to any potential accident situation or defense manoeuvre, bringing this range of applications into the realm of feasibility.

## Expert Systems (Automated Reasoning Device

The current mainstream of artificial intelligence applications are based on the Heuristic technique. Heuristics is a term used to define the concept of rule based programming. In general, the approach involves applying multiple decision rules against input states in order to issue a seemingly intelligent response. Heuristics was initially employed within the field of game playing (ie. chess) and displayed particularly impressive results.

Rule based programming has become the mainstream of AI research and has found more practical applications within the field of expert systems. A large degree of research in this field centres about the development of more efficient searching and parsing mechanisms for traversing the rule based decision tree. The principle drawback within the conventional heuristic approach is that decision rules must be applied and tested in a sequential fashion prior to arriving at a given response or outcome. For expert systems operating within domains involving some degree of complexity, the number of rules and thus search time required increases dramatically, thus limiting the capabilities of the rule-based approach. A simple, however, direct analogy between the holographic neural process and functional aspects of the heuristic technique shall be made. The general concept of the decision tree within the heuristic approach is presented below.

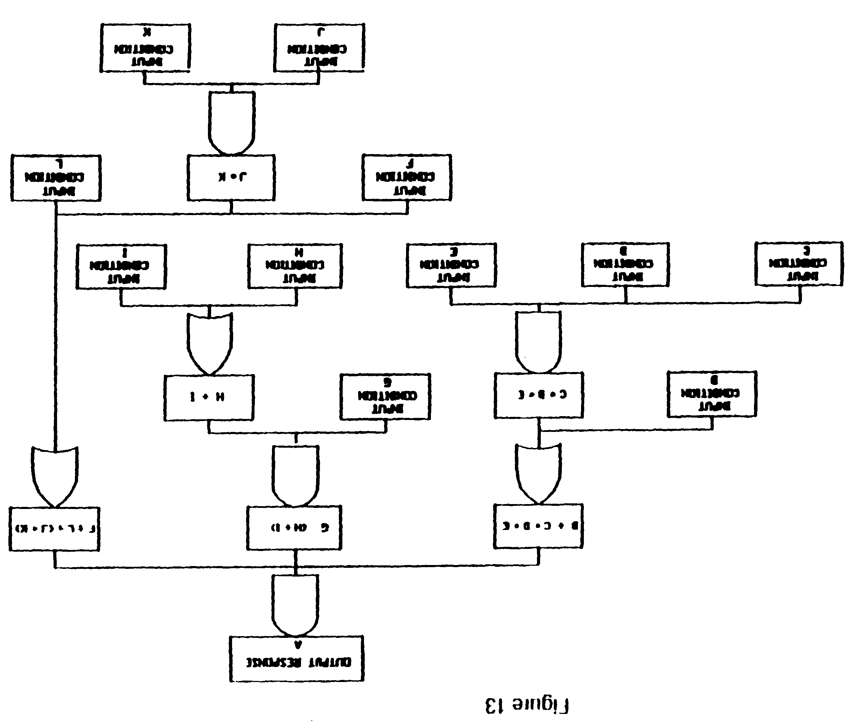

The form of the decision tree is represented in Figure 13. The top event is defined as one possible output and the branching network below describes the boolean relationship which arrives at this top event. The boolean tree describes all conditioning inputs leading to the top decision event in the form of AND and OR relationships (in the simplest case). Multiple decision trees are employed within any expert system. In the example given here:

Event A is true IF

$$[B + (C \circ D \circ E)] +$$

$$[G \circ (B + H)] + \qquad \ldots \text{eq. 74}$$

$$[F + K + (I \circ J)]$$

Applying boolean cutset reduction to the decision trees given in the above example yields the following result:

1. BOGOHOF+

2. CODOEOGOHOF+

3. BOGOIOF+ ... eq. 75

4. CODOEOGOIOF+

5 BOGOHOL+

   " " " "

   " " " "

   12. CODOEOGOIOJOK

Each of the above product terms (1 to 12) consists of a series of "anded" conditions, in other words, states that occur simultaneously in time. The above minimal cutsets or "input patterns" may be directly encoded into a correlation matrix within holographic neural device in the form of discreet stimulus-response associations, the response or decision being the top event in the logic tree. Each of the above product terms in fact represents a separate stimulus-response pattern and all patterns sequentially encoded into the neural system. The holographic neural device described herein provides an enormous capacity for storage of stimulus-response patterns and facilitates a mechanism for construction of extremely large and complex heuristic rule based systems.

Again, information is stored within the holographic neural device network via the superposition of data and the highest correlated response to an input stimulus is arrived at in a massively parallel fashion. It is expected that this inherently parallel technique will yield significant benefits over current heuristic methods in terms of both processing speed and information storage capacity.

It is believed that a significant advantage over the Heuristic technique may also be realized in that the holographic operational characteristics are not of a logical binary (pass/fail) nature but analog and defined with a continuous range. In addition, each of the encoded scenarios or pattern frames may be completely distinct or independent from all other encoded pattern frames without adversely affecting computational efficiency. This property may potentially facilitate large and complex expert systems which are not amenable to boolean reductionist techniques or solution via Heuristic methods.

The following simple example is used to illustrate the above concept. Consider an expert rule base system consisting of 1,000 input parameters. These inputs would supply information regarding "observables" to induce the expert system based decision or output. Expanding to second order terms, the generated input field yields a neural device responding to an input stimulus field of 500,000 elements. Using an N/4 relation corresponding to an average real valued "error" of 5% absolute, the number of complete stimulus/response associations or scenarios that may be encoded by this system could exceed 125,000.

This neural based expert system would therefore be capable of storing an associated response for 125,000 scenarios, each consisting of 1000 input parameters. In this example a number 4 base system shall be used for generation of the output response, therefore, 9 digits ($\log_4$ 125,000) are required to identify 250,000 distinct scenarios. The number of elements (ie. transformations required) within the vector correlation matrix [X] is given by:

$$\text{number of stimulus elements x number of neurons } 5 \times 10^5 \text{ x } \log_4[M] = 4.5 \times 10^6 \qquad \text{eq. 76}$$

where

M = number of possible outcomes (ie. 125,000)

One could assume that the fundamental decoding transformation is performed within the neural processor at a rate of 1 million transformations per second. (A computational speed of 20 million instructions per second is within the capacity of present day microprocessors). It is therefore conceivable that the expert system based on the holographic neural process using one microprocessor would arrive at the highest correlated output decision, based on 125,000 independent input scenarios each comprised of 1000 variables, in approximately one second.

This application of such a neural device is expected to greatly exceed the performance capabilities of expert systems employing conventional neuristic methods.

## Neural Prosthetic Devices

The field of prosthetic control could benefit greatly from the application of the neural device described herein. It is reiterated that the purpose and intent of this device is to provide more efficient information storage and processing capabilities through emulation of the fundamental mechanism by which the biological neural system stores and processes information. The specific neural process described herein, appears to emulate the form of the information processing characteristics within the neuron in many respects, these similarities are outlined below:

i) frequency modulated pulse or waveform, similar in form to biologically generated nerve impulses;

ii) information representation in the form of stimulus-response associations;

iii) holographic properties exhibiting vast information storage densities;

iv) near instantaneous single pass transformation for both learning and expression operations;

v) functional similarities to isomorphic characteristics of various classes of biological neurons;

vi) asynchronous transmission and processing of stimulus-response signals;

vii) variable memory profile.

A synthetic system which closely mimics the above biological characteristics would inevitably provide significant advances in the area of interfacing prosthetic device control to neurobiological circuits.

This holographic neural device could yield significant advances in the area of control for artificial limbs, and it is expected, would inevitably advance towards neural prosthetics for higher neurological functions.

## Supplementary Disclosure:

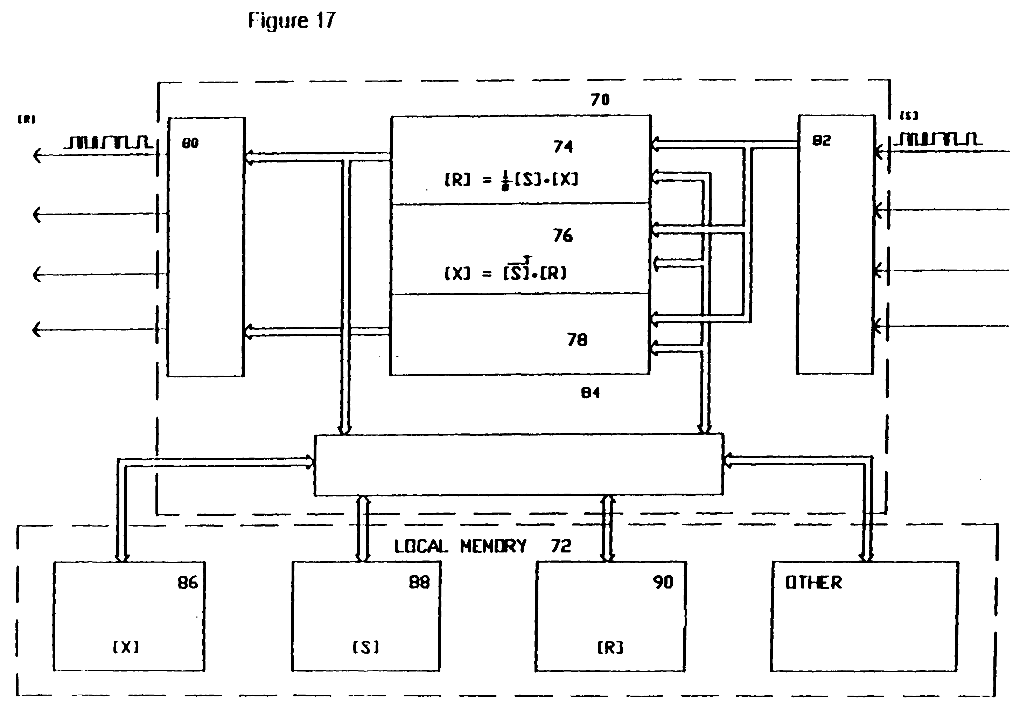

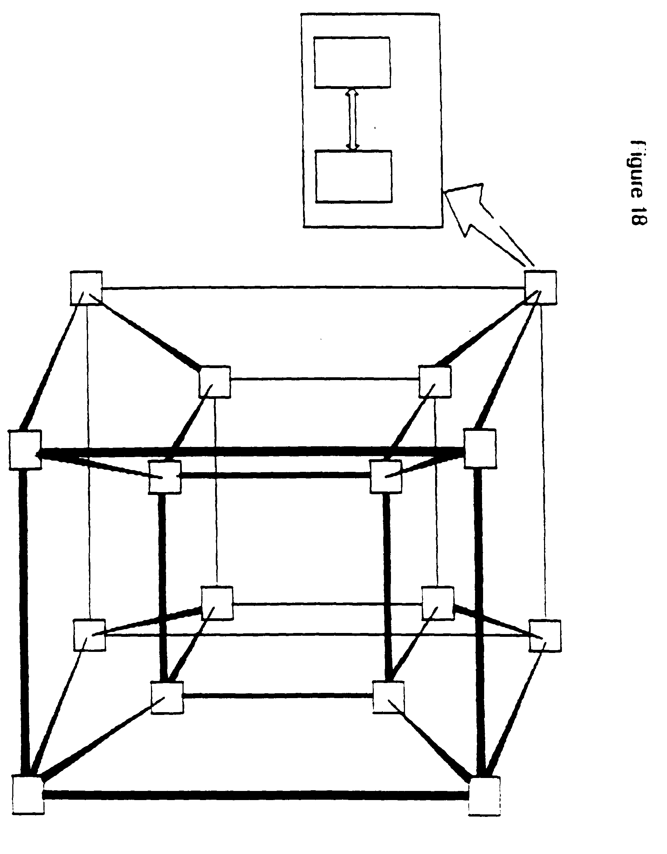

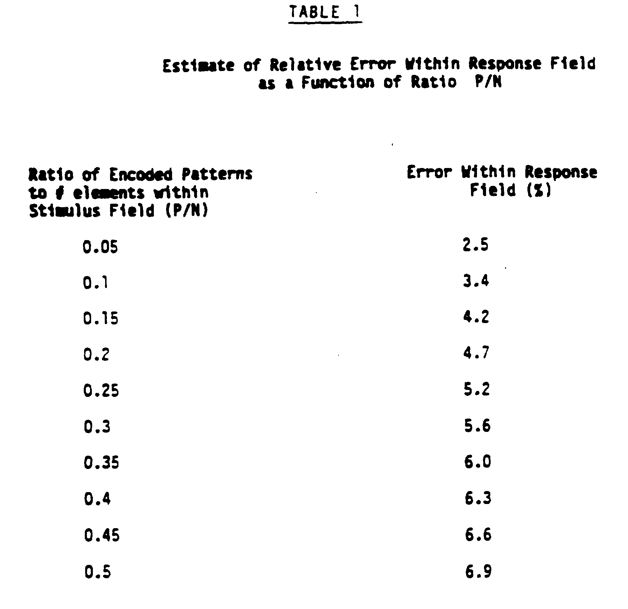

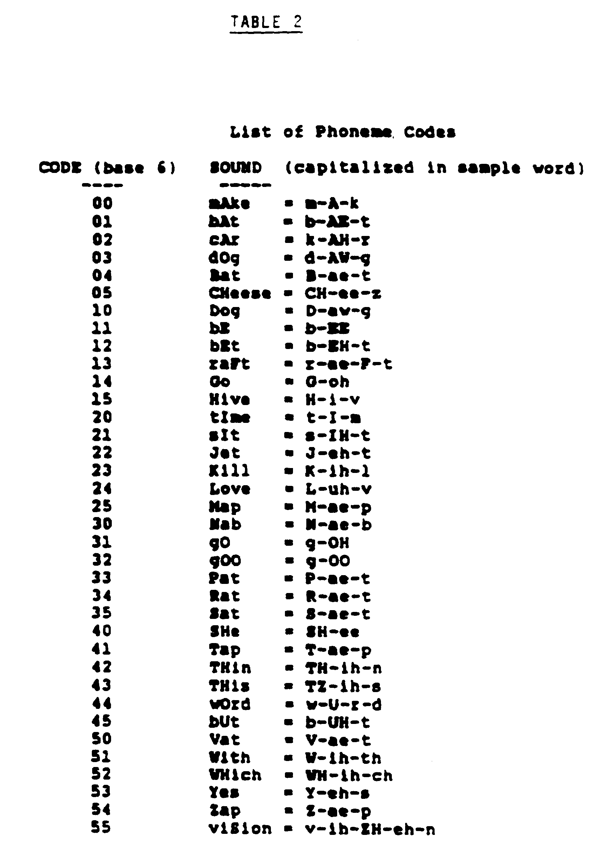

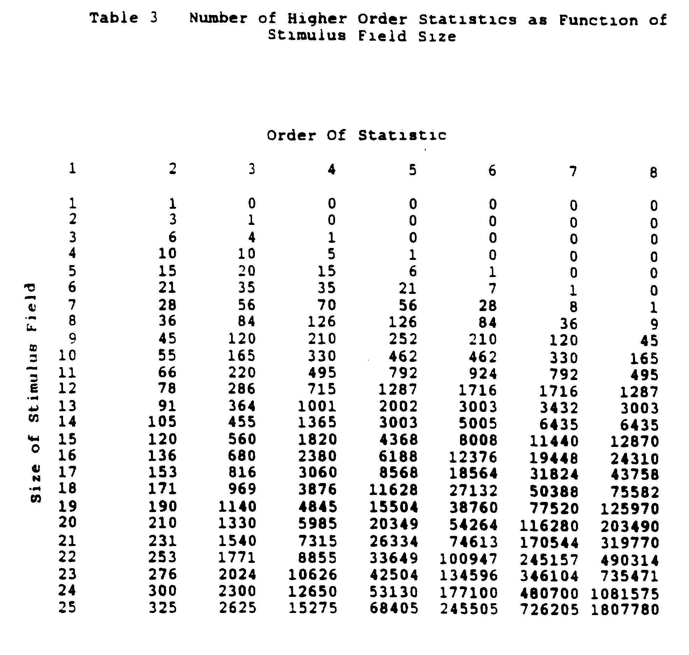

## DESCRIPTION OF THE PREFERRED EMBODIMENTS ADVANCED MODEL (FIGURES 17 AND 18)

This example of a hardware embodiment forms a conceptual basis for a possible future generation computer prototype using the holographic process described herein. This advanced embodiment device shall be referred to as a neurocomputer. The neurocomputer is intended to be general purpose in its operational characteristics as facilitated by a progamming utility. The programming methodology will be significantly different from conventional programming languages and techniques. Some of the basic categories of modifiable or programmable features required within the neurocomputer programming utility are listed below:

1) Specification of the synaptic interconnections or interconnection matrix between neural analogues.

2) Specification of preprocessing of input data to the neural elements (i.e. sigmoidal preprocessing, generation of higher order terms, non-linear filtering characteristics).

3) Specification of the excitory/inhibitory states for the synaptic interconnections.

4) Specification of knowledge or encoded data within the correlation matrix [x] (analogous to synaptically encoded information).

5) Specification of decay coefficients or rate of decay of vector elements within correlation matrix [X]. This programmable feature establishes the memory profile (i.e. short terms vs. long term memory).

6) Specification of rate of encoding. This programmable feature effectively modifies the rate of learning.

7) Specification of Input/Output to external environment. Modifies the mapping of external stimulus input (88 in Figure 17) onto the analogous synaptic inputs as well as mapping of the response outputs (90 in Figure 17) onto external devices.

The above forms a basis set of programmable features required for the general purpose neurocomputer device and may be expanded conceptually to permit further enhanced capabilities.

In this example, two principle hardware components are indicated, that is the single chip microcomputer 70 and the memory storage unit 72. The single chip microcomputer is representative of a component currently available in the marketplace and contains the following features:

1) processor unit
2) multiple serial data transfer links
3) memory interface unit.

These above functional blocks may interact in any manner; however the illustration provided within Figure 17 shows only the data flow paths required and related to the prescribed neural process. The processor unit 84 has been subdivided into 3 functional blocks for illustrative purposes; these functional blocks are listed as follows and are described in further detail below:

1) Decoding 74
2) Encoding 76
3) Other functions 78

In this example, the elements of the input stimulus field [S] and the output response field [R] are transmitted via their real and imaginary parts in a binary representation. This concept is illustrated below in a representative case for an element $s_j$ within the stimulus field [S]:

$$s_j = \lambda_j e^{i\theta_j} \qquad \ldots \text{eq. 77}$$

For example if $\Theta = \frac{2\pi}{3}$ and $\lambda = 74$ then

$$s_j = -36 + i\,64$$

It is assumed an 8 bit resolution is used for each of the above real and imaginary parts. The elements of the stimulus and the response fields may be transmitted either via the serial data links 80 and 82 or mapped onto the external memory devices (88 and 90). Figure 17 illustrates the transmission of one element of a stimulus pattern [S] via the serial data link 82.

### Encoding (Embodiment in Figure 17)

During an encoding operation the elements of the stimulus pattern $(S_l)$ are read in either via one of the four serial input links, or via the external memory device (88) providing memory mapped input. Similarly, the element or elements of the response pattern may be read into the encoding unit 76 either via the serial links or via the external memory device 88. Note again that for each of the stimulus and response elements, a real and imaginary component derived from the phase and magnitude components of the complex element or vector are read into the encoding unit (76).

The real and imaginary components of the corresponding element $(x_j)$ for the correlation matrix [X] is read in from the external memory unit 86. The encoding unit 76 performs the encoding transformation as defined, in canonical form, by the following vector matrix transformation:

$$[X] = {}^{\overline{=}\,T}[S] \cdot [R] \qquad \text{same as eq. 13}$$

The above operation superimposes the learned stimulus-response patterns onto the correlation matrix [X]. The encoding operation is defined in further detail herein under the section entitled Summary of the Invention. Note that the hardware configuration presented, and the operational characteristics of a general purpose processor, requires that the above matrix transformation be performed in a sequential manner. The encoded element or elements of the correlation matrix [X] are stored back into memory storage unit 86 which performs an analogous function to the axo-dendritic synaptic connections.

### Decoding (Embodiment in Figure 17)

During a decoding operation the elements of the stimulus field ($s^*_{-j}$) are read in either via the four serial input links 82 or via the external memory device 88 for memory mapped input. For the stimulus elements, a real and imaginary component derived from the phase and magnitude component of the complex element or vector ($s^*_{-j}$) are read into the decoding unit 74. The real and imaginary components of the corresponding vector element within the correlation matrix [X] are read from the external memory unit 86. The decoding unit 74 performs the decoding transformation as defined, in canonical form, by the following vector matrix transformation:

$$[R] = \frac{1}{c} [S]^* \cdot [X] \qquad \qquad ..\textbf{same as eq. 27}$$

Note again that the hardware configuration presented and the operation of general purpose processors requires that the above matrix transformation be performed in a sequential manner. The decoding operation is defined in further detail herein under the heading entitled Summary of the Invention.

The generated response [R] may be output either via the serial output links 80 or via the external memory device 90 for memory mapped output. Note again that the response output signal is represented by a real and imaginary component as illustrated in equation 77 previously.

### Other Functions (Figure 17)

A third functional block defined within the processor block 78 is related to other functions or enhancements of the process. This functional block 78 has data access to both the serial input and output links 80 and 82 and external memory 72. The embodiment of the neural process within a general purpose processor provides a significant advantage in that a wide range of enhancements or variations of the fundamental neural process may be easily accommodated. A subset of possible enhancements consists of Hermitian or sigmoidal preprocessing of the stimulus input field [S]$^*$ as described in the section pertaining to Enhancements of Invention, and all of the programmable functions listed under the heading Physical Embodiment of Device - Advanced Model.

Several of the processing nodes, may be connected together in any configuration to form an array of neural elements operating in an asychronous and parallel fashion. one possible parallel configuration is illustrated in Figure 18 and consists of 16 processing nodes. Each processing node 92 consists of the hardware configuration presented in Figure 17. The interconnection arrangement presented is generally referred to as a Boolean hypercube. In this arrangement each processing node accesses its own local memory and communicates with the four nearest nodes via high speed bidirectional serial communication.

In illustrating the likely computational capabilities of the above device employing the prescribed holographic neural process, a system (as presented in Figure 17) is evaluated using operational specifications for existing and available hardware components. The operational specifications for the constituent hardware are as follows:

    local memory / node = 2 Megabytes

    transmission rate / link = 20 Megabits/second

    Processing speed / node = 20 Million Instructions / second

Each processing node may be configured internally to represent several distinct and separate neuron cells. For this example it will be assumed that each neural cell receives 8000 vector elements within its stimulus field (ie. [S] = [$s_1$, $s_2$ ... $s_{8000}$] and produces one response output. The information stored within each of the 8000 synaptic input analogues, are again represented by a vector element within the correlation matrix [X]. The memory requirements for each element of [X] for this example is 4 bytes. A 16-bit resolution for the real and imaginary elements within the correlation matrix [X] is assumed. The number of neural cells that may be contained within each processing node ($N_{\underline{u}}$) is therefore given by:

$$N_u = \frac{2 \times 10^6 \ bytes \ / \ node}{4 \ bytes \ / \ synapse \times 8000 \ synapse \ / \ neuron} \quad \ldots eq. \ 78$$

$$= 64 \ neurons \ / \ node$$

### Memory Capacity (Embodiment in Figure 18)

As discussed herein stimulus-response patterns may be superimposed onto the same memory medium. As the number of patterns increases, the average magnitude of the deterministic "error" within the decoded output response increases in a non-linear fashion. The storage capacity for this example is assumed to be N/4 to provide low response error, where N is the number of elements within the stimulus field [S] (ie. number of stimulus elements N = 8000 and the capacity for encoded stimulus-response associations is N/4 or 2000). The above encoded set of stimulus - response patterns within a single neural analogue based on the assumptions outlined herein corresponds to the following information content ($\Omega$):

$$\Omega = 2000 \ patterns \times 8000 \ elements/pattern$$

$$= 16 \ Million \ pattern \ elements \ (bytes) \qquad eq. \ 79$$

The above information content will be referred to as the virtual information storage capacity. Each processing node 90 contains 64 neuron analogues, therefore the virtual information capacity, being proportional to the number of neural elements, is given by:

$$= 16 \times 10^6 \ elements \times 64 \ neurons \ / \ node$$

$$= 1.0 \ Billion \ elements \ (bytes) \ / \ node$$

For the described neural system comprising is processing nodes, the virtual information storage capacity corresponds to 16 Billion bytes.

### Processing Speed (Embodiment in Figure 14)

To provide an illustration of the effective processing capabilities for this embodiment, a comparative description is presented for the neural process described herein in relation to conventional processing methodologies.

Within the domain of pattern identification and encompassing large sets of independent and nonlinear patterns, the technique of pattern matching or linear search is most widely applicable.

The pattern matching technique involves a comparison of each element of the stimulus field against the corresponding element of each of the stored reference patterns. These patterns may represent any form of data in non-compressed form or, if amenable, in a compressed form (i.e. converted to a frequency domain).

To illustrate the increase in computational efficiency, a conventional pattern matching technique will be described in general and compared operationally to the holographic neural process. within the general linear search technique, a variance ($\sigma_p^2$) may be generated for each reference pattern p as follows:

$$\sigma_P^2 = \frac{1}{n} \sum_{j=1}^{N} (a_j - b_{j,p})^2 \qquad ..eq \ 80$$

where

$a_j$ -    element j of stimulus field

$b_{j,p}$ -      element j of reference pattern p

A set of pattern variance terms are then generated over the set of prototypes as follows:

$$(\sigma_1^2, \sigma_2^2, \sigma_3^2, \ldots \sigma_{p-}^2) \qquad \text{eq. 81}$$

and these values employed in some manner to determine or produce the output response.

For this illustration, in which the number of elements in the stimulus field for each neural analogue is 8000, the assumed number of patterns encoded is 2000. The pattern matching process requires the following number of comparisons be performed:

$$8000 \text{ elements/pattern X } 2000 \text{ patterns}$$

$$= 16 \text{ Million comparisons} \qquad \text{eq. 80}$$

Each comparison consists of evaluating the difference between an element in the input stimulus pattern and the corresponding element in a stored reference pattern and adjusting a correlation value (i.e. evaluation of a pattern variance or standard deviation value). The series of steps for the fundamental comparison operations as described above will be referred to as a <u>virtual operation</u>.

The neural process described herein performs a roughly similar function, however, the operational characteristics are significantly more sophisticated and computationally efficient. As stated within the section pertaining to Summary of the Invention, the output response is derived directly from the decoding transformation, and is a function of the entire set of encoded associations as defined by:

$$r = \frac{1}{c} \sum_t \Lambda_t e^{i\phi_t} \qquad \ldots \textbf{\textit{same as eq.}}$$

where

$(\Lambda_1, \Lambda_2, \ldots \Lambda_T)$      is the set of response magnitude values for patterns encoded over t = 1 to T

$(\Phi_1^*, \Phi_2^*, \ldots \Phi_T^*)$      is the set of generated output response values encoded over t=1 to T

Inherent to the above holographic neural process, the output response is issued directly as a vector quantity with phase angle representing the scalar response information and the magnitude statistically proportional to the degree of correspondence between input stimulus and prior encoded stimulus patterns.

A single transformation as performed by the holographic neural decoding process is given by:

$$s_j^* \cdot x_j \; \textbf{\textit{equivalent to}} \; \sum_{p=1}^{2000} \left[ e^{i\zeta^j} \cdot e^{i(\phi_p - \theta^j)} \right] \qquad \ldots \textbf{\textit{eq. 81}}$$

one may apply a conservatism that the above operation is similar to that performed by 2000 virtual operations within the conventional pattern matching or linear search process in evaluating a desired response output.

A single transformation as described by equation 66, transforms one element within the stimulus field through the corresponding element for the entire set of encoded associations (2000 in this example) superimposed in abstract form within correlation matrix [X]. The number of mechanical steps therefore required in issuance of a response decision is reduced by a proportional amount (i.e. in this case reduced by a factor of 1/2000).

To illustrate the effective processing speed for the neural embodiment in Figure 18 one may assume that the rate of encoding/decoding transformation is limited by the neural processor speed.

For a processor speed of 20 MIPS and conservatively assuming 40 instruction cycles are required for one encoding or decoding transformation (as could be the case for non-hardware multiples), the number of transformation that could be performed within each processing node is therefore 500,000 per second. As noted previously, a single decoding transformation (equation 27) performs a decoding operation simultaneously through the enfolded 2000 stimulus-response associations. For a comparative study, applying the virtual operation definition within the linear search method, the effective processing rate for one processing node employing the holographic method is evaluated by:

$$500,000 \frac{transformations}{second} \text{ X } 2000 \frac{virtual\ operations}{transformation}$$

$$= 1.0 \text{ Billion virtual operations / second}$$

It is believed that the effective rate of processing for the described system consisting of 16 processing nodes in Figure 18 could attain 16 Billion virtual operations / second.

The hardware embodiment described herein therefore yields a capacity to store 16 Billion virtual elements (bytes) of information in the form of encoded stimulus-response associations, and to process input sensory stimulus through the above accumulated information at a rate of 16 Billion virtual operations / second. It is expected that a system of this type, receiving stimulus from various forms of sensory modalities (i.e. vision, sound, touch), and employing characteristics of memory, learning and expression may potentially provide a suitable information processing substrate to facilitate and evoke the emergent characteristics of a form of intelligence such as that exhibited by the most primitive insect neurobiological system.

The described hardware embodiment is indicative of one possible example and may be expanded in any area including hardware configuration, memory capacity, number of processing nodes, number of data links per node, rate of data link transmission method of data transmission (i.e. serial/parallel modes), and processing rate per node. These increased capabilities may be used to construct devices emulating potentially higher levels of intelligence.

Although the preferred embodiment as well as the operation and use has been specifically described in relation to the drawings, it should be understood that variation in the preferred embodiments could easily be achieved by a skilled man in the trade. Accordingly, the invention should not be understood to be limited to the exact form revealed in the drawings.

**Claims**

1. An associative memory apparatus comprising data signal storage and signal processing means:

   for operably receiving and transforming signals representing scalar stimulus-response pattern data values comprising respective, mutually-associated sets of stimulus and response input elements, and storing a transformed signal representing same as a corresponding correlation set of Riemann manifold values of an at least one experienced stimulus-response pattern; and,

   for operably producing and outputting experientially-associated response data signals generated responsive to transformation of subsequently input stimulus data signals comprising stimulus representative complex values, through said stored Riemann manifold values signals;

   characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field to include at least some stimulus input elements having an order greater than 1, of a set consisting of unique combinatorial complex products of said input stimulus elements, said order corresponding to the number of stimulus input elements in said products.

2. The associative memory apparatus according to claim 1, wherein said data signal storage and processing means is an artificial neural device.

3. The apparatus according to claim 2 wherein said data signal storage and processing means is operable to receive signals representing sets of scalar value representations corresponding to experienced stimuli and associated responses; and is further operable to encode said scalar value representations as corresponding ones of said stimulus elements and response elements, each being thereby defined by a Riemann plane vector coordinate possessing both phase angle orientation and magnitude.

4. The apparatus according to claim 3, wherein input elements within the stimulus field are expanded to a higher order statistic, following the general form:

$$\prod_{n=1}^{N} \lambda^{k(n)} e^{f(n) i\theta^{k(n)}}$$

wherein

N - represents the order of the statistic

k(n) - defines the nth product element on the N order statistic

lambda$^{k(n)}$ - magnitude component of the nth product element

theta$^{k(n)}$ - phase component of the nth product element

f(n) - operation for forming the conjugate of the complex polar vector as any function of n.

5. The apparatus according to claim 3 wherein said data signal storage and processing means further comprises means for non-linear transformation of elements of said response output data, whereby each said element's magnitude component is amplified or attenuated according to whether it exceeds or is less than a predetermined pattern association threshold value.

6. The apparatus according to claim 5 wherein said transformation means is a substantially binary mode, switchable neural element, and wherein said Riemann plane vector coordinates are arranged along a line that intersects the complex origin of the Riemann plane.

7. The apparatus according to claim 3 wherein said subsequently applied stimulus input data and said response data output by said data processing and storage means, are additionally encoded and stored within said correlation set.

8. The apparatus according to claim 7 wherein said data storage and processing means is further operable to dynamically alter stored stimulus and response association patterns through a time variable decay function, to selectively reduce the magnitude of said elements in said correlation set, in inverse proportion to an amount of time elapsed since respective selected ones of said elements were stored in said correlation set.

9. The apparatus according to claim 3 wherein said data storage and processing means is further operable to perform a predetermined vector transformation on selected subsets of said respective, mutually-associated sets of stimulus and response input elements to increase symmetrical distribution amongst elements of said correlation set.

10. An apparatus including interconnecting communication means in combination with a plurality of thereby interconnected artificial neural devices, and comprising data storage and processing means:

for operably receiving and transforming signals representing scalar stimulus-response pattern data values in at least one of said devices, said data values comprising respective, mutually-associated sets of stimulus and response input elements, and storing a transformed signal representing same as a corresponding correlation set of Riemann manifold values of an at least one experienced stimulus-response pattern; and,

for operably producing and outputting experientially-associated response data signals, generated responsive to transformation of subsequently input stimulus data signals comprising stimulus representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order of greater than 1, of a set consisting of unique combinatorial complex products of said input stimulus element said order corresponding to the number of stimulus input elements in said products;

and wherein said data processing and storage means is operable to sum output response data, element by element, from said plurality of devices, as a vector sum, to produce a correlation set having elements corresponding to uniquely representative values of all of the stimulus and associated response elements of each of said plurality of devices.

11. A neural network comprising interconnecting communication means in combination with a plurality of thereby interconnected artificial neural devices and comprising data storage and processing means:

for operably receiving and transforming signals representing scalar stimulus-response pattern data values in at least one of said devices, said data comprising respective, mutually-associated sets of stimulus and response input elements, and storing a transformed signal representing same as a corresponding correlation set of Riemann manifold values of an at least one experienced stimulus-response pattern; and,

for operably producing and outputting experientially-associated response data signals, generated responsive to transformation of subsequently input stimulus data signals comprising stimulus representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order greater than 1, of a set consisting of unique combinatorial complex products of said input stimulus elements, said order corresponding to the number of stimulus input elements in said products;

and wherein said network is arranged as a layered network of said plurality of devices.

12. A pattern recognition apparatus for generating a response signal in response to a stimulus signal, said apparatus comprising:

(a) transducer means for producing a scalar stimulus signal;

(b) data storage and processing means:

for operably receiving and processing said stimulus signal and combining therewith a scalar response signal and transforming said signals as stimulus-response pattern data values comprising respective, mutually-associated sets of stimulus and response input elements,;

for operably storing a transformed signal representing said stimulus-response pattern data values as a corresponding correlation set of Riemann manifold values of an at least one experienced stimulus-response pattern; and,

for operably producing and outputting experientially-associated response data signals, generated responsive to transformation of subsequently input stimulus data signals comprising representative complex values, through said stored Riemann manifold values signals;

characterised in that means is provided for increasing the number of sets of stimulus-response pattern data for said at least one experienced pattern, to correspondingly increase information content of said correlation set in a resulting stored Riemann manifold values signal, through combinatorial product expansion of said stimulus-response pattern data to thereby increase the number of input elements within the stimulus field, to include at least some stimulus input element having an order greater than 1, of a set consisting of unique combinatorial complex products of said input stimulus elements, said order corresponding to the number of stimulus input elements in said products.

13. The apparatus according to claim 12 wherein said data storage and processing means is operable to receive signals representing sets of scalar value representations corresponding to experienced stimuli and associated responses; and is further operable to encode said scalar value representations as corresponding ones of said stimulus elements and response elements, each being thereby defined by a Riemann plane vector coordinate possessing both phase angle orientation and magnitude.

14. The apparatus according to claim 13, wherein input elements within the stimulus field are expanded to a higher order statistic, following the general form:

$$\prod_{n=1}^{N} \lambda^{k(n)} e^{f(n) i\theta^{k(n)}}$$

wherein

N -             represents the order of the statistic

k(n) -          defines the nth product element on the N order statistic

$lambda^{k(n)}$ -      magnitude component of the nth product element

$theta^{k(n)}$ -       phase component of the nth product element

f(n) -          operation for forming the conjugate of the complex polar vector as any function of n.

15. The apparatus according to claim 13 wherein said data storage and processing means further comprises means for non-linear transformation of elements of said response output data, whereby each said element's magnitude component is amplified or attenuated according to whether it exceeds or is less than a predetermined pattern association threshold value.

16. The apparatus according to claim 13 wherein said subsequently applied stimulus input data and said response data output by said data processing and storage means, are additionally encoded and stored within said correlation set.

17. The apparatus according to claim 16 wherein said data storage and processing means is further operable to dynamically alter stored stimulus and response association patterns through a time variable decay function, to selectively reduce the magnitude of said elements in said correlation set, in inverse proportion to an amount of time elapsed since respective selected ones of said elements were stored in said correlation set.

18. The apparatus according to claim 13 wherein said data storage and processing means is further operable to perform a predetermined vector transformation on selected subsets of said respective, mutually-associated sets of stimulus and response input elements to increase symmetrical distribution among the elements of said correlation set.

19. The apparatus according to claim 12 wherein said transducer means comprises a video camera.

20. The apparatus according to claim 19, wherein said apparatus further includes audio output means responsive to output response data, to produce and direct a response signal to an audio output transducer responsively operable to generate a pattern associated audio response associated with said stimulus signal.

21. A method for responsively identifying a stimulus pattern, comprising the steps of:

(a) producing a scalar stimulus signal;

(b) directing said stimulus signal to data storage and processing means, and therein:

receiving and processing said stimulus signal and combining therewith a response signal and transforming said signals as stimulus-response pattern data values comprising respective, mutually-associated sets of stimulus and response input elements,;

and storing a transformed signal representing said stimulus-response pattern data values as a corresponding correlation set of Riemann manifold values of an at least one experienced stimulus-response pattern; and,

producing and outputting experientially-associated response data signals generated responsive to transformation of subsequently input stimulus data signals comprising stimulus representative complex values, through said stored Riemann manifold values signals;
characterised in that the number of sets of stimulus-response pattern data for said at least one experienced pattern is increased to correspondingly increase information content of said correlation set in a resulting stored Riemann manifold values signal, through expansion of said stimulus-response pattern data to thereby increase the number of input elements within the stimulus field, to include at least some stimulus input element having an order of greater than 1, of a set consisting of unique combinatorial complex products of said input stimulus elements, said order corresponding to the number of stimulus input elements in said products.

22. The method according to claim 21 wherein said data storage and processing means is operated to receive signals representing sets of scalar value representations corresponding to experienced, stimuli and associated responses; and is further operated to encode said scalar value representations as corresponding ones of said stimulus elements and response elements, each being thereby defined by a Riemann plane vector coordinate possessing both phase angle orientation and magnitude.

23. The method according to claim 22, wherein input elements within the stimulus field are expanded to a higher order statistic, following the general form:

$$\prod_{n=1}^{N} \lambda^{k(n)} e^{f(n) i\theta^{k(n)}}$$

wherein

N -             represents the order of the statistic

k(n) -          defines the nth product element on the N order statistic

"lambda"$^{k(n)}$ -     magnitude component of the nth product element

"theta"$^{k(n)}$ -     phase component of the nth product element

f(n) -          operation for forming the conjugate of the complex polar vector as any function of n

24. The method according to claim 23 further comprising the step of non-linear transformation of elements of said response output data, whereby each said element's magnitude component is amplified or attenuated according to whether it exceeds or is less than a predetermined pattern association threshold value.

25. The method according to claim 23 wherein said subsequently applied stimulus input data and said response data output by said data processing and storage means, are additionally encoded and stored within said correlation set.

26. The method according to claim 25 further comprising the step of processing said correlation set elements with a time variable decay function, to dynamically alter stored stimulus and response associations patterns by selectively reducing the magnitude of said elements in said correlation set, in inverse proportion to an amount of time elapsed since respective selected ones of said elements were stored in said correlation set.

27. The method according to claim 23 further comprising a step wherein said data storage and processing means is operated to perform a predetermined vector transformation on selected subsets of said respective, mutually-associated sets of stimulus and response input elements to increase symmetrical distribution among the elements of said correlation set.

28. The apparatus according to claim 1 wherein said data signal storage and signal processing means is operable to transform said stimulus-response pattern data values sets from real valued elements into phase orientations of said corresponding, correlation set of Riemann manifold valued elemements having a distribution within the range of 0 to 2 pi, in accordance with the general mapping:

$$S_k \rightarrow \lambda_k e^{i\theta_k}$$

wherein:

$S_k$ - a real valued, pattern data value
$\lambda_k$ - an assigned confidence value for $S_k$
$\theta_k$ - the phase angle of the Riemann value.

**Patentansprüche**

1. Eine Assoziativspeichereinrichtung, die Datensignale sowohl speichert als auch verarbeitet,

   empfängt und transformiert skalare Stimulus-Antwort-Muster repräsentierende Datenwerte, die die entsprechenden miteinander assoziierten Mengen von Stimulus- und Antwort-Eingabeelementen enthalten, und speichert ein transformiertes Signal, das letztere als entsprechende Korrelationsmenge Riemannscher Vielfachdaten zumindest eines erfahrenen Stimulus-Antwort-Musters repräsentiert; und

   ist ferner in der Lage, auf dem Wege der obengenannten gespeicherten Riemannschen Vielfachdatensignale erfahrungsmäßig assoziierte Antwort-Datensignale zu produzieren und auszugeben, deren Erzeugung durch die Transformation eines nachträglich zugeführten Stimulus-Datensignals ausgelöst wurde, das den Stimulus repräsentierende komplexe Daten enthält;

   dadurch gekennzeichnet, daß die Anzahl der Mengen von Stimulus-Antwort-Muster-Daten für das genannte, mindesterforderliche erfahrene Muster erhöht werden kann, sodaß der Informationsgehalt der genannten Korrelationsmenge in einem resultierenden gespeicherten Riemannschen Vielfachwertesignal durch kombinatorische Produktexpansion der genannten Stimulus-Antwort-Muster-Daten entsprechend erhöht werden kann, um damit die Anzahl der Eingabeelemente im Stimulus-Feld zu erhöhen, sodaß von einer Menge, die aus eindeutigen kombinatorischen komplexen Produkten genannter Stimulus-Eingabeelemente besteht, zumindest einige Stimulus-Eingabeelemente mit einer Ordnung über 1 vorhanden sind, wobei diese Ordnung der Anzahl der Stimulus-Eingabeelemente in den besagten Produkten entspricht.

2. Assoziative Speichereinrichtung gemäß Patentanspruch 1, dadurch gekennzeichnet, daß die besagte Einrichtung zur Speicherung und Verarbeitung von Datensignalen eine künstliche neuronale Einrichtung ist.

3. Einrichtung gemäß Patentanspruch 2, dadurch gekennzeichnet, daß die besagte Datensignalspeicher- und -verarbeitungseinrichtung in der Lage ist, Signale zu empfangen, die Mengen skalarer Wertedarstellungen repräsentieren, die erfahrenen Stimuli und den damit assoziierten Antworten entsprechen, sowie darüber hinaus in der Lage ist, die besagten Darstellungen skalarer Werte als entsprechende Darstellungen der Stimuluselemente und Antwortelemente zu kodieren, wobei beide durch eine Vektorkoordinate der Riemannschen Ebene definiert werden, die sowohl eine Phasenwinkelausrichtung als auch eine Größe besitzt.

4. Einrichtung gemäß Patentanspruch 3, dadurch gekennzeichnet, daß die Eingabeelemente des Stimulusfelds auf eine höhere Anordnungsstatistik ausgedehnt werden, wobei nachstehende allgemeine Formel zur Anwendung kommt:

$$\prod_{n=1}^{N} \lambda^{k(n)} e^{f(n) i\theta^{k(n)}}$$

wobei

N -            für die Ordnung der Statistik,

k(n) -          für das n-te Produkt-Element der N Anordnungsstatistik,

lambda k(n) -    für die Größenkomponente des n-ten Produktelements,

theta k(n) -     für die Phasenkomponente des n-ten Produktelements und

f(n) -          für die Operation zur Bildung des Konjugats des komplexen polaren Vektors als Funktion von n steht.

**5.** Einrichtung gemäß Patentanspruch 3, dadurch gekennzeichnet, daß die besagte Datensignalspeicher- und -verarbeitungseinrichtung außerdem eine Einrichtung zur nicht-linearen Transformation der Elemente der besagten Antwort-Ausgabedaten umfaßt, wobei die Größenkomponente jedes der besagten Elemente je nachdem, ob sie einen im vorhinein bestimmten Musterassoziation-Schwellenwert über- oder unterschreitet, erhöht oder verringert wird.

**6.** Einrichtung gemäß Patentanspruch 5, dadurch gekennzeichnet, daß die besagte Transformationseinrichtung ein substantiell binäres, schaltbares neurales Element ist und die genannten Vektorkoordinaten der Riemannschen Ebene entlang einer Linie angeordnet sind, die den komplexen Ursprung der Riemannschen Ebene schneidet.

**7.** Einrichtung gemäß Patentanspruch 3, dadurch gekennzeichnet, daß die genannten später zugeführten Stimulus-Eingabedaten und die genannte, durch die besagte Datensignalverarbeitungs- und -speichereinrichtung erfolgende Antwortdaten-Ausgabe zusätzlich kodiert und in der genannten Korrelationsmenge gespeichert werden.

**8.** Einrichtung gemäß Patentanspruch 7, dadurch gekennzeichnet, daß die besagte Datensignalspeicher- und -verarbeitungseinrichtung außerdem in der Lage ist, gespeicherte Stimulus- und Antwort-Assoziationsmuster durch eine zeitvariable Zerfallsfunktion dynamisch zu verändern und die Größe der genannten Elemente in der genannten Korrelationsmenge selektiv umgekehrt proportional zu einer seit der Speicherung der ausgewählten Elemente in der besagten Korrelationsmenge verstrichenen Zeit zu verringern.

**9.** Einrichtung gemäß Patentanspruch 3, dadurch gekennzeichnet, daß die besagte Datensignalspeicher- und -verarbeitungseinrichtung außerdem in der Lage ist, eine im voraus festgelegte Vektortransformation ausgewählter Teilmengen der besagten, miteinander assoziierten Mengen von Stimulus- und Antwort-Eingebedaten durchzuführen, um die symmetrische Verteilung unter den Elementen der besagten Korrelationsmenge zu fördern.

**10.** Eine Einrichtung, die verbindende Kommunikationseinrichtungen in Kombination mit einer Vielzahl durch dieselben verbundener künstlicher neuraler Elemente umfaßt und darüber hinaus Datensignalspeicher- und - verarbeitungsfunktionen aufweist

empfängt und transformiert skalare Stimulus-Antwort-Muster zumindest einer der besagten Einrichtungen repräsentierende Datenwerte, die die entsprechenden miteinander assoziierten Mengen von Stimulus- und Antwort-Eingabeelementen enthalten, und speichert ein transformiertes Signal, das letztere als entsprechende Korrelationsmenge Riemannscher Vielfachdaten zumindest eines erfahrenen Stimulus-Antwort-Musters repräsentiert; und

ist ferner in der Lage, auf dem Wege der obengenannten gespeicherten Riemannschen Vielfachdatensignale erfahrungsmäßig assoziierte Antwort-Datensignale zu produzieren und auszugeben, deren Erzeugung durch die Transformation eines nachträglich zugeführten Stimulus-Datensignals ausgelöst wurde, das den Stimulus repräsentierende komplexe Daten enthält;

dadurch gekennzeichnet, daß die Anzahl der Mengen von Stimulus-Antwort-Muster-Daten für das genannte, mindesterforderliche erfahrene Muster erhöht werden kann, sodaß der Informationsgehalt der genannten Korrelationsmenge in einem resultierenden gespeicherten Riemannschen Vielfachwertesignal durch kombinatorische Produktexpansion der genannten Stimulus-Antwort-Muster-Daten entsprechend erhöht werden kann, um damit die Anzahl der Eingabeelemente im Stimulus-Feld zu erhöhen, sodaß von einer Menge, die aus eindeutigen kombinatorischen komplexen Produkten genannter Stimulus-Eingabeelemente besteht, zumindest einige Stimulus-Eingabeelemente mit einer Ordnung über 1 vorhanden sind, wobei diese Ordnung der Anzahl der Stimulus-Eingabeelemente in den besagten Produkten entspricht, wobei die genannte Datensignalverarbeitungs- und -speichereinrichtung in der Lage ist, die Ausgabe-Anfwortdaten Element für Element aus der genannten Vielzahl von Einrichtungen in Form einer Vektorsumme zu summieren, um eine Korrelationsmenge zu erzeugen, die Elemente enthält, die einzigartlg repräsentativen Werten aller Stimuluselemente und der damit assoziierten Antwortelemente der gesamten genannten Vielzahl von Einrichtungen entsprechen.

11. Ein neurales Netz, das verbindende Kommunikationseinrichtungen in Kombination mit einer Vielzahl durch dieselben verbundener künstlicher neuraler Einrichtungen umfaßt und darüber hinaus Datensignalspeicher, und -verarbeitungsfunktionen aufweist

empfängt und transformiert skalare Stimulus-Antwort-Muster zumindest einer der besagten Einrichtungen repräsentierende Datenwerte, die die entsprechenden miteinander assoziierten Mengen von Stimulus- und Antwort-Eingabeelementen enthalten, und speichert ein transformiertes Signal, das letztere als entsprechende Korrelationsmenge Riemannscher Vielfachdaten zumindest eines erfahrenen Stimulus-Antwort-Musters repräsentiert; und

ist ferner in der Lage, auf dem Wege der obengenannten gespeicherten Riemannschen Vielfachdatensignale erfahrungsmäßig assoziierte Antwort-Datensignale zu produzieren und auszugeben, deren Erzeugung durch die Transformation eines nachträglich zugeführten Stimulus-Datensignals ausgelöst wurde, das den Stimulus repräsentierende komplexe Daten enthält;

dadurch gekennzeichnet, daß die Anzahl der Mengen von Stimulus-Antwort-Muster-Daten für das genannte, mindesterforderliche erfahrene Muster erhöht werden kann, sodaß der Informationsgehalt der genannten Korrelationsmenge in einem resultierenden gespeicherten Riemannschen Vielfachwertesignal durch kombinatorische Produktexpansion der genannten Stimulus-Antwort-Muster-Daten entsprechend erhöht werden kann, um damit die Anzahl der Eingabeelemente im Stimulus-Feld zu erhöhen, sodaß von einer Menge, die aus eindeutigen kombinatorischen komplexen Produkten genannter Stimulus-Eingabeelemente besteht, zumindest einige Stimulus-Eingabeelemente mit einer Ordnung über 1 vorhanden sind, wobei diese Ordnung der Anzahl der Stimulus-Eingabeelemente in den besagten Produkten entspricht,
wobei das besagte Netz als schichtförmige Netzstruktur der genannten Vielzahl verschiedener Einrichtungen ausgelegt ist.

12. Eine Mustererkennungseinrichtung zur Erzeugung eines Antwortsignals als Reaktion auf ein Stimulussignal, wobei die benannte Einrichtung folgende Komponenten umfaßt:

(a) Transducereinichtung zur Produktion eines skalaren Stimulussignals

(b) Datensignalspeicher- und verarbeitungseinrichtungen

um das besagte Stimulussignal zu empfangen und zu verarbeiten und damit ein skalares Antwortsignal zu verbinden, sowie die beiden genannten Signale zu Stimulus-Antwort-Muster-Datenwerten zu transformieren, die miteinander assoziierte Mengen von Stimulus- und Antwort-Eingabeelementen umfassen;

um ein transformiertes Signal, das die besagten Stimulus-Antwort-Muster-Datenwerte als entsprechende Korrelationsmenge Riemonnscher Vielfachwerte zumindest eines erfahrenen Stimulus-Antwortmusters repräsentiert, zu speichern;

um auf dem Wege der obengenannten gespeicherten Riemannschen Vielfachdatensignale erfahrungsmäßig assoziierte Antwort-Datensignale zu produzieren und auszugeben, deren Erzeugung durch die Transformation eines nachträglich zugeführten Stimulus-Datensignals ausgelöst wurde, das repräsentative komplexe Daten enthält;

dadurch gekennzeichnet, daß die Anzahl der Mengen von Stimulus-Antwort-Muster-Daten für das genannte, mindesterforderliche erfahrene Muster erhöht werden kann, sodaß der Informationsgehalt der genannten Korrelationsmenge in einem resultierenden gespeicherten Riemannschen Vielfachwertesignal durch kombinatorische Produktexpansion der genannten Stimulus-Antwort-Muster-Daten entsprechend erhöht werden kann, um damit die Anzahl der Eingabeelemente im Stimulus-Feld zu erhöhen, sodaß von einer Menge, die aus eindeutigen kombinatorischen komplexen Produkten genannter Stimulus-Eingabeelemente besteht, zumindest einige Stimulus-Eingabeelemente mit einer Ordnung über 1 vorhanden sind, wobei diese Ordnung der Anzahl der Stimulus-Eingabeelemente in den besagten Produkten entsoricht.

**13.** Einrichtung gemäß Patentanspruch 12, dadurch gekennzeichnet, daß die besagte Datensignalspeicher- und -verarbeitungseinrichtung in der Lage ist, Signale zu empfangen, die Mengen skalarer Wertedarstellungen repräsentieren, die erfahrenen Stimuli und den damit assoziierten Antworten entsprechen, sowie darüber hinaus in der Lage ist, die besagten Darstellungen skalarer Werte als entsprechende Darstellungen der Stimuluselemente und Antwortelemente zu kodieren, wobei beide durch eine Vektorkoordinate der Riemannschen Ebene definiert werden, die sowohl eine Phasenwinkelausrichtung als auch eine Größe besitzt.

**14.** Einrichtung gemäß Patentanspruch 13, dadurch gekennzeichnet, daß die Eingabeelemente des Stimulusfelds auf eine höhere Anordnungsstatistik ausgedehnt werden, wobei nachstehende allgemeine Formel zur Anwendung kommt:

$$\prod_{n=1}^{N} \lambda^{k(n)} e^{f(n)\, i\theta^{k(n)}}$$

wobei

| | |
|---|---|
| N - | für die Ordnung der Statistik, |
| k(n) - | für das n-te Produkt-Element der N Anordnungsstatistik, |
| lambda k(n) - | für die Größenkomponente des n-ten Produktelements, |
| theta k(n) - | für die Phasenkomponente des n-ten Produktelements und |
| f(n) - | für die Operation zur Bildung des Konjugats des komplexen polaren Vektors als Funktion von n steht. |

**15.** Einrichtung gemäß Patentanspruch 13, dadurch gekennzeichnet, daß die besagte Datensignalspeicher- und -verarbeitungseinrichtung außerdem eine Einrichtung zur nicht-linearen Transformation der Elemente der besagten Antwort-Ausgabedaten umfaßt, wobei die Größenkomponente jedes der besagten Elemente je nachdem, ob sie einen im vorhinein bestimmten Musterassoziations-Schwellenwert über- oder unterschreitet, erhöht oder verringert wird.

**16.** Einrichtung gemäß Patentanspruch 13, dadurch gekennzeichnet, daß die genannten später zugeführten Stimulus-Eingabedaten und die genannte, durch die besagte Datensignalverarbeitungs- und -speichereinrichtung erfolgende Antwortdaten-Ausgabe zusätzlich kodiert und in der genannten Korrelationsmenge gespeichert werden.

**17.** Einrichtung gemäß Patentanspruch 16, dadurch gekennzeichnet, daß die besagte Datensignalspeicher- und -verarbeitungseinrichtung außerdem in der Lage ist, gespeicherte Stimulus- und Antwort-Assoziationsmuster durch eine zeitvariable Zerfallsfunktion dynamisch zu verändern und die Große der genannten Elemente in der genannten Korrelationsmenge selektiv umgekehrt proportional zu einer seit der Speicherung der ausgewählten Elemente in der besagten Korrelationsmenge verstrichenen Zeit zu verringern.

**18.** Einrichtung gemäß Patentanspruch 13, dadurch gekennzeichnet, daß die besagte Datensignalspeicher- und -verarbeitungseinrichtung außerdem in der Lage ist, eine im voraus festgelegte Vektortransformation ausgewählter Teilmengen der besagten, miteinander assoziierten Mengen von Stimulus- und Antwort-Eingabedaten durchzuführen, um die symmetrische Verteilung unter den Elementen der besagten Korrelationsmenge zu fördern.

**19.** Einrichtung gemäß Patentanspruch 12, dadurch gekennzeichnet, daß die besagte Transducer-Einrichtung eine Videokamera enthält.

**20.** Einrichtung gemäß Patentanspruch 19, dadurch gekennzeichnet, daß die besagte Einrichtung außerdem Audio-Ausgabeeinrichtungen enthält, die auf ausgegebene Antwortdaten reagieren, um ein Antwortsignal zu erzeugen und an einen Audiotransducer zu übermitteln, der in der Lage ist, eine mit dem besagten Stimulussignal assoziierte musterbezogene Audioreaktion zu erzeugen.

**21.** Eine Methode zur responsiven Identifikation von Stimulusmustern, die folgende Schritte umfaßt:

(a) Produktion eines skalaren Stimulussignals

(b) Übermittlung des Stimulussignals an die Datensignalspeicher- undverarbeitungseinrichtung, die in der Lage ist,

das besagte Stimulussignal zu empfangen und zu verarbeiten und damit ein Antwortsignal zu verbinden, sowie die beiden genannten Signale zu Stimulus-Antwort-Muster-Datenwerten zu transformieren, die miteinander assoziierte Mengen von Stimulus- und Antwort-Eingabeelementen umfassen;

ein transformiertes Signal, das die besagten Stimulus-Antwort-Muster-Datenwerte als entsprechende Korrelationsmenge Riemannscher Vielfachwerte zumindest eines erfahrenen Stimulus-Antwortmusters repräsentiert, zu speichern;

auf dem Wege der obengenannten gespeicherten Riemannschen Vielfachdatensignale erfahrungsmäßig assoziierte Antwort-Datensignale zu produzieren und auszugeben, deren Erzeugung durch die Transformation eines nachträglich zugeführten Stimulus-Datensignals ausgelöst wurde, das den Stimulus repräsentierende komplexe Daten enthält;

dadurch gekennzeichnet, daß die Anzahl der Mengen von Stimulus-Antwort-Muster-Daten für das genannte, mindesterforderliche erfahrene Muster erhöht wird, sodaß der Informationsgehalt der genannten Korrelationsmenge in einem resultierenden gespeicherten Riemannschen Vielfachwertesignal durch Expansion der genannten Stimulus-Antwort-Muster-Daten entsprechend erhöht werden kann, um damit die Anzahl der Eingabeelemente im Stimulus-Feld zu erhöhen, sodaß von einer Menge, die aus eindeutigen kombinatorischen komplexen Produkten genannter Stimulus-Eingabeelemente besteht, zumindest einige Stimulus-Eingabeelemente mit einer Ordnung über 1 vorhanden sind, wobei diese Ordnung der Anzahl der Stimulus-Eingabeelemente in den besagten Produkten entspricht.

22. Methode gemäß Patentanspruch 21, dadurch gekennzeichnet, daß die besagte Datensignalspeicher- und -verarbeitungseinrichtung in der Lage ist, Signale zu empfangen, die Mengen skalarer Wertedarstellungen repräsentieren, die erfahrenen Stimuli und den damit assoziierten Antworten entsprechen, sowie darüber hinaus in der Lage ist, die besagten Darstellungen skalarer Werte als entsprechende Darstellungen der Stimuluselemente und Antwortelemente zu kodieren, wobei beide durch eine Vektorkoordinate der Riemannschen Ebene definiert werden, die sowohl eine Phasenwinkelausrichtung als auch eine Größe besitzt.

23. Methode gemäß Patentanspruch 22, dadurch gekennzeichnet, daß die Eingabeelemente des Stimulusfelds auf eine höhere Anordnungsstatistik ausgedehnt werden, wobei nachstehende allgemeine Formel zur Anwendung kommt;

$$\prod_{n=1}^{N} \lambda^{k(n)} e^{f(n) \, i\theta^{k(n)}}$$

wobei

N -      für die Ordnung der Statistik,

k(n) -      für das n-te Produkt-Element der N Anordnungsstatistik,

lambda k(n) -      für die Größenkomponente des n-ten Produktelements,

theta k(n) -      für die Phasenkomponente des n-ten Produktelements und

f(n) -      für die Operation zur Bildung des Konjugats des komplexen polaren Vektors als Funktion von n steht.

24. Methode gemäß Patentanspruch 23, dadurch gekennzeichnet, daß die besagte Methode außerdem den Schritt der nicht-linearen Transformation der Elemente der besagten Antwort-Ausgabedaten umfaßt, wobei die Größenkomponente jedes der besagten Elemente je nachdem, ob sie einen im vorhinein bestimmten Musterassozations-Schwellenwert über- oder unterschreitet, erhöht oder verringert wird

25. Methode gemäß Patentanspruch 23, dadurch gekennzeichnet, daß die später zugeführten Stimulus-Eingabedaten und die genannte, durch die besagte Datensignalverarbeitungs- und -speichereinrichtung erfolgende Antwortdaten-Ausgabe zusätzlich kodiert und in der genannten Korrelationsmenge gespeichert werden.

**26.** Methode gemäß Patentanspruch 25, dadurch gekennzeichnet, daß die Methode einen weiteren Schritt umfaßt, in dem die gespeicherten Korrelationsmengenelemente mittels einer zeitvariablen Zerfallsfunktion bearbeitet werden, um die gespeicherten Stimulus- und Antwort-Assoziationsmuster dynamisch zu verändern, indem die Größe der genannten Elemente in der genannten Korrelationsmenge selektiv umgekehrt proportional zu einer seit der Speicherung der ausgewählten Elemente in der besagten Korrelationsmenge verstrichenen Zeit verringert wird.

**27.** Methode gemäß Patentanspruch 23, dadurch gekennzeichnet, daß die besagte Methode einen weiteren Schritt umfaßt, in dessen Verlauf die genannte Datensignalspeicher- und -verarbeitungseinrichtung dazu verwendet wird, eine im voraus festgelegte Vektortransformation ausgewählter Teilmengen der besagten, miteinander assoziierten Mengen von Stimulus- und Antwort-Eingabedaten durchzuführen, um die symmetrische Verteilung unter den Elementen der besagten Korrelationsmenge zu fördern.

**28.** Einrichtung gemäß Patentanspruch 1, dadurch gekennzeichnet, daß die besagte Datensignalspeicher- und Signalverarbeitungseinrichtung in der Lage ist, die besagten Mengen von Stimulus-Antwort-Muster-Datenwerten entsprechend der nachstehenden allgemeinen Formel von Elementen mit realem Wert in Phasenorientierungen der besagten entsprechenden Korrelationsmenge Riemannscher Vielfachwertelemente mit einem Verteilungsbereich von 0 - 2 pi zu transformieren.

$$s_k \rightarrow \lambda_k e^{i\theta_k}$$

wobei

Sk -   ein Musterdatenwert mit realem Wert ist,
λ -   für einen Sk zugeordneten Konfldenzwert und
θk -   für den Phasenwinkel des Riemannschen Werts steht.

## Revendications

**1.** Un appareil à mémoire associative servant à mémoriser et à traiter des signaux de données,

pour la réception et la transformation de valeurs de données représentant des modèles scalaires de stimulus / réponse et comprenant des ensembles correspondants et mutuellement associés d'éléments d'entrée de stimulus et de réponse, ainsi que pour la mémorisation d'un signal transformé, ce dernier représentant lesdits éléments comme un ensemble de corrélation de valeurs multiples riemanniennes d'au moins un modèle stimulus / réponse expérimenté: et

pour la production et la sortie, par le biais desdits signaux mémorisés de valeurs multiples riemanniennes, de signaux de données de réponse associés par l'expérience dont la production a été déclenchée par la transformation de signaux de données de stimulus contenant des données complexes qui représentent le stimulus, ces signaux ayant été introduits ultérieurement;

caractérisé en ce que le nombre des ensembles de données de modèles stimulus / réponse pour au moins un modèle expérimenté comme mentionné ci-dessus peut être augmenté de manière que le contenu d'informations dudit ensemble de corrélation dans un signal de valeurs multiples riemannien résultant et mémorisé peut être accru grâce à une expansion de produit combinatoire desdites données de modèles stimulus / réponse dans le but d'augmenter le nombre d'éléments d'entrée dans le champ de stimulus pour que sur un ensemble consistant en produits combinatoires complexes et uniques des éléments d'entrée de stimulus mentionnés, au moins quelques éléments d'entrée de stimulus avec un ordre au-dessus de 1 soient inclus, cet ordre correspondant au nombre des éléments d'entrée de stimulus dans lesdits produits.

**2.** Appareil à mémoire associative selon la revendication 1, caractérisé en ce que ledit dispositif pour la mémorisation et le traitement de signaux de données est un dispositif neuronal artificiel.

**3.** Appareil selon la revendication 2, caractérisé en ce que ledit dispositif pour la mémorisation et le traitement de signaux de données est capable de recevoir des signaux représentant des ensembles de représentations de valeurs scalaires correspondant à des stimuli expérimentés et aux réponses qui y sont associées, et qu'il est en outre capable d'encoder lesdites représentations de valeurs scalaires en tant que représentations correspondantes des éléments de stimulus et de réponse, ces deux étant définis par une coordonnée vectorielle de plan riemannien qui présente une orientation d'angle de phase aussi bien qu'une grandeur.

4. Appareil selon la revendication 3, caractérisé en ce que les éléments d'entrée du champ de stimulus sont élargis à une statistique d'ordre supérieure selon la formule générale suivante :

$$\prod_{n=1}^{N} \lambda^{k(n)} e^{f(n)\, i\theta^{k(n)}}$$

où

| | |
|---|---|
| N - | représente l'ordre de la statistique, |
| k(n) - | définit le $n^{ième}$ élément-produit de la statistique d'ordre N, |
| lambda $^{k(n)}$ - | le composant de grandeur du $n^{ième}$ élément-produit, |
| theta $^{k(n)}$ - | le composant de phase du $n^{ième}$ élément-produit, et |
| f(n) - | l'opération pour la formation du conjugué du vecteur polaire complexe en tant que fonction de n. |

5. Appareil selon la revendication 3, caractérisé en ce que ledit dispositif pour la mémorisation et le traitement de signaux de données comprend en outre un dispositif pour la transformation non-linéaire des éléments desdites données de réponse de sortie, le composant de grandeur de chacun de ces éléments étant augmenté ou réduit selon qu'il dépasse ou tombe en-dessous d'un seuil d'association de modèles déterminé d'avance.

6. Appareil selon la revendication 5, caractérisé en ce que ledit dispositif de transformation est un élément neuronal commutable et substantiellement binaire et que lesdites coordonnées vectorielles de plan riemannien sont disposées le long d'une ligne qui coupe l'origine complexe du plan riemannien.

7. Appareil selon la revendication 3, caractérisé en ce que lesdites données d'entrée de stimulus introduites ultérieurement et ladite sortie de données de réponse par ledit dispositif pour la mémorisation et le traitement de signaux de données sont supplémentairement encodées et mémorisées dans l'ensemble de corrélation mentionné.

8. Appareil selon la revendication 7, caractérisé en ce que ledit dispositif pour la mémorisation et le traitement de signaux de données est en outre capable de modifier dynamiquement, par une fonction d'amortissement variable dans le temps, des modèles d'association de stimulus et de réponse mémorisés et de diminuer ainsi la grandeur desdits éléments dans ledit ensemble de corrélation de manière sélective et indirectement proportionnelle au temps écoulé depuis la mémorisation des éléments sélectionnés dans ledit ensemble de corrélation.

9. Appareil selon la revendication 3, caractérisé en ce que ledit dispositif pour la mémorisation et le traitement de signaux de données est en outre capable de procéder à une transformation vectorielle déterminée à l'avance de sous-ensembles sélectionnés desdits ensembles mutuellement associés de données d'entrée de stimulus et de réponse afin de favoriser la distribution symétrique parmi les éléments dudit ensemble de corrélation.

10. Un appareil qui comprend des dispositifs de communication en combinaison avec une multitude d'éléments neuronaux artificiels reliés par ces dispositifs de communication et qui propose, en outre, des fonctions de mémorisation et de traitement de données:

pour la réception et la transformation de valeurs de données représentant des modèles scalaires de stimulus / réponse dans au moins un de ces dispositifs, ces valeurs de données comprenant des ensembles correspondants et mutuellement associés d'éléments d'entrée de stimulus et de réponse, ainsi que pour la mémorisation d'un signal transformé, ce dernier représentant lesdits éléments comme un ensemble de corrélation de valeurs multiples riemanniennes d'au moins un modèle stimulus / réponse expérimenté; et

pour la production et la sortie, par le biais desdits signaux mémorisés de valeurs multiples riemanniennes, de signaux de données de réponse associés par l'expérience dont la production a été déclenchée par la transformation de signaux de données de stimulus contenant des données complexes qui représentent le stimulus, ces signaux ayant été introduits ultérieurement;

caractérisé en ce que le nombre des ensembles de données de modèles stimulus / réponse pour au moins un modèle expérimenté comme mentionné ci-dessus peut être augmenté de manière que le contenu d'informations dudit ensemble de corrélation dans un signal de valeurs multiples riemannien résultant et mémorisé peut être accru grâce à une expansion de produit combinatoire desdites données de modèles stimulus / réponse dans le but d'augmenter le nombre d'éléments d'entrée dans le champ des stimuli pour que sur un ensemble consistant en produits combinatoires complexes et uniques des éléments d'entrée de stimulus mentionnés, au moins quelques éléments d'entrée de stimulus avec un ordre au-dessus de 1 soient inclus, cet ordre correspondant au nombre des éléments d'entrée de stimulus dans lesdits produits;

et en ce que ledit dispositif pour la mémorisation et le traitement de signaux de données est capable de totaliser, élément par élément, sous forme d'une somme vectorielle, les données de réponse de sortie en provenance de la multitude de dispositifs mentionnée de manière à créer un ensemble de corrélation dont les éléments correspondent à des valeurs uniques et représentatives de tous les éléments de stimulus ainsi que des éléments de réponse associés pour chacun des dispositifs de cette multitude.

11. Un réseau neuronal qui comprend des dispositifs de communication en combinaison avec une multitude de dispositifs neuronaux artificiels reliés par ces dispositifs de communication et qui propose, en outre, des fonctions de mémorisation et de traitement de données:

pour la réception et la transformation de valeurs de données représentant des modèles scalaires de stimulus / réponse dans au moins un de ces dispositifs, ces valeurs de données comprenant des ensembles correspondants et mutuellement associés d'éléments d'entrée de stimulus et de réponse, ainsi que pour la mémorisation d'un signal transformé, ce dernier représentant lesdits éléments comme un ensemble de corrélation de valeurs multiples riemanniennes d'au moins un modèle stimulus / réponse expérimenté; et

pour la production et la sortie, par le biais desdits signaux mémorisés de valeurs multiples riemanniennes, de signaux de données de réponse associés par l'expérience dont la production a été déclenchée par la transformation de signaux de données de stimulus contenant des données complexes qui représentent le stimulus, ces signaux ayant été introduits ultérieurement;

caractérisé en ce que le nombre des ensembles de données de modèles stimulus / réponse pour au moins un modèle expérimenté comme mentionné ci-dessus peut être augmenté de manière que le contenu d'informations dudit ensemble de corrélation dans un signal de valeurs multiples riemannien résultant et mémorisé peut être accru grâce à une expansion de produit combinatoire desdites données de modèles stimulus / réponse dans le but d'augmenter le nombre d'éléments d'entrée dans le champ de stimulus pour que sur un ensemble consistant en produits combinatoires complexes et uniques des éléments d'entrée de stimulus mentionnés, au moins quelques éléments d'entrée de stimulus avec un ordre au-dessus de 1 soient inclus, cet ordre correspondant au nombre des éléments d'entrée de stimulus dans lesdits produits:

et en ce que ledit réseau est disposé en tant que structure stratifié de la multitude de dispositifs mentionnée.

12. Un appareil de reconnaissance de modèles pour la production d'un signal de réponse en tant que réaction à un signal de stimulus, cet appareil comprenant les composants suivants:

(a) transducer pour la production d'un signal de stimulus scalaire;

(b) dispositifs de mémorisation et de traitement de signaux de données:

pour la réception et le traitement dudit signal de stimulus ainsi que pour sa combinaison avec un signal de réponse scalaire et la transformation desdits signaux en valeurs de données de modèles stimulus / réponse comprenant des ensembles mutuellement associés d'éléments d'entrée de stimulus et de réponse;

pour la mémorisation d'un signal transformé représentant lesdites valeurs de données de modèles stimulus / réponse en tant qu'ensemble de corrélation de valeurs multiples riemanniennes d'au moins un modèle stimulus / réponse expérimenté;

pour la production et la sortie, par le biais desdits signaux mémorisés de valeurs multiples riemanniennes, de signaux de données de réponse associés par l'expérience dont la production a été déclenchée par la transformation de signaux de données de stimulus contenant des données complexes représentatives, ces signaux ayant été introduits ultérieurement;

caractérisé en ce que le nombre des ensembles de données de modèles stimulus / réponse pour au moins un modèle expérimenté comme mentionné ci-dessus peut être augmenté de manière que le contenu d'informations dudit ensemble de corrélation dans un signal de valeurs multiples riemannien résultant et mémorisé peut être accru grâce à une expansion de produit combinatoire desdites données de modèles stimulus / réponse dans le but d'augmenter le nombre d'éléments d'entrée dans le champ de stimulus pour que sur un ensemble consistant en produits combinatoires complexes et uniques des éléments d'entrée de stimulus mentionnés, au moins quelques éléments d'entrée de stimulus avec un ordre au-dessus de 1 soient inclus, cet ordre correspondant au nombre des éléments d'entrée de stimulus dans lesdits produits.

13. Appareil selon la revendication 12, caractérisé en ce que ledit dispositif pour la mémorisation et le traitement de signaux de données est capable de recevoir des signaux représentant des ensembles de représentations de valeurs scalaires correspondant à des stimuli expérimentés et aux réponses qui y sont associées, et qu'il est en outre capable d'encoder lesdites représentations de valeurs scalaires en tant que représentations correspondantes des éléments de stimulus et de réponse, ces deux étant définis par une coordonnée vectorielle de plan riemannien qui présente une orientation d'angle de phase aussi bien qu'une grandeur.

14. Appareil selon la revendication 13, caractérisé en ce que les éléments d'entrée du champ de stimulus sont élargis à une statistique d'ordre supérieure selon la formule générale suivante :

$$\prod_{n=1}^{N} \lambda^{k(n)} e^{f(n) \, i\theta^{k(n)}}$$

où

| | |
|---|---|
| $N$ - | représente l'ordre de la statistique, |
| $k(n)$ - | définit le $n^{\text{ième}}$ élément-produit de la statistique d'ordre N, |
| lambda $^{k(n)}$ - | le composant de grandeur du $n^{\text{ième}}$ élément-produit, |
| theta $^{k(n)}$ - | le composant de phase du $n^{\text{ième}}$ élément-produit, et |
| $f(n)$ - | l'opération pour la formation du conjugué du vecteur polaire complexe en tant que fonction de n. |

15. Appareil selon la revendication 13, caractérisé en ce que ledit dispositif pour la mémorisation et le traitement de signaux de données comprend en outre un dispositif pour la transformation non-linéaire des éléments desdites données de réponse de sortie, le composant de grandeur de chacun de ces éléments étant augmenté ou réduit selon qu'il dépasse ou tombe en-dessous d'un seuil d'association de modèles déterminé d'avance.

16. Appareil selon la revendication 13, caractérisé en ce que lesdites données d'entrée de stimulus introduites ultérieurement et ladite sortie de données de réponse par ledit dispositif pour la mémorisation et le traitement de signaux de données sont supplémentairement encodées et mémorisées dans l'ensemble de corrélation mentionné.

17. Appareil selon la revendication 16, caractérisé en ce que ledit dispositif pour la mémorisation et le traitement de signaux de données est en outre capable de modifier dynamiquement, par une fonction d'amortissement variable dans le temps, des modèles d'association de stimulus et de réponse mémorisés et de diminuer la grandeur desdits éléments dans ledit ensemble de corrélation de manière sélective et indirectement proportionnelle au temps écoulé depuis la mémorisation des éléments sélectionnés dans ledit ensemble de corrélation.

18. Appareil selon la revendication 13, caractérisé en ce que ledit dispositif pour la mémorisation et le traitement de signaux de données est en outre capable de procéder à une transformation vectorielle déterminée à l'avance de sous-ensembles sélectionnés desdits ensembles mutuellement associés d'éléments d'entrée de stimulus et de réponse afin de favoriser la distribution symétrique parmi les éléments dudit ensemble de corrélation.

19. Appareil selon la revendication 12, caractérisé en ce que ledit transducer comprend une caméra vidéo.

20. Appareil selon la revendication 19, caractérisé en ce que ledit appareil comprend en outre un dispositif de sortie audio réagissant aux données de réponse de sortie pour la production d'un signal de réponse transmis à un transducer audio capable de produire une réaction audio associée aux modèles et à ce signal de stimulus.

21. Une méthode souple pour l'identification de modèles de stimulus comprenant les démarches suivantes:

(a) la production d'un signal de stimulus scalaire;

(b) la transmission de ce signal de stimulus à un dispositif de mémorisation et de traitement de signaux de données capable d'assurer:

la réception et le traitement dudit signal de stimulus ainsi que sa combinaison avec un signal de réponse et la transformation desdits signaux en valeurs de données de modèles stimulus / réponse comprenant des ensembles mutuellement associés d'éléments d'entrée de stimulus et de réponse;

et la mémorisation d'un signal transformé représentant lesdites valeurs de données de modèles stimulus / réponse en tant qu'ensemble de corrélation de valeurs multiples riemanniennes d'au moins un modèle stimulus / réponse expérimenté; et

la production et la sortie, par le biais desdits signaux mémorisés de valeurs multiples riemanniennes, de signaux de données de réponse associés par l'expérience dont la production a été déclenchée par la transformation de signaux de données de stimulus contenant des données complexes qui représentent le stimulus, ces signaux ayant été introduits ultérieurement;

caractérisée en ce que le nombre des ensembles de données de modèles stimulus / réponse pour au moins un modèle expérimenté comme mentionné ci-dessus est augmenté de manière que le contenu d'informations dudit ensemble de corrélation dans un signal de valeurs multiples riemannien résultant et mémorisé peut être accru grâce à une expansion desdites données de modèles stimulus / réponse dans le but d'augmenter le nombre d'éléments d'entrée dans le champ des stimuli pour que sur un ensemble consistant en produits combinatoires complexes et uniques des éléments d'entrée de stimulus mentionnés, au moins quelques éléments d'entrée de stimulus avec un ordre au-dessus de 1 soient inclus, cet ordre correspondant au nombre des éléments d'entrée de stimulus dans lesdits produits.

22. Méthode selon la revendication 21, caractérisée en ce que ledit dispositif pour la mémorisation et le traitement de signaux de données est capable de recevoir des signaux représentant des ensembles de représentations de valeurs scalaires correspondant à des stimuli expérimentés et aux réponses qui y sont associées, et qu'il est en outre capable d'encoder lesdites représentations de valeurs scalaires en tant que représentations correspondantes des éléments de stimulus et de réponse, ces deux étant définis par une coordonnée vectorielle de plan riemannien qui présente une orientation d'angle de phase aussi bien qu'une grandeur.

23. Méthode selon la revendication 22, caractérisée en ce que les éléments d'entrée du champ de stimulus sont élargis à une statistique d'ordre supérieur selon la formule générale suivante :

$$\prod_{n=1}^{N} \lambda^{k(n)} e^{f(n) i\theta^{k(n)}}$$

où

N -  représente l'ordre de la statistique,

k(n) -  définit le $n^{ième}$ élément-produit de la statistique d'ordre N,

lambda $^{k(n)}$ -  le composant de grandeur du $n^{ième}$ élément-produit,

theta $^{k(n)}$ -  le composant de phase du $n^{ième}$ élément-produit, et

f(n) -  l'opération pour la formation du conjugué du vecteur polaire complexe en tant que fonction de n.

24. Méthode selon la revendication 23, comprenant en outre une démarche pour la transformation non-linéaire des éléments desdites données de réponse de sortie, le composant de grandeur de chacun de ces éléments étant augmenté ou réduit selon qu'il dépasse ou tombe en-dessous d'un seuil d'association de modèles déterminé d'avance.

**25.** Méthode selon la revendication 23, caractérisée en ce que lesdites données d'entrée de stimulus introduites ultérieurement et ladite sortie de données de réponse par ledit dispositif pour la mémorisation et le traitement de signaux de données sont supplémentairement encodées et mémorisées dans l'ensemble de corrélation mentionné.

**26.** Méthode selon la revendication 25, comprenant en outre une démarche pour le traitement desdits éléments d'ensembles de corrélation permettant de modifier dynamiquement, par une fonction d'amortissement variable dans le temps, des modèles d'association de stimulus et de réponse mémorisés en diminuant la grandeur desdits éléments dans ledit ensemble de corrélation de manière sélective et indirectement proportionnelle au temps écoulé depuis la mémorisation des éléments sélectionnés dans ledit ensemble de corrélation.

**27.** Méthode selon la revendication 23, comprenant en outre une démarche dans le cadre de laquelle ledit dispositif pour la mémorisation et le traitement de signaux de données est utilisé afin de procéder à une transformation vectorielle déterminée à l'avance de sous-ensembles sélectionnés desdits ensembles mutuellement associés d'éléments d'entrée de stimulus et de réponse afin de favoriser la distribution symétrique parmi les éléments dudit ensemble de corrélation.

**28.** Appareil selon la revendication 1, caractérisé en ce que ledit dispositif pour le traitement et la mémorisation de signaux de données est capable de transformer lesdits ensembles de valeurs de données de modèles stimulus / réponse d'éléments à valeur réelle en orientations de phase de l'ensemble de corrélation mentionné d'éléments de valeurs multiples riemanniennes présentant une plage de distribution de 0 à 2 pi selon la formule générale suivante :

$$S_k \rightarrow \lambda_k e^{i\theta_k}$$

où

Sk - représente une valeur de donnée de modèle à valeur réelle,
λ - une valeur de confidence attribuée à Sk, et
θk - l'angle de phase de la valeur riemannienne.

Figure 1

$s_0$

$x_{j,0}$

$s_1$

$x_{j,1}$

$s_2$

$x_{j,2}$

$x_{j,N}$

$s_N$

$y_j = \sum x_i s_i$

$r_j = F(y_j)$

$r_j$

Figure 2

Cell membrane
Cytoplasm
Nucleus

Axon
Soma (cell body)
Dendrite

10µm

Axo-somatic
Axo-dendritic
Axo-axonal

Figure 3

axon

dendritic spines

axon

axon

1 - pyramidal cell of the cortex

2 - stellate cell located in both the cortex and cerebellum

3 - Purkinje cell of the cerebellum

4 - spinal neuron

Figure 4

STIMULUS INPUT
AXO-DENDRITIC SYNAPSE

STIMULUS INPUT
AXO-SOMATIC SYNAPSE

DENDRITES

SOMA

AXON

RESPONSE OUTPUT
AXON AND COLLATERALS

FIRING ENVELOPE

GROSS EXCITATION POTENTIAL

EP 0 526 504 B1

Figure 5

Pyramidal
neuron

Stellate
neuron

A

Axon
collateral

Thalamic input

Pyramidal
neuron

Stellate
neuron

B

Axon
collateral

Martinotti
neuron

EP 0 526 504 B1

69

**Figure 6**

CONTROL ELEMENT

Generated Response

$\{R\} = \{X\} \cdot \{S\}$

$\{X\}$

$\{X\} = \{S\}^T \cdot \{R\}$

Learned
Response

ENVIRONMENT

Stimulus

Figure 7

$[X] = [\overline{S}]^{\mathsf{T}} \cdot R$    F

$[X]$    C

$R^* = \frac{1}{c}[S]^* \cdot [X]$    B

A

E

R

D

Figure 8

Figure 9

Figure 10

Figure 11

Figure 12

Figure 13

Figure 14

Figure 15

Figure 16

Figure 17

figure 18

## TABLE 1

### Estimate of Relative Error Within Response Field as a Function of Ratio P/N

| Ratio of Encoded Patterns to # elements within Stimulus Field (P/N) | Error Within Response Field (%) |
|---|---|
| 0.05 | 2.5 |
| 0.1 | 3.4 |
| 0.15 | 4.2 |
| 0.2 | 4.7 |
| 0.25 | 5.2 |
| 0.3 | 5.6 |
| 0.35 | 6.0 |
| 0.4 | 6.3 |
| 0.45 | 6.6 |
| 0.5 | 6.9 |

TABLE 2

**List of Phoneme Codes**

**CODE (base 6)     SOUND   (capitalized in sample word)**
```
----                -----
00          mAke    = m-A-k
01          bAt     = b-AE-t
02          cAr     = k-AH-r
03          dOg     = d-AW-g
04          Bat     = B-ae-t
05          CHeese  = CH-ee-z
10          Dog     = D-aw-g
11          bE      = b-EE
12          bEt     = b-EH-t
13          raFt    = r-ae-F-t
14          Go      = G-oh
15          Hive    = H-i-v
20          tIme    = t-I-m
21          sIt     = s-IH-t
22          Jet     = J-eh-t
23          Kill    = K-ih-l
24          Love    = L-uh-v
25          Map     = M-ae-p
30          Nab     = N-ae-b
31          gO      = g-OH
32          gOO     = g-OO
33          Pat     = P-ae-t
34          Rat     = R-ae-t
35          Sat     = S-ae-t
40          SHe     = SH-ee
41          Tap     = T-ae-p
42          THin    = TH-ih-n
43          THis    = TZ-ih-s
44          wOrd    = w-U-r-d
45          bUt     = b-UH-t
50          Vat     = V-ae-t
51          With    = W-ih-th
52          WHich   = WH-ih-ch
53          Yes     = Y-eh-s
54          Zap     = Z-ee-p
55          viSion  = v-ih-ZH-eh-n
```

Table 3  Number of Higher Order Statistics as Function of
Stimulus Field Size

Order Of Statistic

| Size of Stimulus Field | 1 | 2 | 3 | 4 | 5 | 6 | 7 | 8 |
|---|---|---|---|---|---|---|---|---|
| 1 | 1 | 0 | 0 | 0 | 0 | 0 | 0 | 0 |
| 2 | 3 | 1 | 0 | 0 | 0 | 0 | 0 | 0 |
| 3 | 6 | 4 | 1 | 0 | 0 | 0 | 0 | 0 |
| 4 | 10 | 10 | 5 | 1 | 0 | 0 | 0 | 0 |
| 5 | 15 | 20 | 15 | 6 | 1 | 0 | 0 | 0 |
| 6 | 21 | 35 | 35 | 21 | 7 | 1 | 0 | 0 |
| 7 | 28 | 56 | 70 | 56 | 28 | 8 | 1 | 0 |
| 8 | 36 | 84 | 126 | 126 | 84 | 36 | 9 | 1 |
| 9 | 45 | 120 | 210 | 252 | 210 | 120 | 45 | 9 |
| 10 | 55 | 165 | 330 | 462 | 462 | 330 | 165 | 45 |
| 11 | 66 | 220 | 495 | 792 | 924 | 792 | 495 | 165 |
| 12 | 78 | 286 | 715 | 1287 | 1716 | 1716 | 1287 | 495 |
| 13 | 91 | 364 | 1001 | 2002 | 3003 | 3432 | 3003 | 1287 |
| 14 | 105 | 455 | 1365 | 3003 | 5005 | 6435 | 6435 | 3003 |
| 15 | 120 | 560 | 1820 | 4368 | 8008 | 11440 | 12870 | 6435 |
| 16 | 136 | 680 | 2380 | 6188 | 12376 | 19448 | 24310 | 12870 |
| 17 | 153 | 816 | 3060 | 8568 | 18564 | 31824 | 43758 | 24310 |
| 18 | 171 | 969 | 3876 | 11628 | 27132 | 50388 | 75582 | 43758 |
| 19 | 190 | 1140 | 4845 | 15504 | 38760 | 77520 | 125970 | 75582 |
| 20 | 210 | 1330 | 5985 | 20349 | 54264 | 116280 | 203490 | 125970 |
| 21 | 231 | 1540 | 7315 | 26334 | 74613 | 170544 | 319770 | 203490 |
| 22 | 253 | 1771 | 8855 | 33649 | 100947 | 245157 | 490314 | 319770 |
| 23 | 276 | 2024 | 10626 | 42504 | 134596 | 346104 | 735471 | 490314 |
| 24 | 300 | 2300 | 12650 | 53130 | 177100 | 480700 | 1081575 | 735471 |
| 25 | 325 | 2625 | 15275 | 68405 | 245505 | 726205 | 1807780 | 1081575 |